# EUROPÄISCHE PATENTANMELDUNG

(11) **EP 3 392 313 A1**
(43) Veröffentlichungstag der Anmeldung: **24.10.2018**
(21) Anmeldenummer: 17167603.4
(22) Anmeldetag: 21.04.2017
(51) Int. Cl.: C08L 83/04

(54) **HÄRTBARE SILIKONKAUTSCHUKMASSEN**

(71) Anmelder: Nitrochemie Aschau GmbH, 84544 Aschau am Inn (DE)
(72) Erfinder: LANGERBEINS, Klaus, 50129 Bergheim (DE); KRUPP, Alexis, 84453 Mühldorf (DE); KNOTT, Thomas, 84453 Mühldorf (DE)
(74) Vertreter: von Renesse, Dorothea

(57) **Zusammenfassung**

Zusammensetzungen härtbarer Silikonkautschukmassen enthaltend mindestens eine Metall-Siloxan-Silanol(-at)-Verbindung, ein Verfahren zur Herstellung härtbarer Silikonkautschukmassen enthaltend mindestens eine Metall-Siloxan-Silanol(-at)-Verbindung sowie die Verwendung von härtbaren Silikonkautschukmassen enthaltend mindestens eine Metall-Siloxan-Silanol(-at)-Verbindung als Dichtungsmittel, Klebstoff, Vergussmasse und/oder Beschichtungsmittel.

## Beschreibung

Als maßgeschneiderte Werkstoffe mit elastischen Eigenschaften sind kalthärtende Silikonkautschukmassen, sogenannte RTV-(Raumtemperaturvernetzende)-Silikonkautschukmassen, schon lange bekannt. Allgemein werden sie als Dichtungsmassen oder Klebstoffe für Glas, Metalle wie Aluminium, Kunststoffe wie PVC, Holz in (un-)behandelter Form, Keramik, Stein oder Porzellan eingesetzt. Dabei werden sie z.B. als Dichtungs- oder Fugenmassen im Bauwesen und im Sanitärbereich, oder aber z.B. als Beschichtungsmaterialien in der Elektroindustrie (Römpp Chemie, CD ROM, Version 2.0, Hrsg. E. Bartholome, Verlag Chemie, Weinheim 1982, Band 21, S.511 ff.) verwendet. Insbesondere werden RTV-1-Silikonkautschukmassen eingesetzt. Diese stellen Einkomponenten-RTV-Silikonkautschukmassen dar, wobei es sich beispielsweise um plastisch formbare Mischungen aus α,ω-Dihydroxypolyorganosiloxanen und geeigneten Härtern bzw. Vernetzungsmitteln handelt. Unter dem Einfluss von Luftfeuchtigkeit oder Wasser im Allgemeinen polymerisieren diese bei Raumtemperatur.

Vorrangig werden Polyorganosiloxane, welche zwei oder mehrere funktionelle Gruppen tragen, zusammen mit verschiedenen polyfunktionellen Härtern verwendet, je nach den gewünschten physikochemischen Eigenschaften des Polymerisationsproduktes und der gewünschten Polymerisationsrate. Große Bedeutung kommt hierbei den α,ω-Dihydroxypolyorganosiloxanen als difunktionelle Polyorganosiloxane zu. Die Vernetzungsmittel bzw. Härter zeichnen sich durch hydrolysierbare SiX-Gruppen aus, wobei durch Hydrolyse Abgangsgruppen freigesetzt werden, die eine Klassifizierung der Härter in neutrale, saure oder basische Systeme erlauben. Bekannte Abgangsgruppen sind beispielsweise Carbonsäuren, Alkohole und Oxime. EP 2 030 976 B1 beschreibt Silanverbindungen, die beim Vernetzen α-Hydroxycarbonsäureester freisetzen. In DE 202015009122 U1 werden Silane mit α-Hydroxycarbonsäureamiden als Abgangsgruppe offenbart.

Die Polymerisation der RTV-1-Silikonkautschukmassen bei Raumtemperatur in Gegenwart von Luftfeuchtigkeit kann durch die Zugabe eines geeigneten Härtungskatalysators beschleunigt werden.

Hier sind besonders Zinnverbindungen von großer Bedeutung. DE 69501063 T2 beschreibt die Verwendung von Dibutylzinnbis(acetylacetonat) und Zinnoctylat in bei Umgebungstemperatur härtenden Silikon-Elastomer-Zusammensetzungen. EP 0298877 B1 beschreibt einen Zinnkatalysator aus Zinnoxid und Beta-DicarbonylVerbindungen für Silikonelastomerzusammensetzungen. DE 4332037 A1 verwendet Dibutyldizinndilaurat als Katalysator in kondensationsvernetzendem Silikon.

Zinnverbindungen zeichnen sich im Allgemeinen durch eine sehr hohe katalytische Aktivität aus. Aufgrund ihrer toxischen Eigenschaften wird jedoch auch häufig auf den Einsatz von zinnfreien Härtungskatalysatoren in RTV-Silikonkautschukmassen ausgewichen.

Geeignete zinnfreie Katalysatoren umfassen beispielsweise Aluminium-, Zink-, Zirkonium- und Titanverbindungen. DE 4210349 A1 beschreibt die Verwendung von Tetrabutyltitanat, Dibutyl-bis(methylacetoacetato)titanat, Diisopropyl-bis(methylaceto- acetato)titanat und Düsobutyl-bis(ethylacetoacetato)titanat bei der Herstellung eines bei Raumtemperatur durch Kondensationsreaktionen vernetzenden Silikonkautschukes. EP 0102268 A1 offenbart Einkomponent-Silikonharzmassen die z.B. organische Zirkonverbindungen als Katalysator enthalten.

Große Nachteile bei der Verwendung von zinnfreien Katalysatoren sind bislang die vergleichsweise niedrige katalytische Aktivität und die hiermit verbundenen schlechten mechanischen Eigenschaften, insbesondere bezogen auf die schlechtere Reißfestigkeit der Silikonkautschukmassen.

Eine Aufgabe der vorliegenden Erfindung ist es deshalb, eine Zusammensetzung bereitzustellen, die unter Einsatz von Katalysatoren mit geringem Zinngehalt oder zinnfreien Katalysatoren, Silikonkautschukmassen liefert, die sich durch verbesserte mechanische Eigenschaften auszeichnen.

Kern der Erfindung ist somit eine Zusammensetzung härtbarer Silikonkautschukmassen enthaltend mindestens eine Metall-Siloxan-Silanol(-at)-Verbindung, ein Verfahren zur Herstellung härtbarer Silikonkautschukmassen enthaltend mindestens eine Metall-Siloxan-Silanol(-at)-Verbindung sowie die Verwendung von härtbaren Silikonkautschukmassen enthaltend mindestens eine Metall-Siloxan-Silanol(-at)-Verbindung als Dichtungsmittel, Klebstoff, Vergussmasse und/oder Beschichtungsmittel. Die Metall-Siloxan-Silanol(-at)-Verbindung wird hierbei vorzugsweise in einer katalytisch aktiven Menge in Silikonkautschukmassen verwendet.

Die Aufgabe der Erfindung wird somit gelöst durch die Zusammensetzung nach Anspruch 1, das in Anspruch 16 angegebene Verfahren, die in den Ansprüchen 14, und 19 angegebenen Verwendungen sowie der in Anspruch 17 angegebene Dichtstoff. Vorteilhafte Ausgestaltungen sind jeweils Gegenstand von Unteransprüchen.

In ener vorteihaften Ausführungsform wird die Aufgabe der Erfindung gelöst durch die Verwendung von Metall-Siloxan-Silanol(-at)-Verbindungen als Katalysator in härtbaren Silikonzusammensetzungen, wobei die molare Konzentration der Metall-Siloxan-Silanol(-at)-Verbindung im Bereich von 0,00001 bis 0,01 mol/kg Dichtstoff, bevorzugt im Bereich von 0,00005 bis 0,005 mol/kg Dichtstoff und besonders bevorzugt im Bereich von 0,00007 und 0,0019 mol/kg Dichtstoff liegt.

In einer bevorzugten Ausführungsform werden Metall-Siloxan-Silanol(-at)-Verbindungen als Katalysator in härtbaren Silikonzusammensetzungen verwendet, wobei die molare Konzentration der Metall-Siloxan-Silanol(-at)-Verbindung im Bereich von 0,00001 bis 0,01 mol/kg Zusammensetzung, bevorzugt im Bereich von 0,00005 bis 0,005 mol/kg Zusammensetzung und besonders bevorzugt im Bereich von 0,00007 und 0,0019 mol/kg Zusammensetzung liegt.

Die Aufgabe der Erfindung wird vorteilhafterweise gelöst durch die Verwendung von mindestens einer Metall-Siloxan-Silanol(-at)-Verbindung als Katalysator in härtbaren Silikonzusammensetzungen. Metall-Siloxan-Silanol(-at)-Verbindungen sind dem Fachmann dem Grunde nach bekannt beispielsweise aus WO 2005/060671 A2 und EP 2796493 A1.

Ferner wird die Aufgabe der Erfindung gelöst durch die Verwendung mindestens einer Metall-Siloxan-Silanol(-at)-Verbindung als Katalysator in härtbaren Silikonzusammensetzungen, wobei der Gewichtsanteil der Metall-Siloxan-Silanol-Verbindung im Bereich von 0,001 bis 0,5% und bevorzugt im Bereich von 0,006 bis 0,17% liegt.

Im Sinne der Erfindung handelt es sich bei "Silikonkautschukmassen" um synthetische silikonhaltige Kautschukmassen, die im Rahmen dieser Erfindung auch austauschbar als härtbare Silikonzusammensetzungen bezeichnet werden, was Kautschuk Polymerisate, Polykondensate, und Polyaddukte einschließt, die durch Vernetzung mit geeigneten Vernetzern in den hochelastischen, gehärteten Zustand überführt werden können. Ferner handelt es sich um plastisch formbare Mischungen, beispielsweise aus α,ω-Dihydroxypolyorganosiloxanen und geeigneten Härtern bzw. Vernetzungsmitteln, die unter Feuchtigkeitsausschluß aufbewahrt werden können, wobei diese Silikonkautschukmassen aber unter dem Einfluss von Wasser oder Luftfeuchtigkeit bei Raumtemperatur polymerisieren.

Im Sinne der Erfindung sind "Silanole" organische Siliziumverbindungen, bei denen mindestens eine Hydroxygruppe (OH) an das Silizium-Atom gebunden ist (≡Si-OH).

Im Sinne der Erfindung sind "Silanolate" organische Siliziumverbindungen, bei denen mindestens eine deprotonierte Hydroxyfunktion (R-O⁻) an das Silizium-Atom gebunden ist (≡Si-O⁻), wobei dieses negativ geladenen Sauerstoffatom auch an weitere Verbindungen, wie beispielsweise Metalle, gebunden und/oder koordiniert sein kann.

Mit der Bezeichnung "Metall-Siloxan-Silanol(-at)" werden alle Metall-Siloxan Verbindungen bezeichnet, die entweder eine oder mehrere Silanol- und/oder Silanolat-Gruppen enthalten. In einer Ausführungsform der Erfindung ist es ebenfalls möglich, dass ausschließlich Metall-Siloxan-Silanolate vorliegen. Solange nicht im Einzelnen zwischen diesen unterschiedlichen Konstellationen differenziert wird, sind alle Kombinationen eingeschlossen. Im Folgenden werden die soeben beschriebenen Metall-Siloxan-Silanol(-at)-Verbindungen (= **M**etall-**S**iloxan-**S**ilanol/**S**ilanolat-Verbindungen) auch als "M3S"-Verbindungen bezeichnet. Die Termini werden folgend austauschbar verwendet.

Die Bezeichnung "Katalysator" bezeichnet einen Stoff, der die Aktivierungsenergie einer bestimmten Reaktion herabsetzt und dadurch die Reaktionsgeschwindigkeit erhöht.

Insbesondere ist der Gegenstand der Erfindung eine Zusammensetzung erhältlich durch Vermischen folgender Komponenten:
a. mindestens einer Silikonverbindung mit der allgemeinen Formel HO-(SiR^{l}R^{m}O)ₒ-H, wobei R^{l} und R^{m} unabhängig voneinander einen optional substituierten Kohlenwasserstoffrest mit 1 bis 20 Kohlenstoffatomen bedeuten und o eine ganze Zahl von 5 bis 4000 ist,
b. eines Katalysators, wobei der Katalysator mindestens eine Metall-Siloxan-Silanol(-at)-Verbindung enthält, die insbesondere ein Metall ausgewählt aus der Gruppe bestehend aus s und p Block Metallen, d und f Block Übergangsmetallen, Lanthanid- und Actinidmetallen und Halbmetallen aufweist, und
c. mindestens eines Vernetzers mit der allgemeinen Formel Si(R)ₘ(R^{a})₄₋ₘ, wobei jeder R unabhängig voneinander einen optional substituierten Kohlenwasserstoffrest mit 1 bis 20 Kohlenstoffatomen, insbesondere eine optional substituierte, geradkettige oder verzweigte C1- bis C16-Alkylgruppe, eine optional substituierte, geradkettige oder verzweigte C2- bis C16-Alkenylgruppe oder eine optional substituierte C4- bis C14-Arylgruppe, bedeutet,
   m eine ganze Zahl von 0 bis 2 ist, jeder R^{a} unabhängig voneinander ausgewählt ist aus der Gruppe bestehend aus
   - einem Hydroxycarbonsäureesterrest mit der allgemeinen Strukturformel (I): 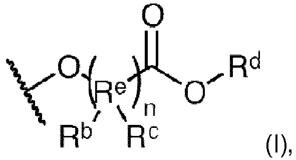 wobei
      jeder R^{b} unabhängig voneinander H oder einen optional substituierten Kohlenwasserstoffrest mit 1 bis 20 Kohlenstoffatomen, insbesondere eine optional substituierte, geradkettige oder verzweigte C1- bis C16-Alkylgruppe oder eine optional substituierte C4- bis C14-Arylgruppe, bedeutet,
      jeder R^{c} unabhängig voneinander H oder einen optional substituierten Kohlenwasserstoffrest mit 1 bis 20 Kohlenstoffatomen, insbesondere eine optional substituierte, geradkettige oder verzweigte C1- bis C16-Alkylgruppe oder eine optional substituierte C4- bis C14-Arylgruppe, bedeutet,
      R^{d} einen optional substituierten Kohlenwasserstoffrest mit 1 bis 20 Kohlenstoffatomen, insbesondere eine optional substituierte, geradkettige oder verzweigte C1- bis C16-Alkylgruppe, eine optional substituierte C4- bis C14-Cycloalkylgruppe, eine optional substituierte C5- bis C15-Aralkylgruppe oder eine optional substituierte C4- bis C14-Arylgruppe, bedeutet,
      R^{e} C oder einen optional substituierten Kohlenwasserstoffrest mit 1 bis 20 Kohlenstoffatomen, insbesondere ein optional substituiertes gesättigtes oder teilweise ungesättigtes cyclisches Ringsystem mit 4 bis 14 C-Atomen oder eine optional substituierte aromatische Gruppe mit 4 bis 14 C-Atomen, bedeutet, und
      n eine ganze Zahl von 1 bis 10 ist,
   - einem Hydroxycarbonsäureamidrest mit der allgemeinen Strukturformel (II): 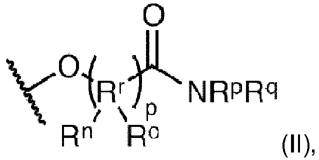 wobei
      jeder Rⁿ unabhängig voneinander H oder einen optional substituierten Kohlenwasserstoffrest mit 1 bis 20 Kohlenstoffatomen, insbesondere eine optional substituierte, geradkettige oder verzweigte C1- bis C16-Alkylgruppe oder eine optional substituierte C4- bis C14-Arylgruppe, bedeutet,
      jeder R^{o} unabhängig voneinander H oder einen optional substituierten Kohlenwasserstoffrest mit 1 bis 20 Kohlenstoffatomen, insbesondere eine optional substituierte, geradkettige oder verzweigte C1- bis C16-Alkylgruppe oder eine optional substituierte C4- bis C14-Arylgruppe, bedeutet,
      R^{p} und R^{q} unabhängig voneinander H oder einen optional substituierten Kohlenwasserstoffrest mit 1 bis 20 Kohlenstoffatomen, insbesondere eine optional substituierte, geradkettige oder verzweigte C1- bis C16-Alkylgruppe, eine optional substituierte C4- bis C14-Cycloalkylgruppe, eine optional substituierte C5- bis C15-Aralkylgruppe oder eine optional substituierte C4- bis C14-Arylgruppe, bedeutet,
      R^{r} C oder einen optional substituierten Kohlenwasserstoffrest mit 1 bis 20 Kohlenstoffatomen, insbesondere ein optional substituiertes gesättigtes oder teilweise ungesättigtes cyclisches Ringsystem mit 4 bis 14 C-Atomen oder eine optional substituierte aromatische Gruppe mit 4 bis 14 C-Atomen, bedeutet, und
      p eine ganze Zahl von 1 bis 10 ist,
   - einem Carbonsäurerest -O-C(O)-R^{f}, wobei R^{f} H oder einen optional substituierten Kohlenwasserstoffrest mit 1 bis 20 Kohlenstoffatomen, insbesondere eine optional substituierte, geradkettige oder verzweigte C1- bis C16-Alkylgruppe, eine optional substituierte C4- bis C14-Cycloalkylgruppe oder eine optional substituierte C4- bis C14-Arylgruppe oder eine optional substituierte C5- bis C15-Aralkylgruppe, bedeutet,
   - einem Oximrest -O-N=CR^{g}R^{h}, wobei R^{g} und R^{h} unabhängig voneinander H oder einen optional substituierten Kohlenwasserstoffrest mit 1 bis 20 Kohlenstoffatomen, insbesondere eine optional substituierte, geradkettige oder verzweigte C1- bis C16-Alkylgruppe, eine optional substituierte C4- bis C14-Cycloalkylgruppe oder eine optional substituierte C4- bis C14-Arylgruppe oder eine optional substituierte C5- bis C15-Aralkylgruppe, bedeuten,
   - einem Carbonsäureamidrest -N(Rⁱ)-C(O)-R^{j}, wobei Rⁱ H oder einen optional substituierten Kohlenwasserstoffrest mit 1 bis 20 Kohlenstoffatomen, insbesondere eine optional substituierte, geradkettige oder verzweigte C1- bis C16-Alkylgruppe, eine optional substituierte C4- bis C14-Cycloalkylgruppe oder eine optional substituierte C4- bis C14-Arylgruppe oder eine optional substituierte C5- bis C15-Aralkylgruppe, bedeutet und R^{j} H oder einen optional substituierten Kohlenwasserstoffrest mit 1 bis 20 Kohlenstoffatomen, insbesondere eine optional substituierte, geradkettige oder verzweigte C1- bis C16-Alkylgruppe, eine optional substituierte C4- bis C14-Cycloalkylgruppe oder eine optional substituierte C4- bis C14-Arylgruppe oder eine optional substituierte C5- bis C15-Aralkylgruppe, bedeutet, und
   - einem Alkoxyrest -OR^{k}, wobei R^{k} einen optional substituierten Kohlenwasserstoffrest mit 1 bis 20 Kohlenstoffatomen, insbesondere eine optional substituierte, geradkettige oder verzweigte C1- bis C16-Alkylgruppe, eine optional substituierte C4- bis C14-Cycloalkylgruppe oder eine optional substituierte C4- bis C14-Arylgruppe oder eine optional substituierte C5- bis C15-Aralkylgruppe, bedeutet.

Überraschenderweise wurde gefunden, dass die nach Anspruch 1 definierten Metall-Siloxan-Silanol(-at)-Verbindungen bei der Verwendung als Katalysator in Silikonkautschukmassen eine besonders hohe katalytische Aktivität aufweisen. Insbesondere wurde eine hohe katalytische Aktivität von Metall-Siloxan-Silanol(-at)-Verbindungen als Katalysator in feuchtigkeitshärtenden Silikonkautschukmassen gefunden. Durch die hohe katalytische Aktivität ist es möglich, die Menge an Katalysator in Silikonkautschukmassen deutlich zu reduzieren. Unter Verwendung von katalytisch aktiven Metall-Siloxan-Silanol(-at)-Verbindungen kann der Einsatz von Zinnkatalysatoren minimiert oder sogar vermieden werden.

Die Zusammensetzung kann die Silikonverbindung mit der allgemeinen Formel HO-(SiR^{l}R^{m}O)ₒ-H und den Vernetzer mit der allgemeinen Formel Si(R)ₘ(R^{a})₄₋ₘ in Form eines Prepolymers enthalten. Bei dem Prepolymer handelt es sich um ein Umsetzungsprodukt der beiden Bestandteile. Diese Umsetzungen sind bekannt und werden auch als Endcapping bezeichnet (siehe beispielsweise WO 2016/146648 A1).

Es hat sich gezeigt, dass nicht nur die Bildung des soeben beschriebenen Prepolymers, sondern auch die darauf folgende Polymerisation bzw. Kondensation unter Ausbildung von Si-O-Si Bindungen in Gegenwart von Wasser oder Luftfeuchtigkeit und in Gegenwart des in Anspruch 1 definierten Katalysators erfolgt. Das heißt die M3S-Verbindung vermittelt nicht nur die Endgruppenverkappung, sondern auch die Härtung der Silikonverbindung. Darüber hinaus ist es in einer bevorzugten Ausführungsform möglich die Silikonkautschukmassen in nur einem Arbeitsschritt zu erhalten.

Dabei wurde überraschend gefunden, dass durch die Verwendung von M3S in Silikonkautschukmassen verbesserte mechanische Eigenschaften, insbesondere eine verbesserte Reißfestigkeit der Silikonkautschukmassen, resultieren.

Die "Reißfestigkeit" gehört zu den durch verschiedene Prüfmethoden bestimmbaren mechanischen Eigenschaften von Polymeren. Die "Reißfestigkeit" lässt sich über die Zugspannung im Augenblick des Reißens des Prüfkörpers im Zugversuch bestimmen.

Die "Reißdehnung" ist das Verhältnis der Längenänderung zur Ausgangslänge nach dem Bruch des Prüfkörpers. Sie drückt die Fähigkeit eines Werkstoffes aus, Formänderungen ohne Rissbildung zu widerstehen. Die Reißdehnung wird nach der DIN EN ISO 8339 und DIN 53504 im Zugversuch ermittelt.

Der "Dehnspannungswert" definiert die Spannung, die bei 100% Dehnung des Dichtstoffes auf die Haftflächen bzw. den angrenzenden Baustoff ausgeübt wird.

Der "Sekantenmodul" bezeichnet das Verhältnis von Spannung zur Dehnung an einem beliebigen Punkt der Kurve eines Spannungs-Dehnungsdiagramms. Es ist die Steigung einer Kurve vom Beginn bis zu einem beliebigen Punkt auf der Spannungs-Dehnungskurve.

Das "Rückstellvermögen" beschreibt die Tendenz eines flexiblen Trägers, die ursprünglichen Maße ganz oder teilweise wieder anzunehmen, nachdem die Kräfte aufgehoben wurden, welche die Ausdehnung oder Verformung verursacht haben. Das mittlere Rückstellvermögen wird gemäß der DIN EN ISO 7389 bestimmt.

Unter "Vernetzern" werden insbesondere vernetzungsfähige Silanverbindungen, verstanden, die mindestens zwei durch Hydrolyse abspaltbare Gruppen aufweisen. Beispiele für derartige vernetzungsfähige Silanverbindungen sind Si(OCH₃)₄, Si(CH₃)(OCH₃)₃ und Si(CH₃)(C₂H₅)(OCH₃)₂. Vernetzer können auch als Härter bezeichnet werden. "Vernetzer" umfasst insbesondere auch "Vernetzersysteme", die mehr als eine vernetzungsfähige Silanverbindung enthalten können.

Unter einem "Käfig" oder einer oligomeren oder polymeren "Käfigstruktur" wird im Sinne der Erfindung eine dreidimensionale Anordnung der kettenförmigen Metall-Siloxan-Silanol(-at)-Verbindung verstanden, wobei einzelne Atome der Kette die Eckpunkte einer vielflächigen Grundstruktur der Verbindung bilden. Hierbei werden durch die miteinander verknüpften Atome mindestens zwei Flächen aufgespannt, wobei eine gemeinsame Schnittmenge entsteht. In einer Ausführungsform der Verbindung bildet sich beispielsweise eine würfelförmige Grundstruktur der Verbindung aus.

"Dichtungsmittel" oder "Dichtungsmassen" bezeichnen elastische, in flüssiger bis zähflüssiger Form oder als biegsame Profile oder Bahnen aufgebrachte Stoffe zum Abdichten einer Oberfläche, insbesondere gegen Wasser, Gase oder andere Medien.

Die Bezeichnung "Klebstoff" bezieht sich auf Stoffe, die Flügelteile durch Flächenhaftung (Adhäsion) und/oder innere Festigkeit (Kohäsion) verbinden. Von diesem Begriff sind insbesondere Leim, Kleister, Dispersions-, Lösemittel-, Reaktions- und Kontakt-Klebstoffe erfasst.

"Beschichtungsmittel" sind alle Mittel zum Beschichten einer Oberfläche.

Bei "Vergussmassen" oder auch "Kabelvergussmassen" handelt es sich im Sinne der Erfindung um heiß oder kalt zu verarbeitende Massen zum Vergießen von Kabeln und/oder Kabelzubehörteilen.

Mit der Bezeichnung "Alkylgruppe" ist eine gesättigte Kohlenwasserstoffkette gemeint. Alkylgruppen weisen insbesondere die allgemeine Formel -CₙH₂ₙ₊₁ auf. Die Bezeichnung "C1- bis C16-Alkylgruppe" bezeichnet insbesondere eine gesättigte Kohlenwasserstoffkette mit 1 bis 16 Kohlenstoffatomen in der Kette. Beispiele für C1- bis C16-Alkylgruppen sind Methyl-, Ethyl-, Propyl-, Butyl-, Isopropyl-, iso-Butyl-, sec-Butyl-, tert-Butyl-, n-Pentyl- und Ethylhexyl. Entsprechend bezeichnet eine "C1- bis C8-Alkylgruppe" insbesondere eine gesättigte Kohlenwasserstoffkette mit 1 bis 8 Kohlenstoffatomen in der Kette. Alkylgruppen können insbesondere auch substituiert sein, auch wenn dies nicht speziell angegeben ist.

"Geradkettige Alkylgruppen" bezeichnen Alkylgruppen, die keine Verzweigungen enthalten. Beispiele für geradkettige Alkylgruppen sind Methyl-, Ethyl-, n-Propyl-, n-Butyl-, n-Pentyl-, n-Hexyl-, n-Heptyl und n-Octyl.

"Verzweigte Alkylgruppen" bezeichnen Alkylgruppen die nicht geradkettig sind, in denen also insbesondere die Kohlenwasserstoffkette eine Gabelung aufweist. Beispiele für verzweigte Alkylgruppen sind Isopropyl-, iso-Butyl-, sec-Butyl-, tert-Butyl-, sec-Pentyl-, 3-Pentyl-, 2-Methylbutyl-, iso-Pentyl-, 3-Methylbut-2-yl, 2-Methylbut-2-yl-, Neopentyl-, Ethylhexyl-, und 2-Ethylhexyl.

"Alkenylgruppen" bezeichnen Kohlenwasserstoffketten, die mindestens eine Doppelbindung entlang der Kette enthalten. Beispielweise weist eine Alkenylgruppe mit einer Doppelbindung insbesondere die allgemeine Formel - CₙH₂ₙ₋₁ auf. Alkenylgruppen können jedoch auch mehr als eine Doppelbindung aufweisen. Die Bezeichnung "C2- bis C16-Alkenylgruppe" bezeichnet insbesondere eine Kohlenwasserstoffkette mit 2 bis 16 Kohlenstoffatomen in der Kette. Die Anzahl der Wasserstoffatome variiert dabei in Abhängigkeit der Anzahl der Doppelbindungen in der Alkenylgruppe. Beispiele für Alkenylgruppen sind Vinyl-, Allyl-, 2-Butenyl- und 2-Hexenyl-.

"Geradkettige Alkenylgruppen" bezeichnen Alkenylgruppen, die keine Verzweigungen enthalten. Beispiele für geradkettige Alkenylgruppen sind Vinyl-, Allyl-, n-2-Butenyl- und n-2-Hexenyl-.

"Verzweigte Alkenylgruppen" bezeichnen Alkenylgruppen die nicht geradkettig sind, in denen also insbesondere die Kohlenwasserstoffkette eine Gabelung aufweist. Beispiele für verzweigte Alkenylgruppen sind 2-Methyl-2-Propenyl-, 2-Methyl-2-Butenyl- und 2-Ethyl-2-Pentenyl-.

"Arylgruppen" bezeichnen monocyclische (z.B. Phenyl-), bicyclische (z.B. Indenyl-, Naphthalenyl, Tetrahydronapthyl, oder Tetrahydroindenyl) und tricyclische (z.B. Fluorenyl-, Tetrahydrofluorenyl-, Anthracenyl-, oder Tetrahydroanthracenyl-) Ringsysteme, in denen das monocyclische Ringsystem oder mindestens einer der Ringe in einem bicyclischen oder tricyclischen Ringsystem aromatisch ist. Insbesondere bezeichnet eine C4- bis C14-Arylgruppe eine Arylgruppe, die 4 bis 14 Kohlenstoffatome aufweist. Arylgruppen können insbesondere auch substituiert sein, auch wenn dies nicht speziell angegeben ist.

Eine "aromatische Gruppe" bezeichnet cyclische, planare Kohlenwasserstoffe mit aromatischem System. Eine aromatische Gruppe mit 4 bis 14 C-Atomen bezeichnet insbesondere eine aromatische Gruppe, die 4 bis 14 Kohlenstoffatome enthält. Die aromatische Gruppe kann insbesondere monocyclisch, bicyclisch oder tricyclisch sein. Eine aromatische Gruppe kann ferner auch 1 bis 5 Heteroatome ausgewählt aus der Gruppe bestehend aus N, O, und S enthalten. Beispiele für aromatische Gruppen sind Benzol, Naphthalin, Anthracen, Phenanthren, Furan, Pyrrol, Thiophen, Isoxazol, Pyridin und Chinolin, wobei in den vorgenannten Beispiele jeweils die notwendige Anzahl an Wasserstoffatomen entfernt ist, um eine Eingliederung in die entsprechende Strukturformel zu ermöglichen.

Eine "Cycloalkylgruppe" bezeichnet einen Kohlenwasserstoffring, der nicht aromatisch ist. Insbesondere bezeichnet eine Cycloalkylgruppe mit 4 bis 14 C-Atomen einen nicht-aromatischen Kohlenwasserstoffring mit 4 bis 14 Kohlenstoffatomen. Cycloalkylgruppen können gesättigt oder teilweise ungesättigt sein. Gesättigte Cycloalkylgruppen sind nicht aromatisch und weisen auch keine Doppel- oder Dreifachbindungen auf. Teilweise ungesättigte Cycloalkylgruppen weisen im Gegensatz zu gesättigten Cycloalkylgruppen mindestens eine Doppel- oder Dreifachbindung auf, wobei die Cycloalkylgruppe jedoch nicht aromatisch ist. Cycloalkylgruppen können insbesondere auch substituiert sein, auch wenn dies nicht speziell angegeben ist.

Eine "Aralkylgruppe" bezeichnet eine durch eine Arylgruppe substituierte Alkylgruppe. Eine "C5- bis C15-Aralkylgruppe" bezeichnet insbesondere eine Aralkylgruppe mit 5 bis 15 Kohlenstoffatomen, wobei darin sowohl die Kohlenstoffatome der Alkylgruppe als auch der Arylgruppe enthalten sind. Beispiele für Aralkylgruppen sind Benzyl- und Phenylethyl. Aralkylgruppen können insbesondere auch substituiert sein, auch wenn dies nicht spezielle angegeben ist.

Ein "cyclisches Ringsystem" bezeichnet einen Kohlenwasserstoffring, der nicht aromatisch ist. Insbesondere bezeichnet ein cyclisches Ringsystem mit 4 bis 14 C-Atomen ein nicht-aromatisches Kohlenwasserstoffringsystem mit 4 bis 14 Kohlenstoffatomen. Ein cyclisches Ringsystem kann aus einem einzelnen Kohlenwasserstoffring (monocyclisch), aus zwei Kohlenwasserstoffringen (bicyclisch) oder aus drei Kohlenwasserstoffringen (tricyclisch) bestehen. Insbesondere können cyclische Ringsysteme auch 1 bis 5 Heteroatome, bevorzugt ausgewählt aus der Gruppe bestehend aus N, O, und S enthalten.

"Gesättigte cyclische Ringsysteme" sind nicht aromatisch und weisen auch keine Doppel- oder Dreifachbindungen auf. Beispiele für gesättigte cyclische Ringsysteme sind Cyclopentan, Cyclohexan, Decalin, Norbornan und 4H-Pyran, wobei in den vorgenannten Beispielen jeweils die notwendige Anzahl an Wasserstoffatomen entfernt ist, um eine Eingliederung in die entsprechende Strukturformel zu ermöglichen. Beispielsweise würden in einer Strukturformel HO-R*-CH₃, wobei R* ein cyclisches Ringsystem mit 6 Kohlenstoffatomen, insbesondere Cyclohexan, ist, zwei Wasserstoffatome von dem cyclischen Ringsystem, insbesondere von Cyclohexan, entfernt sein, um eine Eingliederung in die Strukturformel zu erlauben.

Sofern nichts anderes angegeben ist, bezeichnet N insbesondere Stickstoff. Ferner bezeichnet O insbesondere Sauerstoff, sofern nichts anderes angegeben ist. S bezeichnet insbesondere Schwefel, sofern nichts anderes angegeben ist.

"Optional substituiert" bedeutet, dass in der entsprechenden Gruppe bzw. in dem entsprechenden Rest Wasserstoffatome durch Substituenten ersetzt sein können. Substituenten können insbesondere ausgewählt sein aus der Gruppe bestehend aus C1- bis C4-Alkyl, Methyl-, Ethyl-, Propyl-, Butyl-, Phenyl-, Benzyl-, Halogen-, Fluor-, Chlor-, Brom-, lod-, Hydroxy-, Amino-, Alkylamino-, Dialkylamino-, C1- bis C4-Alkoxy-, Phenoxy-, Benzyloxy-, Cyano-, Nitro-, und Thio-. Wenn eine Gruppe als optional substituiert bezeichnet ist, können 0 bis 50, insbesondere 0 bis 20, Wasserstoffatome der Gruppe durch Substituenten ersetzt sein. Wenn eine Gruppe substituiert ist, ist mindestens ein Wasserstoffatom durch einen Substituenten ersetzt.

"Alkoxy" bezeichnet eine Alkylgruppe, die über ein Sauerstoffatom mit der Hauptkohlenstoffkette verbunden ist.

Der Begriff "Polysiloxan" beschreibt eine erfindungsgemäße Zusammensetzung, die zumindest eine Organosilikonverbindung, vorzugsweise zwei, drei oder mehrere verschiedene Organosilikonverbindungen, enthält. Eine in der Zusammensetzung enthaltene Organosilikonverbindung ist bevorzugt eine oligomere oder polymere Verbindung. Die polymere Organosilikonverbindung ist vorzugsweise eine difunktionelle Polyorganosiloxanverbindung, besonders bevorzugt ein α,ω-dihydroxyl-terminiertes Polyorganosiloxan. Ganz besonders bevorzugt sind α,ω-dihydroxyl-terminierte Polydiorganosiloxane, insbesondere α,ω-dihydroxyl-terminierte Polydialkylsiloxane, α,ω-dihydroxyl-terminierte Polydialkenylsiloxane oder α,ω-dihydroxylterminierte Polydiarylsiloxane. Neben homopolymeren α,ω-dihydroxyl-terminierten Polydiorganosiloxanen können auch heteropolymere α,ω-dihydroxyl-terminierte Polydiorganosiloxane mit unterschiedlichen organischen Substituenten verwendet werden, wobei sowohl Copolymere aus Monomeren mit gleichartigen organischen Substituenten an einem Siliziumatom, als auch Copolymere aus Monomeren mit verschiedenen organischen Substituenten an einem Siliziumatom umfasst sind, z.B. solche mit gemischten Alkyl-, Alkenyl- und/oder Arylsubstituenten. Die bevorzugten organischen Substituenten umfassen geradkettige und verzweigte Alkylgruppen mit 1 bis 8 Kohlenstoffatomen, insbesondere Methyl, Ethyl, n- und iso-Propyl, und n-, sec- und tert-Butyl, Vinyl und Phenyl. Dabei können in den einzelnen organischen Substituenten einzelne oder alle kohlenstoffgebundenen Wasserstoffatome durch übliche Substituenten, wie Halogenatome oder funktionelle Gruppen wie Hydroxyl- und/oder Aminogruppen, substituiert sein. So können α,ω-dihydroxyl-terminierte Polydiorganosiloxane mit teilfluorierten oder perfluorierten organischen Substituenten verwendet werden oder es werden α-ω-dihydroxyl-terminierte Polydiorganosiloxane mit durch hydroxyl- und/oder aminogruppensubstituierten organischen Substituenten an den Siliziumatomen, verwendet.

Besonders bevorzugte Beispiele für eine Organosilikonverbindung sind α,ω-dihydroxyl-terminierte Polydialkylsiloxane, wie z.B. α,ω-dihydroxyl-terminierte Polydimethylsiloxane, α,ω-dihydroxyl-terminierte Polydiethylsiloxane oder α,ω-dihydroxyl-terminierte Polydivinylsiloxane, sowie α,ω-dihydroxyl-terminierte Polydiarylsiloxane, wie z.B. α,ω-dihydroxyl-terminierte Polydiphenylsiloxane. Dabei sind Polyorganosiloxane bevorzugt, die eine kinematische Viskosität von 5.000 bis 120.000 cSt (bei 25°C) haben, insbesondere solche mit einer Viskosität von 20.000 bis 100.000 cSt, und besonders bevorzugt solche mit einer Viskosität von 40.000 bis 90.000 cSt. Es können auch Mischungen aus Polydiorganosiloxanen mit unterschiedlichen Viskositäten verwendet werden.

Der Begriff "Dichtstoff" wie hierhin verwendet beschreibt die ausgehärtete erfindungsgemäße Zusammensetzung nach einem der Ansprüche.

Vorteilhafte Ausgestaltungen der Erfindung werden nachfolgend im Einzelnen erläutert.

Eine Ausführungsform der Erfindung beschreibt eine Zusammensetzung enthaltend die folgenden Komponenten:
a. mindestens einer Silikonverbindung mit der allgemeinen Formel HO-(SiR^{l}R^{m}O)ₒ-H, wobei R^{l} und R^{m} unabhängig voneinander einen optional substituierten Kohlenwasserstoffrest mit 1 bis 20 Kohlenstoffatomen bedeuten und o eine ganze Zahl von 5 bis 4000 ist,
b. eines Katalysators, wobei der Katalysator mindestens eine Metall-Siloxan-Silanol(-at)-Verbindung enthält, die insbesondere ein Metall ausgewählt aus der Gruppe bestehend aus s und p Block Metallen, d und f Block Übergangsmetallen, Lanthanid- und Actinidmetallen und Halbmetallen aufweist, und
c. mindestens eines Vernetzers mit der allgemeinen Formel Si(R)ₘ(R^{a})₄₋ₘ, wobei jeder R unabhängig voneinander einen optional substituierten Kohlenwasserstoffrest mit 1 bis 20 Kohlenstoffatomen, insbesondere eine optional substituierte, geradkettige oder verzweigte C1- bis C16-Alkylgruppe, eine optional substituierte, geradkettige oder verzweigte C2- bis C16-Alkenylgruppe oder eine optional substituierte C4- bis C14-Arylgruppe, bedeutet,
   m eine ganze Zahl von 0 bis 2 ist, jeder R^{a} unabhängig voneinander ausgewählt ist aus der Gruppe bestehend aus
   - einem Hydroxycarbonsäureesterrest mit der allgemeinen Strukturformel (I): 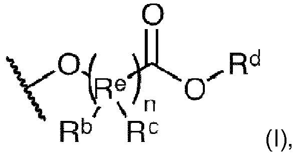 wobei
      jeder R^{b} unabhängig voneinander H oder einen optional substituierten Kohlenwasserstoffrest mit 1 bis 20 Kohlenstoffatomen, insbesondere eine optional substituierte, geradkettige oder verzweigte C1- bis C16-Alkylgruppe oder eine optional substituierte C4- bis C14-Arylgruppe, bedeutet,
      jeder R^{c} unabhängig voneinander H oder einen optional substituierten Kohlenwasserstoffrest mit 1 bis 20 Kohlenstoffatomen, insbesondere eine optional substituierte, geradkettige oder verzweigte C1- bis C16-Alkylgruppe oder eine optional substituierte C4- bis C14-Arylgruppe, bedeutet,
      R^{d} einen optional substituierten Kohlenwasserstoffrest mit 1 bis 20 Kohlenstoffatomen, insbesondere eine optional substituierte, geradkettige oder verzweigte C1- bis C16-Alkylgruppe, eine optional substituierte C4- bis C14-Cycloalkylgruppe, eine optional substituierte C5- bis C15-Aralkylgruppe oder eine optional substituierte C4- bis C14-Arylgruppe, bedeutet,
      R^{e} C oder einen optional substituierten Kohlenwasserstoffrest mit 1 bis 20 Kohlenstoffatomen, insbesondere ein optional substituiertes gesättigtes oder teilweise ungesättigtes cyclisches Ringsystem mit 4 bis 14 C-Atomen oder eine optional substituierte aromatische Gruppe mit 4 bis 14 C-Atomen, bedeutet, und
      n eine ganze Zahl von 1 bis 10 ist,
   - einem Hydroxycarbonsäureamidrest mit der allgemeinen Strukturformel (II): 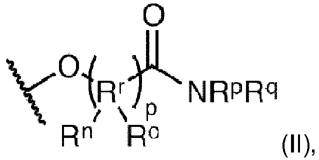 wobei
      jeder Rⁿ unabhängig voneinander H oder einen optional substituierten Kohlenwasserstoffrest mit 1 bis 20 Kohlenstoffatomen, insbesondere eine optional substituierte, geradkettige oder verzweigte C1- bis C16-Alkylgruppe oder eine optional substituierte C4- bis C14-Arylgruppe, bedeutet,
      jeder R° unabhängig voneinander H oder einen optional substituierten Kohlenwasserstoffrest mit 1 bis 20 Kohlenstoffatomen, insbesondere eine optional substituierte, geradkettige oder verzweigte C1- bis C16-Alkylgruppe oder eine optional substituierte C4- bis C14-Arylgruppe, bedeutet,
      R^{p} und R^{q} unabhängig voneinander H oder einen optional substituierten Kohlenwasserstoffrest mit 1 bis 20 Kohlenstoffatomen, insbesondere eine optional substituierte, geradkettige oder verzweigte C1- bis C16-Alkylgruppe, eine optional substituierte C4- bis C14-Cycloalkylgruppe, eine optional substituierte C5- bis C15-Aralkylgruppe oder eine optional substituierte C4- bis C14-Arylgruppe, bedeutet,
      R^{r} C oder einen optional substituierten Kohlenwasserstoffrest mit 1 bis 20 Kohlenstoffatomen, insbesondere ein optional substituiertes gesättigtes oder teilweise ungesättigtes cyclisches Ringsystem mit 4 bis 14 C-Atomen oder eine optional substituierte aromatische Gruppe mit 4 bis 14 C-Atomen, bedeutet, und
      p eine ganze Zahl von 1 bis 10 ist,
   - einem Carbonsäurerest -O-C(O)-R^{f}, wobei R^{f} H oder einen optional substituierten Kohlenwasserstoffrest mit 1 bis 20 Kohlenstoffatomen, insbesondere eine optional substituierte, geradkettige oder verzweigte C1- bis C16-Alkylgruppe, eine optional substituierte C4- bis C14-Cycloalkylgruppe oder eine optional substituierte C4- bis C14-Arylgruppe oder eine optional substituierte C5- bis C15-Aralkylgruppe, bedeutet,
   - einem Oximrest -O-N=CR^{g}R^{h}, wobei R^{g} und R^{h} unabhängig voneinander H oder einen optional substituierten Kohlenwasserstoffrest mit 1 bis 20 Kohlenstoffatomen, insbesondere eine optional substituierte, geradkettige oder verzweigte C1- bis C16-Alkylgruppe, eine optional substituierte C4- bis C14-Cycloalkylgruppe oder eine optional substituierte C4- bis C14-Arylgruppe oder eine optional substituierte C5- bis C15-Aralkylgruppe, bedeuten,
   - einem Carbonsäureamidrest -N(Rⁱ)-C(O)-R^{j}, wobei Rⁱ H oder einen optional substituierten Kohlenwasserstoffrest mit 1 bis 20 Kohlenstoffatomen, insbesondere eine optional substituierte, geradkettige oder verzweigte C1- bis C16-Alkylgruppe, eine optional substituierte C4- bis C14-Cycloalkylgruppe oder eine optional substituierte C4- bis C14-Arylgruppe oder eine optional substituierte C5- bis C15-Aralkylgruppe, bedeutet und R^{j} H oder einen optional substituierten Kohlenwasserstoffrest mit 1 bis 20 Kohlenstoffatomen, insbesondere eine optional substituierte, geradkettige oder verzweigte C1- bis C16-Alkylgruppe, eine optional substituierte C4- bis C14-Cycloalkylgruppe oder eine optional substituierte C4- bis C14-Arylgruppe oder eine optional substituierte C5- bis C15-Aralkylgruppe, bedeutet, und
   - einem Alkoxyrest -OR^{k}, wobei R^{k} einen optional substituierten Kohlenwasserstoffrest mit 1 bis 20 Kohlenstoffatomen, insbesondere eine optional substituierte, geradkettige oder verzweigte C1- bis C16-Alkylgruppe, eine optional substituierte C4- bis C14-Cycloalkylgruppe oder eine optional substituierte C4- bis C14-Arylgruppe oder eine optional substituierte C5- bis C15-Aralkylgruppe, bedeutet.

Gemäß einer Ausführungsform der Erfindung enthält eine Zusammensetzung härtbarer Silikonkautschukmassen mindestens eine Metall-Siloxan-Silanol(-at)-Verbindung, wobei die Metall-Siloxan-Silanol(-at)-Verbindung mit einem Gewichtsanteil im Bereich von 0,001 bis 0,5% und bevorzugt im Bereich von 0,006 bis 0,17% vorliegt. Insbesondere weist die Metall-Siloxan-Silanol(-at)-Verbindung eine katalytische Aktivität auf. Die erfindungsgemäßen Zusammensetzungen enthalten in den verschiedenen Ausführungsformen M3S Katalysatoren in molaren Konzentrationen im Bereich von 0,00001 bis 0,01 mol/kg Zusammensetzung, bevorzugt im Bereich von 0,00005 bis 0,005 mol/kg Zusammensetzung und besonders bevorzugt im Bereich von 0,00007 bis 0,0019 mol/kg Zusammensetzung.

Die M3S-Verbindung kann in einer Ausführungsform der vorliegenden Erfindung als Monomer, Oligomer und/oder Polymer vorliegen, wobei der Übergang von Oligomeren zu Polymeren gemäß der allgemeinen Definition fließend ist.

Vorzugsweise ist das Metall beziehungsweise sind die Metalle in der oligomeren und/oder polymeren M3S-Verbindung endständig und/oder innerhalb der Kette vorhanden.

In einer Ausführungsform ist die kettenförmige M3S-Verbindung linear, verzweigt und/oder ein Käfig.

In einer bevorzugten Ausführungsform weist die kettenförmige Metall-Siloxan-Silanol(-at)-Verbindung eine Käfigstruktur auf.

Bevorzugt umfasst die M3S-Verbindung der vorliegenden Erfindung ein oligomeres Metallsilsesquioxan.

Insbesondere umfasst die M3S-Verbindung der vorliegenden Erfindung ein polyhedrales Metallsilsesquioxan.

In einer Ausführungsform weist das Metallsilsesquioxan der erfindungsgemäßen Zusammensetzung die allgemeine Formel R*_{q}SiᵣOₛMₜ auf, wobei jeder R* unabhängig voneinander ausgewählt ist aus der Gruppe bestehend aus optional substituiertem C1- bis C20-Alkyl, optional substituiertem C3- bis C8-Cycloalkyl, optional substituiertem C2- bis C20-Alkenyl, optional substituiertem C5- bis C10-Aryl, -OH und -O-(C1- bis C10-Alkyl), jedes M unabhängig voneinander ausgewählt sind aus der Gruppe bestehend aus s und p Block Metallen, d und f Block Übergangsmetallen, Lanthanid- und Actinidmetallen und Halbmetallen, insbesondere aus der Gruppe bestehend aus Metallen der 1., 2., 3., 4., 5. 8., 10.und 11. Nebengruppe und Metallen der 1., 2. 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi,
- q: eine ganze Zahl von 4 bis 19 ist,
- r: eine ganze Zahl von 4 bis 10 ist,
- s: eine ganze Zahl von 8 bis 30 ist, und
- t: eine ganze Zahl von 1 bis 8 ist.

In einer weiteren Ausführungsform weist das Metallsilsesquioxan der erfindungsgemäßen Zusammensetzung die allgemeine Formel R^{#}₄Si₄O₁₁Y₂Q₂X₄Z₃ auf, wobei jedes X unabhängig voneinander ausgewählt ist aus der Gruppe bestehend aus Si, M¹, -M³L¹_{Δ}, M³, oder -Si(R⁸)-O-M³L¹_{Δ}, wobei M¹ und M³ unabhängig voneinander ausgewählt sind aus der Gruppe bestehend aus s und p Block Metallen, d und f Block Übergangsmetallen, Lanthanid- und Actinidmetallen und Halbmetallen, insbesondere aus der Gruppe bestehend aus Metallen der 1., 2., 3., 4., 5. 8., 10.und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi, und wobei L¹ ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei L¹ ausgewählt ist aus der Gruppe bestehend aus -OH, -O-Methyl, -O-Ethyl, -O-Propyl, -O-Butyl, -O-Octyl, -O-Isopropyl, und -O-Isobutyl, und wobei R⁸ ausgewählt ist aus der Gruppe bestehend aus optional substituiertem C1- bis C20-Alkyl, optional substituiertem C3- bis C8-Cycloalkyl, optional substituiertem C2- bis C20-Alkenyl und optional substituiertem C5- bis C10-Aryl; jedes Z unabhängig voneinander ausgewählt ist aus der Gruppe bestehend aus L², R⁵, R⁶ und R⁷, wobei L² ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei L² ausgewählt ist aus der Gruppe bestehend aus -OH, -O-Methyl, -O-Ethyl, -O-Propyl, -O-Butyl, -O-Octyl, -O-Isopropyl, und -O-Isobutyl; jedes R^{#}, R⁵, R⁶ und R⁷ unabhängig voneinander ausgewählt ist aus der Gruppe bestehend aus optional substituiertem C1- bis C20-Alkyl, optional substituiertem C3- bis C8-Cycloalkyl, optional substituiertem C2- bis C20-Alkenyl und optional substituiertem C5- bis C10-Aryl; jedes Y unabhängig voneinander -O-M²-L³_{Δ} bedeutet, oder zwei Y zusammengenommen sind und zusammen -O-M²(L³_{Δ})-O-oder -O- bedeuten, wobei L³ ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei L³ ausgewählt ist aus der Gruppe bestehend aus -OH, -O-Methyl, -O-Ethyl, -O-Propyl, -O-Butyl, -O-Octyl, -O-Isopropyl, und -O-Isobutyl, und jedes M² unabhängig voneinander ausgewählt ist aus der Gruppe bestehend aus s und p Block Metallen, d und f Block Übergangsmetallen, Lanthanid- und Actinidmetallen und Halbmetallen, insbesondere aus der Gruppe bestehend aus Metallen der 1., 2., 3., 4., 5. 8., 10.und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi,
jedes Q unabhängig voneinander H, M⁴L⁴_{Δ}, -SiR⁸, -M³L¹_{Δ}, eine Einfachbindung verknüpft mit M³ von X oder eine Einfachbindung verknüpft mit dem Si-Atom des Rests -Si(R⁸)-O-M³L¹_{Δ} bedeutet, wobei M³, R⁸ und L¹ wie für X definiert sind, wobei M⁴ ausgewählt ist aus der Gruppe bestehend aus s und p Block Metallen, d und f Block Übergangsmetallen, Lanthanid- und Actinidmetallen und Halbmetallen, insbesondere aus der Gruppe bestehend aus Metallen der 1., 2., 3., 4., 5. 8., 10.und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi,und wobei L⁴ ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei L⁴ ausgewählt ist aus der Gruppe bestehend aus -OH, -O-Methyl, -O-Ethyl, -O-Propyl, -O-Butyl, -O-Octyl, -O-Isopropyl, und -O-Isobutyl, mit dem Vorbehalt, dass mindestens ein X M³, -M³L¹_{Δ} oder -Si(R⁸)-O-M³L¹_{Δ} bedeutet.

Dem Fachmann ist bekannt, dass sich die Anzahl (Δ) möglicher Liganden für L¹_{Δ}, L²_{Δ}, L³_{Δ}, L⁴_{Δ}, direkt aus der Anzahl freier Valenzen des eingesetzten Metallatoms ergibt, wobei die Valenzzahl die Wertigkeit des Metalls beschreibt.

In einer weiteren Ausführungsform weist das Metallsilsesquioxan der erfindungsgemäßen Zusammensetzung die allgemeine Formel (Y_{0,25}R^{#}SiO_{1,25})₄(Z_{0,75}Y_{0,25}XO)₄(OQ)₂ auf, wobei jedes X unabhängig voneinander ausgewählt ist aus der Gruppe bestehend aus Si, M¹, -M³L¹_{Δ}, M³, oder -Si(R⁸)-O-M³L¹_{Δ}, wobei M¹ und M³ unabhängig voneinander ausgewählt sind aus der Gruppe bestehend aus s und p Block Metallen, d und f Block Übergangsmetallen, Lanthanid- und Actinidmetallen und Halbmetallen, insbesondere aus der Gruppe bestehend aus Metallen der 1., 2., 3., 4., 5. 8., 10.und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi, und wobei L¹ ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei L¹ ausgewählt ist aus der Gruppe bestehend aus -OH, -O-Methyl, -O-Ethyl, -O-Propyl, -O-Butyl, -O-Octyl, -O-Isopropyl, und -O-Isobutyl, und wobei R⁸ ausgewählt ist aus der Gruppe bestehend aus optional substituiertem C1- bis C20-Alkyl, optional substituiertem C3- bis C6-Cycloalkyl, optional substituiertem C2- bis C20-Alkenyl und optional substituiertem C6- bis C10-Aryl; jedes Z unabhängig voneinander ausgewählt ist aus der Gruppe bestehend aus L², R⁵, R⁶ und R⁷, wobei L² ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei L² ausgewählt ist aus der Gruppe bestehend aus -OH, -O-Methyl, -O-Ethyl, -O-Propyl, -O-Butyl, -O-Octyl, -O-Isopropyl, und -O-Isobutyl; jedes R^{#}, R⁵, R⁶ und R⁷ unabhängig voneinander ausgewählt ist aus der Gruppe bestehend aus optional substituiertem C1- bis C20-Alkyl, optional substituiertem C3- bis C6-Cycloalkyl, optional substituiertem C2- bis C20-Alkenyl und optional substituiertem C6- bis C10-Aryl; jedes Y unabhängig voneinander -O-M²-L³_{Δ} bedeutet, oder zwei Y zusammengenommen sind und zusammen -O-M²(L³_{Δ})-O- oder -O- bedeuten, wobei L³ ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei L³ ausgewählt ist aus der Gruppe bestehend aus -OH, -O-Methyl, -O-Ethyl, -O-Propyl, -O-Butyl, -O-Octyl, -O-Isopropyl, und -O-Isobutyl, und jedes M² unabhängig voneinander ausgewählt ist aus der Gruppe bestehend aus s und p Block Metallen, d und f Block Übergangsmetallen, Lanthanid- und Actinidmetallen und Halbmetallen, insbesondere aus der Gruppe bestehend aus Metallen der 1., 2., 3., 4., 5. 8., 10.und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi,

jedes Q unabhängig voneinander H, M⁴L⁴_{Δ}, -SiR⁸, -M³L¹_{Δ}, eine Einfachbindung verknüpft mit M³ von X oder eine Einfachbindung verknüpft mit dem Si-Atom des Rests -Si(R⁸)-O-M³L¹_{Δ} bedeutet, wobei M³, R⁸ und L¹ wie für X definiert sind, wobei M⁴ ausgewählt ist aus der Gruppe bestehend aus s und p Block Metallen, d und f Block Übergangsmetallen, Lanthanid- und Actinidmetallen und Halbmetallen, insbesondere aus der Gruppe bestehend aus Metallen der 1., 2., 3., 4., 5. 8., 10.und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi, und wobei L⁴ ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei L⁴ ausgewählt ist aus der Gruppe bestehend aus -OH, -O-Methyl, -O-Ethyl, -O-Propyl, -O-Butyl, -O-Octyl, -O-Isopropyl, und -O-Isobutyl, mit dem Vorbehalt, dass mindestens ein X M³, -M³L¹_{Δ} oder -Si(R⁸)-O-M³L¹_{Δ} bedeutet.

Bevorzugt weist das erfindungsgemäße Metallsilsesquioxan die allgemeine Formel Si₄O₉R¹R²R³R⁴X¹X²X³X⁴OQ¹OQ²Y¹Y²Z¹Z²Z³ auf, wobei X¹, X² und X³ unabhängig voneinander ausgewählt sind aus Si oder M¹, wobei M¹ ausgewählt ist aus der Gruppe bestehend aus s und p Block Metallen, d und f Block Übergangsmetallen, Lanthanid- und Actinidmetallen und Halbmetallen, insbesondere aus der Gruppe bestehend aus Metallen der 1., 2., 3., 4., 5. 8., 10.und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi,
Z¹, Z² und Z³ unabhängig voneinander ausgewählt sind aus der Gruppe bestehend aus L², R⁵, R⁶ und R⁷, wobei L² ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei L² ausgewählt ist aus der Gruppe bestehend aus -OH, -O-Methyl, -O-Ethyl, -O-Propyl, -O-Butyl, -O-Octyl, -O-Isopropyl, und -O-Isobutyl;
R¹, R², R³, R⁴, R⁵, R⁶ und R⁷ unabhängig voneinander ausgewählt sind aus der Gruppe bestehend aus optional substituiertem C1- bis C20-Alkyl, optional substituiertem C3- bis C8-Cycloalkyl, optional substituiertem C2- bis C20-Alkenyl und optional substituiertem C5- bis C10-Aryl; Y¹ und Y² unabhängig voneinander -O-M²-L³_{Δ} bedeuten, oder Y¹ und Y² zusammengenommen sind und zusammen -O-M²(L³_{Δ})-O- oder -O- bedeuten, wobei L³ ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei L³ ausgewählt ist aus der Gruppe bestehend aus -OH, -O-Methyl, -O-Ethyl, -O-Propyl, -O-Butyl, -O-Octyl, -O-Isopropyl, und -O-Isobutyl, und M² ausgewählt ist aus der Gruppe bestehend aus s und p Block Metallen, d und f Block Übergangsmetallen, Lanthanid- und Actinidmetallen und Halbmetallen, insbesondere aus der Gruppe bestehend aus Metallen der 1., 2., 3., 4., 5. 8., 10.und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi,und
X⁴ -M³L¹_{Δ} oder M³ bedeutet und Q¹ und Q² jeweils H oder eine Einfachbindung verknüpft mit M³ bedeuten, wobei L¹ ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei L¹ ausgewählt ist aus der Gruppe bestehend aus - OH, -O-Methyl, -O-Ethyl, -O-Propyl, -O-Butyl, -O-Octyl, -O-Isopropyl, und -O-Isobutyl, und wobei M³ ausgewählt ist aus der Gruppe bestehend aus s und p Block Metallen, d und f Block Übergangsmetallen, Lanthanid- und Actinidmetallen und Halbmetallen, insbesondere aus der Gruppe bestehend aus Metallen der 1., 2., 3., 4., 5. 8., 10.und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi,
oder
X⁴ -M³L¹_{Δ} bedeutet und Q² H oder eine Einfachbindung verknüpft mit M³ bedeutet und Q¹, H, M⁴L⁴_{Δ} oder -SiR⁸ bedeutet, wobei M⁴ ausgewählt ist aus der Gruppe bestehend aus s und p Block Metallen, d und f Block Übergangsmetallen, Lanthanid- und Actinidmetallen und Halbmetallen, insbesondere aus der Gruppe bestehend aus Metallen der 2., 3., 4., 5. und 8. Nebengruppe und Metallen der 1., 2., 3., 4. und 5. Hauptgruppe, insbesondere aus der Gruppe bestehend aus Zn, Sc, Ti, Zr, Hf, V, Pt, Ga, Sn und Bi, wobei L⁴ ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei L⁴ ausgewählt ist aus der Gruppe bestehend aus -OH, -O-Methyl, -O-Ethyl, -O-Propyl, -O-Butyl, -O-Octyl, -O-Isopropyl, und -O-Isobutyl, und wobei R⁸ ausgewählt ist aus der Gruppe bestehend aus optional substituiertem C1- bis C20-Alkyl, optional substituiertem C3- bis C8-Cycloalkyl, optional substituiertem C2- bis C20-Alkenyl und optional substituiertem C5- bis C10-Aryl,
oder
X⁴, Q¹ und Q² unabhängig voneinander -M³L¹_{Δ} bedeuten, oder
X⁴ -Si(R⁸)-O-M³L¹ bedeutet, Q² eine Einfachbindung verknüpft mit dem Si-Atom von X⁴ bedeutet und Q¹ -M⁴L⁴_{Δ} bedeutet,
oder
X⁴ -Si(R⁸)-O-M³L¹_{Δ} bedeutet, Q² eine Einfachbindung verknüpft mit dem Si-Atom von X⁴ bedeutet und Q¹ eine Einfachbindung verknüpft mit dem M³-Atom von X⁴ bedeutet.

In einer weiteren Ausführungsform weist das Metallsilsesquioxan die allgemeine Formel
(X⁴)(Z¹Y¹X²O)(Z²X¹O₂)(Z³X³O₂)(R¹Y²SiO)(R³SiO)(R⁴SiO₂)(R²SiO₂)(Q¹)(Q²) auf, wobei X¹, X² und X³ unabhängig voneinander ausgewählt sind aus Si oder M¹, wobei M¹ ausgewählt ist aus der Gruppe bestehend aus s und p Block Metallen, d und f Block Übergangsmetallen, Lanthanid- und Actinidmetallen und Halbmetallen, insbesondere aus der Gruppe bestehend aus Metallen der 1., 2., 3., 4., 5. 8., 10.und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi,
Z¹, Z² und Z³ unabhängig voneinander ausgewählt sind aus der Gruppe bestehend aus L², R⁵, R⁶ und R⁷, wobei L² ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei L² ausgewählt ist aus der Gruppe bestehend aus -OH, -O-Methyl, -O-Ethyl, -O-Propyl, -O-Butyl, -O-Octyl, -O-Isopropyl, und -O-Isobutyl;
R¹, R², R³, R⁴, R⁵, R⁶ und R⁷ unabhängig voneinander ausgewählt sind aus der Gruppe bestehend aus optional substituiertem C1- bis C20-Alkyl, optional substituiertem C3- bis C6-Cycloalkyl, optional substituiertem C2- bis C20-Alkenyl und optional substituiertem C6- bis C10-Aryl; Y¹ und Y² unabhängig voneinander -O-M²-L³_{Δ} bedeuten, oder Y¹ und Y² zusammengenommen sind und zusammen -O-M²(L³_{Δ})-O- oder -O- bedeuten, wobei L³ ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei L³ ausgewählt ist aus der Gruppe bestehend aus -OH, -O-Methyl, -O-Ethyl, -O-Propyl, -O-Butyl, -O-Octyl, -O-Isopropyl, und -O-Isobutyl, und M² ausgewählt ist aus der Gruppe bestehend aus s und p Block Metallen, d und f Block Übergangsmetallen, Lanthanid- und Actinidmetallen und Halbmetallen, insbesondere aus der Gruppe bestehend aus Metallen der 1., 2., 3., 4., 5. 8., 10.und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi, und X⁴ -M³L¹_{Δ} oder M³ bedeutet und Q¹ und Q² jeweils H oder eine Einfachbindung verknüpft mit M³ bedeuten, wobei L¹ ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei L¹ ausgewählt ist aus der Gruppe bestehend aus - OH, -O-Methyl, -O-Ethyl, -O-Propyl, -O-Butyl, -O-Octyl, -O-Isopropyl, und -O-Isobutyl, und wobei M³ ausgewählt ist aus der Gruppe bestehend aus s und p Block Metallen, d und f Block Übergangsmetallen, Lanthanid- und Actinidmetallen und Halbmetallen, insbesondere aus der Gruppe bestehend aus Metallen der 1., 2., 3., 4., 5. 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi, oder X⁴ -M³L¹_{Δ}bedeutet und Q² H oder eine Einfachbindung verknüpft mit M³ bedeutet und Q¹ H, M⁴L⁴_{Δ} oder -SiR⁸ bedeutet, wobei M⁴ ausgewählt ist aus der Gruppe bestehend aus s und p Block Metallen, d und f Block Übergangsmetallen, Lanthanid- und Actinidmetallen und Halbmetallen, insbesondere aus der Gruppe bestehend aus Metallen der 2., 3., 4., 5. und 8. Nebengruppe und Metallen der 1., 2., 3., 4. und 5. Hauptgruppe, insbesondere aus der Gruppe bestehend aus Zn, Sc, Ti, Zr, Hf, V, Pt, Ga, Sn und Bi, wobei L⁴ ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei L⁴ ausgewählt ist aus der Gruppe bestehend aus -OH, -O-Methyl, -O-Ethyl, -O-Propyl, -O-Butyl, -O-Octyl, -O-Isopropyl, und -O-Isobutyl, und wobei R⁸ ausgewählt ist aus der Gruppe bestehend aus optional substituiertem C1- bis C20-Alkyl, optional substituiertem C3- bis C6-Cycloalkyl, optional substituiertem C2- bis C20-Alkenyl und optional substituiertem C6- bis C10-Aryl, oder
X⁴, Q¹ und Q² unabhängig voneinander -M³L¹_{Δ} bedeuten, oder
X⁴ -Si(R⁸)-O-M³L¹_{Δ} bedeutet, Q² eine Einfachbindung verknüpft mit dem Si-Atom von X⁴ bedeutet und Q¹ -M⁴L⁴_{Δ} bedeutet, oder
X⁴ -Si(R⁸)-O-M³L¹_{Δ} bedeutet, Q² eine Einfachbindung verknüpft mit dem Si-Atom von X⁴ bedeutet und Q¹ eine Einfachbindung verknüpft mit dem M³-Atom von X⁴ bedeutet.

In einer bevorzugten Ausführungsform weist das Metallsilsesquioxan die allgemeine Formel (III) auf 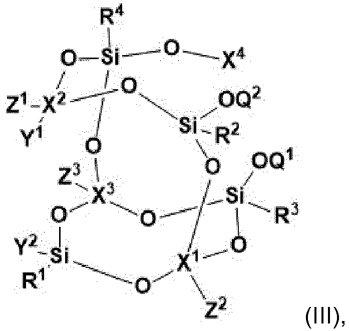
wobei X¹, X² und X³ unabhängig voneinander ausgewählt sind aus Si oder M¹, wobei M¹ ausgewählt ist aus der Gruppe bestehend aus s und p Block Metallen, d und f Block Übergangsmetallen, Lanthanid- und Actinidmetallen und Halbmetallen, insbesondere aus der Gruppe bestehend aus Metallen der 1., 2., 3., 4., 5. 8., 10.und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi,
Z¹, Z² und Z³ unabhängig voneinander ausgewählt sind aus der Gruppe bestehend aus L², R⁵, R⁶ und R⁷, wobei L² ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei L² ausgewählt ist aus der Gruppe bestehend aus -OH, -O-Methyl, -O-Ethyl, -O-Propyl, -O-Butyl, -O-Octyl, -O-Isopropyl, und -O-Isobutyl;
R¹, R², R³, R⁴, R⁵, R⁶ und R⁷unabhängig voneinander ausgewählt sind aus der Gruppe bestehend aus optional substituiertem C1- bis C20-Alkyl, optional substituiertem C3- bis C8-Cycloalkyl, optional substituiertem C2- bis C20-Alkenyl und optional substituiertem C5- bis C10-Aryl; Y¹ und Y² unabhängig voneinander -O-M²-L³_{Δ} bedeuten, oder Y¹ und Y² zusammengenommen sind und zusammen -O-M²(L³_{Δ})-O- oder -O- bedeuten, wobei L³ ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei L³ ausgewählt ist aus der Gruppe bestehend aus -OH, -O-Methyl, -O-Ethyl, -O-Propyl, -O-Butyl, -O-Octyl, -O-Isopropyl, und -O-Isobutyl, und wobei M² ausgewählt ist aus der Gruppe bestehend aus s und p Block Metallen, d und f Block Übergangsmetallen, Lanthanid- und Actinidmetallen und Halbmetallen, insbesondere aus der Gruppe bestehend aus Metallen der 1., 2., 3., 4., 5. 8., 10.und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn, Bi,
und X⁴ -M³L¹_{Δ} oder M³ bedeutet und Q¹ und Q² jeweils H oder eine Einfachbindung verknüpft mit M³ bedeuten, wobei L¹ ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei L¹ ausgewählt ist aus der Gruppe bestehend aus -OH, -O-Methyl, -O-Ethyl, -O-Propyl, -O-Butyl, -O-Octyl, -O-Isopropyl, und -O-Isobutyl, und wobei M³ ausgewählt ist aus der Gruppe bestehend aus s und p Block Metallen, d und f Block Übergangsmetallen, Lanthanid- und Actinidmetallen und Halbmetallen, insbesondere aus der Gruppe bestehend aus Metallen der 1., 2., 3., 4., 5. 8., 10.und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn, Bi,
   oder
X⁴ -M³L¹ bedeutet und Q² H oder eine Einfachbindung verknüpft mit M³ bedeutet und Q¹ H, M⁴L⁴_{Δ} oder -SiR⁸ bedeutet, wobei M⁴ ausgewählt ist aus der Gruppe bestehend aus s und p Block Metallen, d und f Block Übergangsmetallen, Lanthanid- und Actinidmetallen und Halbmetallen, insbesondere aus der Gruppe bestehend aus Metallen der 1., 2., 3., 4., 5. 8., 10.und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi, und wobei L⁴ ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei L⁴ ausgewählt ist aus der Gruppe bestehend aus -OH, -O-Methyl, -O-Ethyl, -O-Propyl, -O-Butyl, -O-Octyl, -O-Isopropyl, und -O-Isobutyl, und wobei R⁸ ausgewählt ist aus der Gruppe bestehend aus optional substituiertem C1- bis C20-Alkyl, optional substituiertem C3- bis C6-Cycloalkyl, optional substituiertem C2- bis C20-Alkenyl und optional substituiertem C6- bis C10-Aryl, oder
X⁴, Q¹ und Q² unabhängig voneinander -M³L¹_{Δ} bedeuten, oder
X⁴ -Si(R⁸)-O-M³L¹_{Δ} bedeutet, Q² eine Einfachbindung verknüpft mit dem Si-Atom von X⁴ bedeutet und Q¹ -M⁴L⁴_{Δ} bedeutet, oder
X⁴ -Si(R⁸)-O-M³L¹_{Δ} bedeutet, Q² eine Einfachbindung verknüpft mit dem Si-Atom von X⁴ bedeutet und Q¹ eine Einfachbindung verknüpft mit dem M³-Atom von X⁴ bedeutet.

In einer weiteren bevorzugten Ausführungsform weist das Metallsilsesquioxan die allgemeine Formel (III) auf, wobei X¹, X² und X³ unabhängig voneinander Si bedeuten,
X⁴ -M³L¹_{Δ} bedeutet und Q¹ und Q² jeweils eine Einfachbindung verknüpft mit M³ bedeuten, wobei L¹ ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei L¹ ausgewählt ist aus der Gruppe bestehend aus -OH, -O-Methyl, -O-Ethyl, -O-Propyl, -O-Butyl, -O-Octyl, -O-Isopropyl, und -O-Isobutyl, und wobei M³ ausgewählt ist aus der Gruppe bestehend aus s und p Block Metallen, d und f Block Übergangsmetallen, Lanthanid- und Actinidmetallen und Halbmetallen, insbesondere aus der Gruppe bestehend aus Metallen der 1., 2., 3., 4., 5. 8., 10.und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi,
Z¹, Z² und Z³ jeweils unabhängig voneinander aus optional substituierten C1- bis C20-Alkyl, optional substituierten C3- bis C8-Cycloalkyl, optional substituierten C2- bis C20-Alkenyl und optional substituierten C5- bis C10 Aryl ausgewählt sind, R¹, R², R³ jeweils unabhängig voneinander aus optional substituierten C1- bis C20-Alkyl, optional substituierten C3- bis C8-Cycloalkyl, optional substituierten C2- bis C20-Alkenyl und optional substituierten C5- bis C10 Aryl ausgewählt sind, Y¹ und Y² zusammengenommen sind und zusammen -O- bilden.

In einer Ausführungsform kann das Metallsilsesquioxan gemäß Formel (III) in der erfindungsgemäßen Metall-Siloxan-Silanol(-at)-Verbindung in Abhängigkeit der vorhandenen Equivalente an Metall als Monomer, Dimer, Trimer, Multimer und/oder Mischungen daraus vorliegen, sodass beispielsweise Strukturen gemäß der Formeln (IIIa) bis (IIIc) möglich sind, 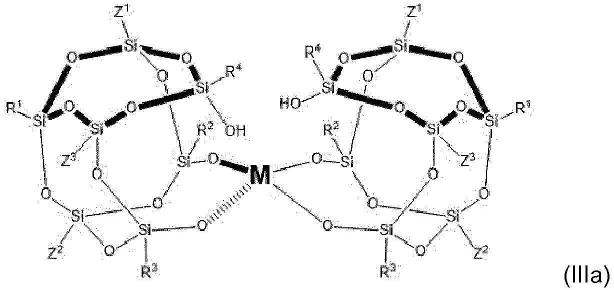 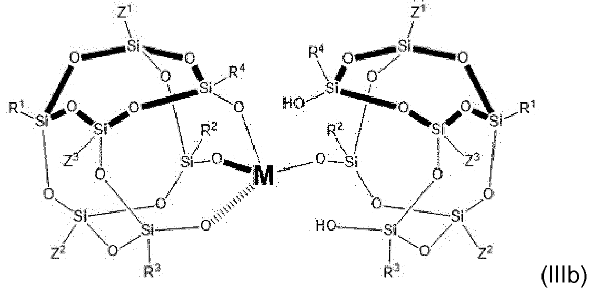 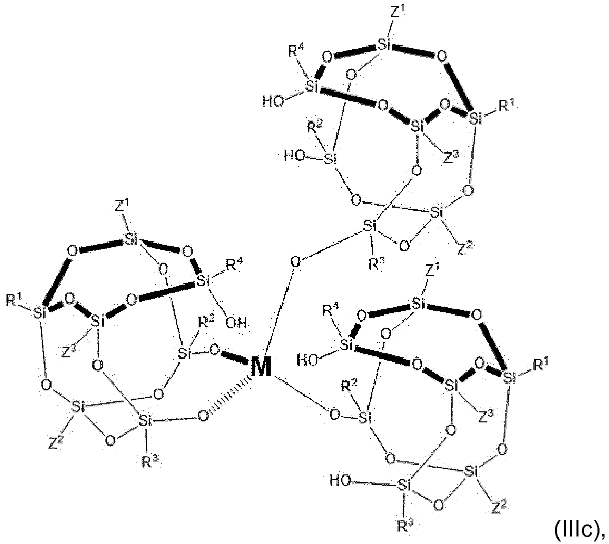 wobei M ausgewählt ist aus der Gruppe bestehend aus s und p Block Metallen, d und f Block Übergangsmetallen, Lanthanid- und Actinidmetallen und Halbmetallen, insbesondere aus der Gruppe bestehend aus Metallen der 1., 2., 3., 4., 5. 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi, und jeder R unabhängig voneinander ausgewählt ist aus der Gruppe bestehend aus optional substituiertem C1- bis C20-Alkyl, optional substituiertem C3- bis C8-Cycloalkyl, optional substituiertem C2- bis C20-Alkenyl, optional substituiertem C5- bis C10-Aryl, -OH und -O-(C1-bis C10-Alkyl). Das vierwertige Metall M stellt hierbei einen gemeinsamen Teil mehrerer Käfige dar. Dabei ist dem Fachmann bekannt, dass die Anzahl der Bindungen zum Metall M abhängig ist von der Wertigkeit des Metalls M. Die Strukturformeln (IIIa) bis (IIIc) sind gegebenenfalls entsprechend anzupassen.

In einer Ausführungsform der erfindungsgemäßen Zusammensetzung liegt eine Mischung der Metallsilsesquioxane gemäß Formel (III), (IIIa), (IIIb) und (IIIc) vor.

In einer besonders bevorzugten Ausführungsform weist das Metallsilsesquioxan die allgemeine Strukturformel (IV) auf 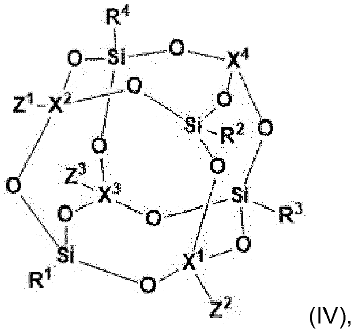
wobei X¹, X² und X³ unabhängig voneinander ausgewählt sind aus Si oder M¹, wobei M¹ ausgewählt ist aus der Gruppe bestehend aus s und p Block Metallen, d und f Block Übergangsmetallen, Lanthanid- und Actinidmetallen und Halbmetallen,
insbesondere aus der Gruppe bestehend aus Metallen der 1., 2., 3., 4., 5. 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi,
Z¹, Z² und Z³ unabhängig voneinander ausgewählt sind aus der Gruppe bestehend aus L², R⁵, R⁶ und R⁷, wobei L² ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei L² ausgewählt ist aus der Gruppe bestehend aus -OH, -O-Methyl, -O-Ethyl, -O-Propyl, -O-Butyl, -O-Octyl, -O-Isopropyl, und -O-Isobutyl;
R¹, R², R³, R⁴, R⁵, R⁶ und R⁷unabhängig voneinander ausgewählt sind aus der Gruppe bestehend aus optional substituiertem C1- bis C20-Alkyl, optional substituiertem C3- bis C8-Cycloalkyl, optional substituiertem C2- bis C20-Alkenyl und optional substituiertem C5- bis C10-Aryl;
wobei X⁴ -M³L¹_{Δ} bedeutet, wobei L¹ ausgewählt ist aus der Gruppe bestehend aus -OH und -O-(C1- bis C10-Alkyl), insbesondere -O-(C1- bis C8-Alkyl) oder -O-(C1-bis C6-Alkyl), oder wobei L¹ ausgewählt ist aus der Gruppe bestehend aus -OH, - O-Methyl, -O-Ethyl, -O-Propyl, -O-Butyl, -O-Octyl, -O-Isopropyl, und -O-Isobutyl, und wobei M³ ausgewählt ist aus der Gruppe bestehend aus s und p Block Metallen, d und f Block Übergangsmetallen, Lanthanid- und Actinidmetallen und Halbmetallen, insbesondere aus der Gruppe bestehend aus Metallen der 1., 2., 3., 4., 5. 8., 10.und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi.

In einer weiteren besonders bevorzugten Ausführungsform weist das Metallsilsesquioxan die allgemeine Strukturformel (V) auf 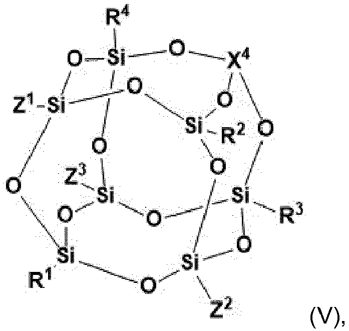
wobei X⁴ -M³L¹_{Δ} bedeutet, wobei L¹ ausgewählt ist aus der Gruppe bestehend aus -OH und -O-(C1- bis C10-Alkyl), insbesondere -O-(C1- bis C8-Alkyl) oder -O-(C1-bis C6-Alkyl), oder wobei L¹ ausgewählt ist aus der Gruppe bestehend aus -OH, - O-Methyl, -O-Ethyl, -O-Propyl, -O-Butyl, -O-Octyl, -O-Isopropyl, und -O-Isobutyl, und wobei M³ ausgewählt ist aus der Gruppe bestehend aus s und p Block Metallen, d und f Block Übergangsmetallen, Lanthanid- und Actinidmetallen und Halbmetallen, insbesondere aus der Gruppe bestehend aus Metallen der 1., 2., 3., 4., 5. 8., 10.und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi,
Z¹, Z² und Z³ unabhängig voneinander ausgewählt sind aus der Gruppe bestehend aus optional substituiertem C1- bis C20-Alkyl, optional substituiertem C3- bis C8-Cycloalkyl, optional substituiertem C2- bis C20-Alkenyl und optional substituiertem C5- bis C10-Aryl;
R¹, R², R³ und R⁴ jeweils unabhängig voneinander ausgewählt sind aus der Gruppe bestehend aus optional substituiertem C1- bis C20-Alkyl, optional substituiertem C3- bis C8-Cycloalkyl, optional substituiertem C2- bis C20-Alkenyl und optional substituiertem C5- bis C10-Aryl.

Ferner betrifft die Erfindung Metallsilsesquioxane der allgemeinen Strukturformel (V), wobei X⁴ -M³L¹_{Δ} bedeutet wobei L¹ ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei L¹ ausgewählt ist aus der Gruppe bestehend aus - OH, -O-Methyl, -O-Ethyl, -O-Propyl, -O-Butyl, -O-Octyl, -O-Isopropyl, und -O-Isobutyl, und wobei M³ ausgewählt ist aus der Gruppe bestehend aus s und p Block Metallen, d und f Block Übergangsmetallen, Lanthanid- und Actinidmetallen und Halbmetallen, insbesondere aus der Gruppe bestehend aus Metallen der 1., 2., 3., 4., 5. 8., 10.und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi,
Z¹, Z² und Z³ unabhängig voneinander ausgewählt sind aus der Gruppe bestehend aus L², R⁵, R⁶ und R⁷, wobei L² ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei L² ausgewählt ist aus der Gruppe bestehend aus -OH, -O-Methyl, -O-Ethyl, -O-Propyl, -O-Butyl, -O-Octyl, -O-Isopropyl, und -O-Isobutyl und
R¹, R², R³, R⁴, R⁵, R⁶ und R⁷unabhängig voneinander ausgewählt sind aus der Gruppe bestehend aus optional substituiertem C1- bis C20-Alkyl, optional substituiertem C3- bis C8-Cycloalkyl, optional substituiertem C2- bis C20-Alkenyl und optional substituiertem C5- bis C10-Aryl.

Ferner kann das Metallsilsesquioxan gemäß Formel (V) in der erfindungsgemäßen M3S-Verbindung 6-fach koordinierte Metallzentren aufweisen, sodass Strukturen gemäß Formel (Va) möglich sind 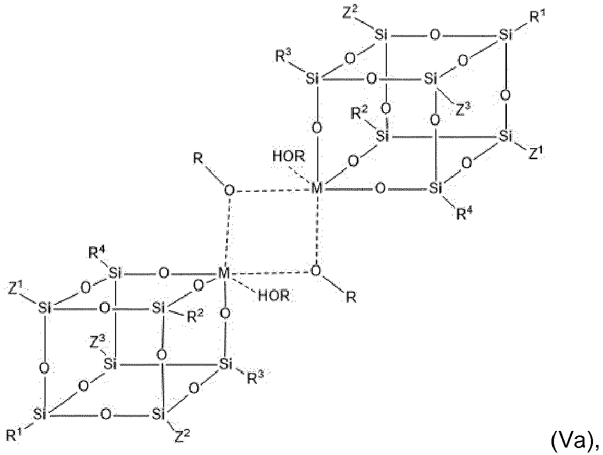 wobei jedes M unabhängig ausgewählt ist aus der Gruppe bestehend aus s und p Block Metallen, d und f Block Übergangsmetallen, Lanthanid- und Actinidmetallen und Halbmetallen, insbesondere aus der Gruppe bestehend aus Metallen der 1., 2., 3., 4., 5. 8., 10.und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi, und jeder R unabhängig voneinander ausgewählt ist aus der Gruppe bestehend aus optional substituiertem C1- bis C20-Alkyl, optional substituiertem C3- bis C8-Cycloalkyl, optional substituiertem C2- bis C20-Alkenyl, optional substituiertem C5- bis C10-Aryl, -OH und -O-(C1-bis C10-Alkyl).

In der erfindungsgemäßen härtbaren Zusammensetzung kann die Metall-Siloxan-Silanol(-at)-Verbindung eine Mischung enthaltend die Strukturen (III), (IIIa), (IIIb), (IIIc), (IV), (V)und (Va) darstellen.

In einer Ausführungsform liegen in der M3S-Verbindung definierte Käfigstrukturen neben undefinierten oligomeren und/oder polymeren Strukturen und/oder Mischungen daraus vor.

In einer bevorzugten Ausführungsform ist das Metall in der M3S-Verbindung ein Titan.

In einer besonders bevorzugten Ausführungsform weist das Metallsilsesquioxan der erfindungsgemäßen M3S-Verbindung die Struktur (VI) auf 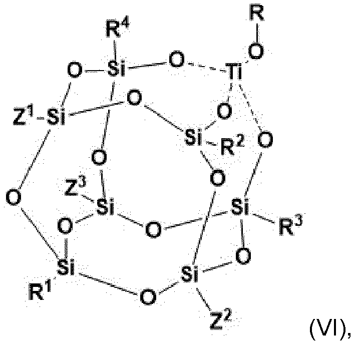
wobei Titan mit OR verknüpft ist, wobei R ausgewählt ist aus der Gruppe bestehend aus -H, -Methyl, -Ethyl, -Propyl, -Butyl, -Octyl, -Isopropyl, und -Isobutyl, Z¹, Z² und Z³ jeweils unabhängig voneinander C1- bis C20-Alkyl, C3- bis C8-Cycloalkyl, C2- bis C20-Alkenyl und C5- bis C10-Aryl bedeuten, insbesondere ausgewählt sind aus der Gruppe bestehend aus Methyl-, Ethyl-, Propyl-, Isopropyl-, Butyl-, Isobutyl-, Hexyl-, Heptyl-, Octyl-, Vinyl-, Allyl-, Butenyl- und Phenyl-, und Benzyl-, und
R¹, R², R³ und R⁴ jeweils unabhängig voneinander C1- bis C20-Alkyl, C3- bis C8-Cycloalkyl, C2- bis C20-Alkenyl, und C5- bis C10-Aryl bedeuten, insbesondere ausgewählt sind aus der Gruppe bestehend aus Methyl-, Ethyl-, Propyl-, Isopropyl-, Butyl-, Isobutyl-, Hexyl-, Heptyl-, Octyl-, Vinyl-, Allyl-, Butenyl- und Phenyl-, und Benzyl-.

In einer besonders bevorzugten Ausführungsform weist das Metallsilsesquioxan der erfindungsgemäßen M3S-Verbindung die Struktur (VII) auf 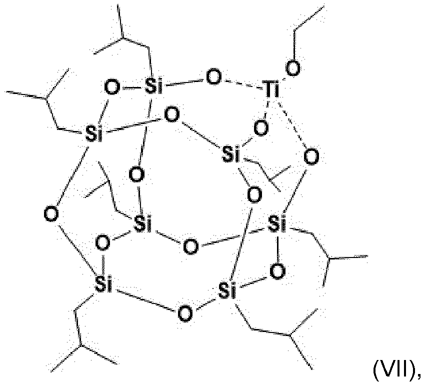 wobei jedes Si mit einem Isobutyl-Rest verknüpft ist und Titan einen Ethanolat-Liganden trägt. Die Verbindung der Strukturformel (VII) wird hierin als IBU-POSS-TI-OEt bezeichnet.

In einer besonders bevorzugten Ausführungsform ist die Metall-Siloxan-Silanol(-at)-Verbindung IBU-POSS-Ti-OEt.

In einer weiteren besonders bevorzugten Ausführungsform ist die M3S-Verbindung Octyl-POSS-Ti-OEt, wobei jedes Si mit einem Octyl-Rest verknüpft ist und Titan einen Ethanolat-Liganden trägt.

Ferner betrifft die Erfindung Silikonverbindungen der allgemeinen Formel HO-(SiR¹R^{m}O)ₒ-H, wobei o eine ganze Zahl von 5 bis 4000.

In einer bevorzugten Ausführungsform ist in der Silikonverbindung HO-(SiR^{l}R^{m}O)ₒ-H o eine ganze Zahl insbesondere von 100 bis 3000, von 500 bis 2500, von 800 bis 2000 oder von 1000 bis 1600, ist.

In einer weiteren Ausführungsform hat die Silikonverbindung HO-(SiR^{l}R^{m}O)ₒ-H ein gewichtsmittleres Molekulargewicht M_{w} von 400 bis 5000000, insbesondere von 3000 bis 2500000, von 15000 bis 1000000, von 30000 bis 750000, von 50000 bis 500000 oder von 70000 bis 120000.

Ferner betrifft die Zusammensetzung Silikonverbindungen HO-(SiR^{l}R^{m}O)ₒ-H, die bei 25°C eine kinematische Viskosität von 20 bis 500000 cSt aufweisen.

In einer bevorzugten Ausführungsform weist die Silikonverbindungen HO-(SiR^{l}R^{m}O)ₒ-H bei 25°C eine kinematische Viskosität von 20 bis 350000 cSt oder von 20000 bis 100000 cSt oder von 20000 bis 90000 cSt oder von 20000 bis 80000 cSt auf.

In einer weiteren bevorzugten Ausführungsform betrifft die Erfindung Silikonverbindungen HO-(SiR^{l}R^{m}O)ₒ-H, wobei R^{l} und R^{m} unabhängig voneinander eine optional substituierte, geradkettige oder verzweigte C1- bis C16-Alkylgruppe, insbesondere eine optional substituierte, geradkettige oder verzweigte C1- bis C12- oder C1- bis C8-Alkylgruppe, eine optional substituierte, geradkettige oder verzweigte C2- bis C16-Alkenylgruppe, insbesondere eine optional substituierte, geradkettige oder verzweigte C2- bis C12- oder C2- bis C8-Alkenylgruppe, oder eine optional substituierte C4- bis C14-Arylgruppe, insbesondere eine optional substituierte C4- bis C10-Arylgruppe, bedeuten.

In einer besonders bevorzugten Ausführungsform betrifft die Erfindung Silikonverbindungen HO-(SiR^{l}R^{m}O)ₒ-H, wobei R^{l} und R^{m} unabhängig voneinander ausgewählt sind aus der Gruppe bestehend aus Methyl-, Ethyl-, Propyl-, Butyl-, Trifluormethyl-, Vinyl-, Allyl-, Butenyl-, Phenyl- und Naphthyl-.

In einer besonders bevorzugten Ausführungsform betrifft die Erfindungen Silikonverbindungen HO-(SiR^{l}R^{m}O)ₒ-H, wobei die Silikonverbindung α,ω-Dihydroxy-dimethyl-polysiloxan ist.

Ferner betrifft die erfindungsgemäße Zusammensetzung Vernetzer der allgemeinen Formel Si(R)ₘ(R^{a})₄₋ₘ wobei jeder R^{a} unabhängig voneinander ausgewählt aus der Gruppe bestehend aus:
- einem Hydroxycarbonsäureesterrest mit der allgemeinen Strukturformel (I): 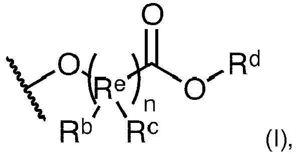
- einem Hydroxycarbonsäureamidrest mit der allgemeinen Strukturformel (II): 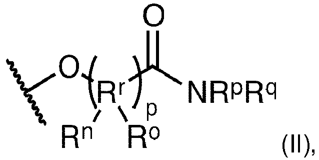
- einem Carbonsäurerest -O-C(O)-R^{f},
- einem Oximrest -O-N=CR^{g}R^{h},
- einem Carbonsäureamidrest -N(Rⁱ)-C(O)-R^{j},
- einem Alkoxyrest -OR^{k}.

In einer bevorzugten Ausführungsform weist der Vernetzer Reste R der allgemeinen Formel Si(R)ₘ(R^{a})₄₋ₘ auf, wobei jeder Rest R unabhängig voneinander eine optional substituierte, geradkettige oder verzweigte C1- bis C12-Alkylgruppe, insbesondere eine optional substituierte, geradkettige oder verzweigte C1- bis C8-Alkylgruppe, oder eine optional substituierte, geradkettige oder verzweigte C2- bis C12-Alkenylgruppe, insbesondere eine optional substituierte, geradkettige oder verzweigte C2- bis C8-Alkenylgruppe, oder eine optional substituierte C4- bis C10-Arylgruppe bedeutet.

In einer besonders bevorzugten Ausführungsform ist jeder Rest R des Vernetzers der allgemeinen Formel Si(R)ₘ(R^{a})₄₋ₘ unabhängig voneinander ein Methyl-, Ethyl-, Propyl-, Vinyl-, Phenyl- oder ein Allylrest.
In einer Ausführungsform weist der Vernetzer der allgemeinen Formel Si(R)ₘ(R^{a})₄₋ₘ Reste R^{a} -OR^{k} auf, wobei R^{k} eine optional substituierte, geradkettige oder verzweigte C1- bis C12-Alkylgruppe, eine optional substituierte C4- bis C10-Cycloalkylgruppe oder eine optional substituierte C4- bis C10-Arylgruppe oder eine optional substituierte C5- bis C11-Aralkylgruppe, insbesondere eine optional substituierte, geradkettige oder verzweigte C1- bis C8-Alkylgruppe, eine optional substituierte C4- bis C8-Cycloalkylgruppe oder eine optional substituierte C4- bis C10-Arylgruppe oder eine optional substituierte C5- bis C11-Aralkylgruppe, bedeutet.

In einer weiteren Ausführungsform weist der Vernetzer der allgemeinen Formel Si(R)ₘ(R^{a})₄₋ₘ Reste R^{a} -OR^{k} auf, wobei R^{k} ausgewählt ist aus der Gruppe bestehend aus Phenyl-, Tolyl-, Naphthyl-, Benzyl-, Cyclohexyl-, Methyl-, Ethyl-, Propyl-, Isopropyl-, Butyl-, n-Butyl-, sec-Butyl-, iso-Butyl-, tert-Butyl-, Pentyl-, n-Pentyl-, sec-Pentyl-, 3-Pentyl-, 2-Methylbutyl-, iso-Pentyl-, 3-Methylbut-2-yl-, 2-Methylbut-2-yl-, Neopentyl-, Hexyl-, Heptyl-, Octyl-, Ethylhexyl-, und 2-Ethylhexyl-.

In einer bevorzugten Ausführungsform weist die erfindungsgemäße Zusammensetzung Vernetzter der allgemeinen Formel Si(R)ₘ(R^{a})₄₋ₘ wobei jeder R^{a} unabhängig voneinander ausgewählt aus der Gruppe bestehend aus:
- einem Hydroxycarbonsäureesterrest mit der allgemeinen Strukturformel (I): 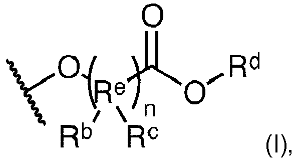
- einem Hydroxycarbonsäureamidrest mit der allgemeinen Strukturformel (II): 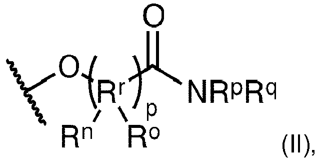
- einem Carbonsäurerest -O-C(O)-R^{f},
- einem Oximrest -O-N=CR⁹R^{h},
- einem Carbonsäureamidrest -N(Rⁱ)-C(O)-R^{j},
wobei
jeder R^{b} unabhängig voneinander H oder einen optional substituierten Kohlenwasserstoffrest mit 1 bis 20 Kohlenstoffatomen, insbesondere eine optional substituierte, geradkettige oder verzweigte C1- bis C16-Alkylgruppe oder eine optional substituierte C4- bis C14-Arylgruppe, bedeutet,
jeder R^{c} unabhängig voneinander H oder einen optional substituierten Kohlenwasserstoffrest mit 1 bis 20 Kohlenstoffatomen, insbesondere eine optional substituierte, geradkettige oder verzweigte C1- bis C16-Alkylgruppe oder eine optional substituierte C4- bis C14-Arylgruppe, bedeutet,
R^{d} einen optional substituierten Kohlenwasserstoffrest mit 1 bis 20 Kohlenstoffatomen, insbesondere eine optional substituierte, geradkettige oder verzweigte C1- bis C16-Alkylgruppe, eine optional substituierte C4- bis C14-Cycloalkylgruppe, eine optional substituierte C5- bis C15-Aralkylgruppe oder eine optional substituierte C4- bis C14-Arylgruppe, bedeutet,
R^{e} C oder einen optional substituierten Kohlenwasserstoffrest mit 1 bis 20 Kohlenstoffatomen, insbesondere ein optional substituiertes gesättigtes oder teilweise ungesättigtes cyclisches Ringsystem mit 4 bis 14 C-Atomen oder eine optional substituierte aromatische Gruppe mit 4 bis 14 C-Atomen, bedeutet, und
n eine ganze Zahl von 1 bis 10 ist;
   wobei
jeder Rⁿ unabhängig voneinander H oder einen optional substituierten Kohlenwasserstoffrest mit 1 bis 20 Kohlenstoffatomen, insbesondere eine optional substituierte, geradkettige oder verzweigte C1- bis C16-Alkylgruppe oder eine optional substituierte C4- bis C14-Arylgruppe, bedeutet,
jeder R° unabhängig voneinander H oder einen optional substituierten Kohlenwasserstoffrest mit 1 bis 20 Kohlenstoffatomen, insbesondere eine optional substituierte, geradkettige oder verzweigte C1- bis C16-Alkylgruppe oder eine optional substituierte C4- bis C14-Arylgruppe, bedeutet,
R^{p} und R^{q} unabhängig voneinander H oder einen optional substituierten Kohlenwasserstoffrest mit 1 bis 20 Kohlenstoffatomen, insbesondere eine optional substituierte, geradkettige oder verzweigte C1- bis C16-Alkylgruppe, eine optional substituierte C4- bis C14-Cycloalkylgruppe, eine optional substituierte C5- bis C15-Aralkylgruppe oder eine optional substituierte C4- bis C14-Arylgruppe, bedeutet,
R^{r} C oder einen optional substituierten Kohlenwasserstoffrest mit 1 bis 20 Kohlenstoffatomen, insbesondere ein optional substituiertes gesättigtes oder teilweise ungesättigtes cyclisches Ringsystem mit 4 bis 14 C-Atomen oder eine optional substituierte aromatische Gruppe mit 4 bis 14 C-Atomen, bedeutet, und
p eine ganze Zahl von 1 bis 10 ist;
   wobei
R^{f} H oder einen optional substituierten Kohlenwasserstoffrest mit 1 bis 20 Kohlenstoffatomen, insbesondere eine optional substituierte, geradkettige oder verzweigte C1- bis C16-Alkylgruppe, eine optional substituierte C4- bis C14-Cycloalkylgruppe oder eine optional substituierte C4- bis C14-Arylgruppe oder eine optional substituierte C5- bis C15-Aralkylgruppe, bedeutet;
   wobei
R^{g} und R^{h} unabhängig voneinander H oder einen optional substituierten Kohlenwasserstoffrest mit 1 bis 20 Kohlenstoffatomen, insbesondere eine optional substituierte, geradkettige oder verzweigte C1- bis C16-Alkylgruppe, eine optional substituierte C4- bis C14-Cycloalkylgruppe oder eine optional substituierte C4- bis C14-Arylgruppe oder eine optional substituierte C5- bis C15-Aralkylgruppe, bedeuten;
   und wobei
Rⁱ H oder einen optional substituierten Kohlenwasserstoffrest mit 1 bis 20 Kohlenstoffatomen, insbesondere eine optional substituierte, geradkettige oder verzweigte C1- bis C16-Alkylgruppe, eine optional substituierte C4- bis C14-Cycloalkylgruppe oder eine optional substituierte C4- bis C14-Arylgruppe oder eine optional substituierte C5- bis C15-Aralkylgruppe, bedeutet und R^{j} H oder einen optional substituierten Kohlenwasserstoffrest mit 1 bis 20 Kohlenstoffatomen, insbesondere eine optional substituierte, geradkettige oder verzweigte C1- bis C16-Alkylgruppe, eine optional substituierte C4- bis C14-Cycloalkylgruppe oder eine optional substituierte C4- bis C14-Arylgruppe oder eine optional substituierte C5- bis C15-Aralkylgruppe, bedeutet.

In einer bevorzugten Ausführungsform weist der Vernetzer Reste R auf, wobei jeder R unabhängig voneinander eine optional substituierte, geradkettige oder verzweigte C1- bis C12-Alkylgruppe, insbesondere eine optional substituierte, geradkettige oder verzweigte C1- bis C8-Alkylgruppe, oder eine optional substituierte, geradkettige oder verzweigte C2- bis C12-Alkenylgruppe, insbesondere eine optional substituierte, geradkettige oder verzweigte C2- bis C8-Alkenylgruppe, oder eine optional substituierte C4- bis C10-Arylgruppe bedeutet.

In einer besonders bevorzugten Ausführungsform ist jeder Rest R des Vernetzers der allgemeinen Formel Si(R)ₘ(R^{a})₄₋ₘ unabhängig voneinander ein Methyl-, Ethyl-, Propyl-, Vinyl-, Phenyl- oder ein Allylrest.

In einer Ausführungsform ist im Hydroxycarbonsäureesterrest des Vernetzers jeder R^{b} und R^{c} unabhängig voneinander eine optional substituierte, geradkettige oder verzweigte C1- bis C12-Alkylgruppe, insbesondere eine optional substituierte, geradkettige oder verzweigte C1- bis C8-Alkylgruppe.

In einer bevorzugten Ausführungsform ist im Hydroxycarbonsäureesterrest des Vernetzers jeder R^{b} und R^{c} unabhängig voneinander ausgewählt ist aus der Gruppe bestehend aus H, Methyl-, Ethyl-, Propyl-, Isopropyl-, Butyl-, n-Butyl-, sec-Butyl-, iso-Butyl- und tert-Butyl-, insbesondere aus der Gruppe bestehend aus H und Methyl.

In einer Ausführungsform ist im Hydroxycarbonsäureesterrest des Vernetzters R^{d} eine optional substituierte, geradkettige oder verzweigte C1- bis C12-Alkylgruppe, insbesondere eine optional substituierte, geradkettige oder verzweigte C1- bis C8-Alkylgruppe, eine C4- bis C10-Cycloalkylgruppe, eine C5- bis C11-Aralkylgruppe oder eine C4- bis C10-Arylgruppe.

In einer bevorzugten Ausführungsform ist im Hydroxycarbonsäureesterrest des Vernetzers R^{d} ausgewählt aus der Gruppe bestehend aus Phenyl-, Tolyl-, Naphthyl-, Benzyl-, Cyclohexyl-, Methyl-, Ethyl-, Propyl-, Isopropyl-, Butyl-, n-Butyl-, sec-Butyl-, iso-Butyl-, tert-Butyl-, Pentyl-, n-Pentyl-, sec-Pentyl-, 3-Pentyl-, 2-Methylbutyl-, iso-Pentyl-, 3-Methylbut-2-yl-, 2-Methylbut-2-yl-, Neopentyl-, Hexyl-, Heptyl-, Octyl-, Ethylhexyl-, und 2-Ethylhexyl-.

In einer bevorzugten Ausführungsform ist im Hydroxycarbonsäureesterrest des Vernetzers R^{e} ein divalenter Benzolrest oder R^{e} C und R^{b} und R^{c} H oder R^{e} C und R^{b} H und R^{c} Methyl-.

In einer Ausführungsform ist im Hydroxycarbonsäureresterrest des Vernetzers n eine ganze Zahl von 1 bis 5, insbesondere von 1 bis 3, insbesondere 1.

In einer besonders bevorzugten Ausführungsform ist der Vernetzer mit Hydroxycarbonsäureesterrest Methyl-tris(ethylhexylsalicylato)-silan und/oder Propyl-tris(ethylhexylsalicylato)-silan.

In einer Ausführungsform ist in der erfindungsgemäßen Zusammensetzung im Hydroxycarbonsäureamidrest des Vernetzers jeder Rⁿ und R^{o} unabhängig voneinander H oder eine optional substituierte, geradkettige oder verzweigte C1-bis C12-Alkylgruppe, insbesondere eine optional substituierte, geradkettige oder verzweigte C1- bis C8-Alkylgruppe.

In einer bevorzugten Ausführungsform ist im Hydroxycarbonsäureamidrest des Vernetzers jeder Rⁿ und R^{o} unabhängig voneinander ausgewählt aus der Gruppe bestehend aus H, Methyl-, Ethyl-, Propyl-, Isopropyl-, Butyl-, n-Butyl-, sec-Butyl-, iso-Butyl- und tert-Butyl-, insbesondere aus der Gruppe bestehend aus H und Methyl.

In einer weiteren Ausführungsform sind im Hydroxycarbonsäureamidrest des Vernetzers R^{p} und R^{q} unabhängig voneinander H oder eine optional substituierte, geradkettige oder verzweigte C1- bis C12-Alkylgruppe, insbesondere eine optional substituierte, geradkettige oder verzweigte C1- bis C8-Alkylgruppe, oder eine optional substituierte C4- bis C14-Cycloalkylgruppe oder eine C5- bis C11-Aralkylgruppe oder eine C4- bis C10- Arylgruppe.

In einer bevorzugten Ausführungsform sind im Hydroxycarbonsäureamidrest des Vernetzers R^{p} und R^{q} unabhängig voneinander ausgewählt aus der Gruppe bestehend aus H, Phenyl-, Tolyl-, Naphthyl-, Benzyl-, Cyclohexyl-, Methyl-, Ethyl-, Propyl-, Isopropyl-, Butyl-, n-Butyl-, sec-Butyl-, iso-Butyl-, tert-Butyl-, Pentyl-, n-Pentyl-, sec-Pentyl-, 3-Pentyl-, 2-Methylbutyl-, iso-Pentyl-, 3-Methylbut-2-yl-, 2-Methylbut-2-yl-, Neopentyl-, Hexyl-, Heptyl-, Octyl-, Ethylhexyl-, und 2-Ethylhexyl-. In einer Ausführungsform ist im Hydroxycarbonsäureamidrest des Vernetzers R^{r} ein divalenter Benzolrest oder R^{r} C und Rⁿ und R^{o} H oder R^{r} C und Rⁿ H und R^{o} Methyl-.

In einer weiteren Ausführungsform ist im Hydroxycarbonsäureamidrest des Vernetzers p eine ganze Zahl von 1 bis 5, insbesondere von 1 bis 3, insbesondere 1.

In einer Ausführungsform ist im Carbonsäurerest des Vernetzers der erfindungsgemäßen Zusammensetzung R^{f} H oder eine optional substituierte, geradkettige oder verzweigte C1- bis C12-Alkylgruppe, eine optional substituierte C4- bis C10-Cycloalkylgruppe oder eine optional substituierte C4- bis C10-Arylgruppe oder eine optional substituierte C5- bis C11-Aralkylgruppe, insbesondere H oder eine optional substituierte, geradkettige oder verzweigte C1-bis C8-Alkylgruppe, eine optional substituierte C4- bis C8-Cycloalkylgruppe oder eine optional substituierte C4- bis C10-Arylgruppe oder eine optional substituierte C5- bis C11-Aralkylgruppe.

In einer bevorzugten Ausführungsform ist im Carbonsäurerest des Vernetzers R^{f} ausgewählt ist aus der Gruppe bestehend aus H, Phenyl-, Tolyl-, Naphthyl-, Benzyl-, Cyclohexyl-, Methyl-, Ethyl-, Propyl-, Isopropyl-, Butyl-, n-Butyl-, sec-Butyl-, iso-Butyl-, tert-Butyl-, Pentyl-, n-Pentyl-, sec-Pentyl-, 3-Pentyl-, 2-Methylbutyl-, iso-Pentyl-, 3-Methylbut-2-yl-, 2-Methylbut-2-yl-, Neopentyl-, Hexyl-, Heptyl-, Octyl-, Ethylhexyl-, und 2-Ethylhexyl-.

In einer besonders bevorzugten Ausführungsform ist der Vernetzer mit Carbonsäurerest Ethyltriacetoxysilan und/oder Methyltriacetoxysilan und/oder Propyltriacetoxysilan.

In einer weiteren Ausführungsform sind im Oximrest des Vernetzers gemäß der Erfindung R^{g} und R^{h} unabhängig voneinander H oder eine optional substituierte, geradkettige oder verzweigte C1- bis C12-Alkylgruppe, eine optional substituierte C4- bis C10-Cycloalkylgruppe oder eine optional substituierte C4- bis C10-Arylgruppe oder eine optional substituierte C5- bis C11-Aralkylgruppe, insbesondere H oder eine optional substituierte, geradkettige oder verzweigte C1-bis C8-Alkylgruppe, eine optional substituierte C4- bis C8-Cycloalkylgruppe oder eine optional substituierte C4- bis C10-Arylgruppe oder eine optional substituierte C5- bis C11-Aralkylgruppe.

In einer bevorzugten Ausführungsform sind im Oximrest der Vernetzers R^{g} und R^{h} unabhängig voneinander ausgewählt sind aus der Gruppe bestehend aus H, Phenyl-, Tolyl-, Naphthyl-, Benzyl-, Cyclohexyl-, Methyl-, Ethyl-, Propyl-, Isopropyl-, Butyl-, n-Butyl-, sec-Butyl-, iso-Butyl-, tert-Butyl-, Pentyl-, n-Pentyl-, sec-Pentyl-, 3-Pentyl-, 2-Methylbutyl-, iso-Pentyl-, 3-Methylbut-2-yl-, 2-Methylbut-2-yl-, Neopentyl-, Hexyl-, Heptyl-, Octyl-, Ethylhexyl-, und 2-Ethylhexyl-.

In einer besonders bevorzugten Ausführungsform handelt es sich bei dem Vernetzer mit Oximrest um Methyl-tris(2-pentanonoximo)silan und/oder Vinyl-tris(2-pentanonoximo)silan.

In einer Ausführungsform sind im Carbonsäureamidrest des Vernetzers gemäß der Erfindung Rⁱ und R^{j} unabhängig voneinander H oder eine optional substituierte, geradkettige oder verzweigte C1- bis C12-Alkylgruppe, eine optional substituierte C4- bis C10-Cycloalkylgruppe oder eine optional substituierte C4- bis C10-Arylgruppe oder eine optional substituierte C5- bis C11-Aralkylgruppe, insbesondere H oder eine optional substituierte, geradkettige oder verzweigte C1-bis C8-Alkylgruppe, eine optional substituierte C4- bis C8-Cycloalkylgruppe oder eine optional substituierte C4- bis C10-Arylgruppe oder eine optional substituierte C5- bis C11-Aralkylgruppe.

In einer bevorzugten Ausführungsform sind im Carbonsäureamidrest des Vernetzers Rⁱ und R^{j} unabhängig voneinander ausgewählt sind aus der Gruppe bestehend aus H, Phenyl-, Tolyl-, Naphthyl-, Benzyl-, Cyclohexyl-, Methyl-, Ethyl-, Propyl-, Isopropyl-, Butyl-, n-Butyl-, sec-Butyl-, iso-Butyl-, tert-Butyl-, Pentyl-, n-Pentyl-, sec-Pentyl-, 3-Pentyl-, 2-Methylbutyl-, iso-Pentyl-, 3-Methylbut-2-yl-, 2-Methylbut-2-yl-, Neopentyl-, Hexyl-, Heptyl-, Octyl-, Ethylhexyl-, und 2-Ethylhexyl-.

In einer besonders bevorzugten Ausführungsform ist der Vernetzer mit Carbonsäureamidrest Methylethoxy-bis(N-Methylbenzamido)silan.

In einer weiteren besonders bevorzugten Ausführungsform werden Mischungen der beschriebenen Vernetzer für die erfindungsgemäßen härtbaren Zusammensetzungen verwendet.

In einer weiteren besonders bevorzugten Ausführungsform trägt der Vernetzer verschiedene wie oben beschriebene Reste R^{a}.

Ferner betrifft die Erfindung Zusammensetzungen, die einen Haftvermittler enthalten.

Bevorzugte Haftvermittler für die Verwendung in erfindungsgemäßen Zusammensetzungen umfassen Organosilane mit einer oder mehreren reaktiven Amingruppen, Organosilane mit einer oder mehreren reaktiven Carbonsäuregruppen, Organosilane mit einer oder mehreren reaktiven Epoxygruppen oder Organosilane mit einer oder mehreren reaktiven Thiolgruppen oder Organosilane mit einer oder mehreren tertiären Amingruppen, Organosilane mit einer oder mehreren Harnstoffgruppen, Organosilane mit einer oder mehreren Amidgruppen, Organosilane mit einer oder mehreren Carbamatgruppen und Organosilane mit einer oder mehreren Isocyanuratgruppen, vorzugsweise können Mischungen aus den genannten Komponenten verwendet werden.
In einer weiteren bevorzugten Ausführungsform enthält die erfindungsgemäße Zusammensetzung einen Haftvermittler, wobei der Haftvermittler insbesondere ausgewählt ist aus der Gruppe bestehend aus Dibutoxy-diacetoxysilan, 3-Aminopropyltriethoxysilan, 3-Aminopropyltrimethoxysilan, Aminoethylaminopropyltrimethoxysilan, Butylaminopropyltriethoxysilan, Butylaminopropyltrimethoxysilan, Propylaminopropyltriethoxysilan, Propylaminopropyltrimethoxysilan, N-Cyclohexyl-3-aminopropyltrimethoxysilan, N-Cyclohexyl-3-aminopropyltriethoxysilan, Diethylaminopropyltrimethoxysilan, Dipropylaminopropyltrimethoxysilan, Dibutylaminopropyltrimethoxysilan, Trimethoxypropylsilylacetoxypropionsäureamid, N, N'-Bis(trimethoxysilylpropyl)harnstoff, N,N'-Bis(triethoxysilylpropyl)harnstoff, Tris(triethoxysilylpropyl)diethylentriharnstoff, Dimethylaminopropyltrimethoxysilan, 1,3,5-Tris(trimethoxysilylpropyl)-isocyanurat, N-Methyl(3-Trimethoxysilyl)-propyl)-carbamat, N-Ethyl(3-Triethoxysilyl)-propyl)-carbamat und Mischungen davon , und N-(2-Aminoethyl)-3-aminopropyltrimethoxysilan, welches als Dynasylan DAMO von Evonik erhältlich ist.

In einer besonders bevorzugten Ausführungsform werden bestimmte Kombinationen an Haftvermittler und Vernetzer für die erfindungsgemäßen Zusammensetzungen gewählt. Hierbei haben sich die folgenden Kombinationen als vorteilhaft erwiesen:
- Kombination aus Vernetzern mit Hydroxycarbonsäureesterresten bzw. Hydroxycarbonsäureamidresten und "nicht-aminischen Haftvermittlern" (nichtaminisch wie hierin verwendet bedeutet keine primären und sekundären Amingruppen) mit tertiären Amin-, Harnstoff-, Amid-, Carbamat- oder Isocyanuratgruppen. Konkrete Beispiele solcher Haftmittel (Haftvermittler) sind N,N'-Bis(triethoxysilylpropyl)harnstoff,Tris(triethoxysilylpropyl)diethylentriharnstoff, Dimethylaminopropyltrimethoxysilan, 1,3,5-Tris(trimethoxysilylpropyl)-isocyanurat, N-Methyl(3-Trimethoxysilyl)-propyl)-carbamat und N-Ethyl(3-Triethoxysilyl)-propyl)-carbamat.
- Kombination aus Vernetzern mit Carbonsäureresten und Di-tertbutoxydiacetoxysilan (BDAC, CAS 13170-23-5)
- Kombination aus Vernetzern mit Oximresten und handelsüblichen Aminosilanenenthaltend, aber nicht beschränkt auf, 3-Aminopropyltriethoxysilan (AMEO), 3-Aminopropyltrimethoxysilan (AMMO) und Aminoethylaminopropyltrimethoxysilan.
- Kombination aus Vernetzern mit Carbonsäureamidresten und handelsüblichen Aminosilanenenthaltend, aber nicht beschränkt auf, 3-Aminopropyltriethoxysilan (AMEO), 3-Aminopropyltrimethoxysilan (AMMO) und Aminoethylaminopropyltrimethoxysilan.

Im Sinne der Erfindung können die härtbaren Zusammensetzungen optional durch Zugabe von üblichen Additiven, wie Weichmacher, Füllstoffe, Farbmittel, Thixotropiermittel, Benetzungsmittel oder UV-Stabilisatoren, hinsichtlich ihrer Eigenschaften modifiziert werden.
In einer bevorzugten Ausführungsform werden Polyalkylsiloxane, besonders bevorzugt Polydimethylsiloxan als Weichmacher eingesetzt.
In einer weiteren bevorzugten Ausführungsform wird der härtbaren Zusammensetzung Kieselsäure als Füllstoff, besonders bevorzugt pyrogenes Siliziumdioxid auch als pyrogene Kieselsäure bezeichnet, zugegeben.

In einer Ausführungsform betrifft die Erfindung Zusammensetzungen, welche erhältlich sind durch Vermischen mindestens eines M3S-Katalysators, mindestens einer Silikonverbindung mit der allgemeinen Formel HO-(SiR^{l}R^{m}O)ₒ-H, gemäß Anspruch 1 und mindestens eines Vernetzers mit der allgemeinen Formel Si(R)ₘ(R^{a})₄₋ₘ, gemäß Anspruch 1.

In einer Ausführungsform ist die erfindungsgemäße Zusammensetzung erhältlich durch Vermischen mindestens eines Metallsilsequioxans gemäß der Strukturformel V; mindestens einer Silikonverbindungen HO-(SiR^{l}R^{m}O)ₒ-H, wobei R^{l} und R^{m} unabhängig voneinander ausgewählt sind aus der Gruppe bestehend aus Methyl-, Ethyl-, Propyl-, Butyl-, Trifluormethyl-, Vinyl-, Allyl-, Butenyl-, Phenyl- und Naphthyl-; und mindestens eines Vernetzers ausgewählt aus der Gruppe bestehend aus Methyl-tris(ethylhexylsalicilato)-silan, Propyl-tris(ethylhexylsalicilato)-silan, Ethyltriacetoxysilan, Methyltriacetoxysilan, Propyltriacetoxysilan, Methyl-tris(2-pentanonoximo)silan, Vinyl-tris(2-pentanonoximo)silan, Methylethoxy-bis(N-Methylbenzamido)silan und/oder Mischungen davon.

In einer Ausführungsform ist die erfindungsgemäße Zusammensetzung erhältlich durch Vermischen mindestens eines Metallsilsequioxans gemäß der Strukturformel VI; mindestens einer Silikonverbindungen HO-(SiR^{l}R^{m}O)ₒ-H, wobei R^{l} und R^{m} unabhängig voneinander ausgewählt sind aus der Gruppe bestehend aus Methyl-, Ethyl-, Propyl-, Butyl-, Trifluormethyl-, Vinyl-, Allyl-, Butenyl-, Phenyl- und Naphthyl-; und mindestens eines Vernetzers ausgewählt aus der Gruppe bestehend aus Methyl-tris(ethylhexylsalicilato)-silan, Propyl-tris(ethylhexylsalicilato)-silan, Ethyltriacetoxysilan, Methyltriacetoxysilan, Propyltriacetoxysilan, Methyl-tris(2-pentanonoximo)silan, Vinyl-tris(2-pentanonoximo)silan, Methylethoxy-bis(N-Methylbenzamido)silan und/oder Mischungen davon.

In einer Ausführungsform ist die erfindungsgemäße Zusammensetzung erhältlich durch Vermischen mindestens eines Metallsilsequioxans gemäß der Strukturformel VII; mindestens einer Silikonverbindungen HO-(SiR^{l}R^{m}O)ₒ-H, wobei R^{l} und R^{m} unabhängig voneinander ausgewählt sind aus der Gruppe bestehend aus Methyl-, Ethyl-, Propyl-, Butyl-, Trifluormethyl-, Vinyl-, Allyl-, Butenyl-, Phenyl- und Naphthyl-; und mindestens eines Vernetzers ausgewählt aus der Gruppe bestehend aus Methyl-tris(ethylhexylsalicilato)-silan, Propyl-tris(ethylhexylsalicilato)-silan, Ethyltriacetoxysilan, Methyltriacetoxysilan, Propyltriacetoxysilan, Methyl-tris(2-pentanonoximo)silan, Vinyl-tris(2-pentanonoximo)silan, Methylethoxy-bis(N-Methylbenzamido)silan und/oder Mischungen davon.

In einer Ausführungsform ist die erfindungsgemäße Zusammensetzung erhältlich durch Vermischen von Octyl-POSS-Ti-OEt; mindestens einer Silikonverbindungen HO-(SiR^{l}R^{m}O)ₒ-H, wobei R^{l} und R^{m} unabhängig voneinander ausgewählt sind aus der Gruppe bestehend aus Methyl-, Ethyl-, Propyl-, Butyl-, Trifluormethyl-, Vinyl-, Allyl-, Butenyl-, Phenyl- und Naphthyl-; und mindestens eines Vernetzers ausgewählt aus der Gruppe bestehend aus Methyl-tris(ethylhexylsalicilato)-silan, Propyl-tris(ethylhexylsalicilato)-silan, Ethyltriacetoxysilan, Methyltriacetoxysilan, Propyltriacetoxysilan, Methyl-tris(2-pentanonoximo)silan, Vinyl-tris(2-pentanonoximo)silan, Methylethoxy-bis(N-Methylbenzamido)silan und/oder Mischungen davon.

In einer bevorzugten Ausführungsform ist die erfindungsgemäße Zusammensetzung erhältlich durch Vermischen mindestens eines Metallsilsequioxans gemäß der Strukturformel V; mindestens einer Silikonverbindungen HO-(SiR^{l}R^{m}O)ₒ-H, wobei die Silikonverbindung α,ω-Dihydroxy-dimethyl-polysiloxan ist; und mindestens eines Vernetzers ausgewählt aus der Gruppe bestehend aus Methyl-tris(ethylhexylsalicilato)-silan, Propyl-tris(ethylhexylsalicilato)-silan, Ethyltriacetoxysilan, Methyltriacetoxysilan, Propyltriacetoxysilan, Methyl-tris(2-pentanonoximo)silan, Vinyl-tris(2-pentanonoximo)silan, Methylethoxy-bis(N-Methylbenzamido)silan und/oder Mischungen davon.

In einer bevorzugten Ausführungsform ist die erfindungsgemäße Zusammensetzung erhältlich durch Vermischen mindestens eines Metallsilsequioxans gemäß der Strukturformel VI; mindestens einer Silikonverbindungen HO-(SiR^{l}R^{m}O)ₒ-H, wobei die Silikonverbindung α,ω-Dihydroxy-dimethyl-polysiloxan ist; und mindestens eines Vernetzers ausgewählt aus der Gruppe bestehend aus Methyl-tris(ethylhexylsalicilato)-silan, Propyl-tris(ethylhexylsalicilato)-silan, Ethyltriacetoxysilan, Methyltriacetoxysilan, Propyltriacetoxysilan, Methyl-tris(2-pentanonoximo)silan, Vinyl-tris(2-pentanonoximo)silan, Methylethoxy-bis(N-Methylbenzamido)silan und/oder Mischungen davon.

In einer bevorzugten Ausführungsform ist die erfindungsgemäße Zusammensetzung erhältlich durch Vermischen mindestens eines Metallsilsequioxans gemäß der Strukturformel VII; mindestens einer Silikonverbindungen HO-(SiR^{l}R^{m}O)ₒ-H, wobei die Silikonverbindung α,ω-Dihydroxy-dimethyl-polysiloxan ist; und mindestens eines Vernetzers ausgewählt aus der Gruppe bestehend aus Methyl-tris(ethylhexylsalicilato)-silan, Propyl-tris(ethylhexylsalicilato)-silan, Ethyltriacetoxysilan, Methyltriacetoxysilan, Propyltriacetoxysilan, Methyl-tris(2-pentanonoximo)silan, Vinyl-tris(2-pentanonoximo)silan, Methylethoxy-bis(N-Methylbenzamido)silan und/oder Mischungen davon.

In einer bevorzugten Ausführungsform ist die erfindungsgemäße Zusammensetzung erhältlich durch Vermischen von Octyl-POSS-Ti-OEt; mindestens einer Silikonverbindungen HO-(SiR^{l}R^{m}O)ₒ-H, wobei die Silikonverbindung α,ω-Dihydroxy-dimethyl-polysiloxan ist; und mindestens eines Vernetzers ausgewählt aus der Gruppe bestehend aus Methyl-tris(ethylhexylsalicilato)-silan, Propyl-tris(ethylhexylsalicilato)-silan, Ethyltriacetoxysilan, Methyltriacetoxysilan, Propyltriacetoxysilan, Methyl-tris(2-pentanonoximo)silan, Vinyl-tris(2-pentanonoximo)silan, Methylethoxy-bis(N-Methylbenzamido)silan und/oder Mischungen davon.

In einer Ausführungsform ist in der erfindungsgemäßen Zusammensetzung das Molverhältnis von Vernetzer der allgemeinen Formel Si(R)ₘ(R^{a})₄₋ₘ zu M3S-Katalysator 20 bis 2000, bevorzugt 100 bis 2000 und besonders bevorzugt 125 bis 2000.

In einer bevorzugten Ausführungsform der erfindungsgemäßen Zusammensetzung ist das Molverhältnis von Vernetzer der allgemeinen Formel Si(R)ₘ(R^{a})₄₋ₘ mit R^{a} als Carbonsäurerest zu einem Katalysator gemäß Formel V 300 bis 1500, bevorzugt 400 bis 1300 und besonders bevorzugt 1000 bis 1500.

In einer bevorzugten Ausführungsform der erfindungsgemäßen Zusammensetzung ist das Molverhältnis von Vernetzer der allgemeinen Formel Si(R)ₘ(R^{a})₄₋ₘ mit R^{a} als Carbonsäurerest zu einem Katalysator gemäß Formel VI 300 bis 1500, bevorzugt 400 bis 1300 und besonders bevorzugt 1000 bis 1500.

In einer besonders bevorzugten Ausführungsform der erfindungsgemäßen Zusammensetzung ist das Molverhältnis von Vernetzer der allgemeinen Formel Si(R)ₘ(R^{a})₄₋ₘ mit R^{a} als Carbonsäurerest zu einem Katalysator gemäß Formel VII 300 bis 1500, bevorzugt 400 bis 1300 und besonders bevorzugt 1000 bis 1500.

In einer Ausführungsform der erfindungsgemäßen Zusammensetzung ist das Molverhältnis von Vernetzer der allgemeinen Formel Si(R)ₘ(R^{a})₄₋ₘ mit R^{a} als Oximrest zu einem Katalysator gemäß Formel V 100 bis 2000, bevorzugt 125 bis 2000 und besonders bevorzugt 150 bis 2000.

In einer bevorzugten Ausführungsform der erfindungsgemäßen Zusammensetzung ist das Molverhältnis von Vernetzer der allgemeinen Formel Si(R)ₘ(R^{a})₄₋ₘ mit R^{a} als Oximrest zu einem Katalysator gemäß Formel VI 100 bis 2000, bevorzugt 125 bis 2000 und besonders bevorzugt 150 bis 2000.

In einer besonders bevorzugten Ausführungsform der erfindungsgemäßen Zusammensetzung ist das Molverhältnis von Vernetzer der allgemeinen Formel Si(R)ₘ(R^{a})₄₋ₘ mit R^{a} als Oximrest zu einem Katalysator gemäß Formel VII 100 bis 2000, bevorzugt 125 bis 2000 und besonders bevorzugt 125 bis 2000.

In einer Ausführungsform weist die erfindungsgemäße Zusammensetzung nach Aushärtung eine Reißdehnung nach DIN 53504 von 450 bis 1300% aus, bevorzugt von 500 bis 1300% und besonders bevorzugt von 700 bis 1300%.
In einer Ausführungsform weist die erfindungsgemäße Zusammensetzung nach Aushärtung eine Reißdehnung nach DIN 8339 von 210% bis 1300% aus, bevorzugt von 500 bis 1300% und besonders bevorzugt von 700 bis 1300%.

Ferner betrifft die Erfindung Dichtstoffe erhältlich durch Aushärten einer Zusammensetzung enthaltend
i. mindestens eine Silikonverbindung mit der allgemeinen Formel HO-(SiR^{l}R^{m}O)ₒ-H, wobei o und die Reste R^{l} und R^{m} gemäß Anspruch 1 definiert sind,
ii. einen Katalysator, wobei der Katalysator mindestens eine M3S-Verbindung enthält, und
iii. mindestens einen Vernetzer mit der allgemeinen Formel Si(R)ₘ(R^{a})₄₋ₘ, wobei m und die Reste R und R^{a} gemäß Anspruch 1 definiert sind.

Ferner betrifft die Erfindung die Verwendung einer Metall-Siloxan-Silanol(-at)-Verbindung, als Katalysator zur Vernetzung einer Zusammensetzung enthaltend eine Silikonverbindung mit der allgemeinen Formel HO-(SiR^{l}R^{m}O)ₒ-H, wobei o und die Reste R^{l} und R^{m}, wobei die jeweiligen Parameter definiert sind wie bereits beschrieben.

Ferner betrifft die Erfindung ein Verfahren zur Herstellung einer Zusammensetzung, wobei dieses folgende Verfahrensschritte umfassend
a. Bereitstellen einer Zusammensetzung enthaltend
   i. mindestens eine Silikonverbindung mit der allgemeinen Formel HO-(SiR^{l}R^{m}O)ₒ-H, wobei o und die Reste R^{l} und R^{m} gemäß Anspruch 1 definiert sind,
   ii. einen Katalysator, wobei der Katalysator mindestens eine M3S-Verbindung enthält, und
   iii. mindestens einen Vernetzer mit der allgemeinen Formel Si(R)ₘ(R^{a})₄₋ₘ, wobei m und die Reste R und R^{a} gemäß Anspruch 1 definiert sind,
b. Vermischen der in a. bereitgestellten Zusammensetzung unter Einsatz von mechanischer und/oder thermischer Energie.

Die erfindungsgemäßen Zusammensetzungen zeichnen sich aus durch eine verbesserte katalytische Aktivität oder Effizienz des Katalysators.

Die erfindungsgemäßen Zusammensetzungen zeichnen sich aus durch eine verbesserte katalytische Aktivität oder Effizienz der M3S-Verbindung als Katalysator.

Die erfindungsgemäßen Zusammensetzungen zeichnen sich aus durch eine verbesserte katalytische Aktivität oder Effizienz des Katalysators, wobei die Verwendung von Zinnverbindungen vermieden werden kann.

Die erfindungsgemäßen Zusammensetzungen zeichnen sich aus durch eine verbesserte katalytische Aktivität oder Effizienz des Katalysators, was den Einsatz von vergleichsweise geringen Mengen (in Gewichtsanteilen bzw. Mol pro Kilogramm Dichtstoff) an Katalysator erlaubt.

Die im Rahmen der vorliegenden Erfindung eingesetzten M3S-Verbindungen sowie deren Herstellung sind dem Fachmann aus herkömmlichen Silikonharz-Herstellungsverfahren bekannt. Silikonharze entstehen beispielsweise durch die kontrollierte Hydrolyse von Silanverbindungen mit hydrolysierbaren Abgangsgruppen und anschließender Kondensationsreaktion (vgl. z.B. B. Tieke, Makromolekulare Chemie: Eine Einführung, zweite vollständig überarbeitete und erweiterte Auflage, Kapitel 2.1.8.5 Silikonharze). Die Anzahl der hydrolysierbaren Abgangsgruppen des Silans sowie das Molverhältnis von Wasser zu Silan bestimmen den Vernetzungs- und Polymerisationsgrad der Silikonharze. Durch Zugabe von Metallalkoholaten werden diese in die oligomere oder polymere Silikonverbindung eingebaut (vgl. hierzu WO 2015114050 A1). Auch allgemeine Herstellungsverfahren von (Metall-)Silsesquioxanen sind aus der Literatur bekannt (siehe z.B. P. G. Harrison, J. Organomet. Chem. 1997, 542, 141; J. D. Lichtenhan, Comments Inorg. Chem. 1995, 17, 115; R. Murugavel, A. Voigt, M. G. Walawalkar, H. W. Roesky, Chem. Rev. 1996, 96, 2205; WO 01/10871 A1; WO 07/041344 A8)

### Allgemeine Herstellungsverfahren

### Synthese von [Ti(POSS)1.5] als 5 Gew.% Masterbatch in polyol mit Titanisopropoxid

Zu einer Lösung von Isobutyltrisilanol-POSS (47 g, 59 mmol) in 190 mL Toluol wird Titanisopropoxid (12 mL, 44 mmol) gegeben. Das Reaktionsgemisch wird für 60 - 180 Minuten auf 50 - 67 °C erhitzt. Anschließend wird Daltocel F 428 (950 g) zu der Reaktionsmischung gegeben. Entfernen des Lösemittels Toluol bei 80 °C - 150 °C für weitere 30 - 80 Minuten liefert eine klare Flüssigkeit ohne unlösliche Rückstände als Konzentrat (Masterbatch).

Neben Toluol können übliche aprotische Lösemittel, wie Hexan eingesetzt werden. Weiterhin kann optional die Menge an Titanpropoxid variiert werden, um weitere Verhältnisse von POSS und Titan zu erhalten. Der Lösemittelaustausch kann auch unter vermindertem Druck erfolgen.

Sofern nicht anders beschrieben, handelt es sich bei den genannten Angaben in den Beispielen um Gewichtsprozente der einzelnen Komponenten.

### Synthese von [Ti(POSS)1.5] als 5 Gew.% Masterbatch in polyol mit Tetraethylorthotitanat

Zu einer Lösung von Isobutyltrisilanol-POSS (47 g, 59 mmol) in 190 mL Toluol wird Tetraethylorthotitanat (44 mmol) gegeben. Das Reaktionsgemisch wird für 60 - 180 Minuten auf 50 - 67 °C erhitzt. Anschließend wird Daltocel F 428 (950 g) zu der Reaktionsmischung gegeben. Entfernen des Lösemittels Toluol bei 80 °C - 150 °C für weitere 30 - 80 Minuten liefert eine klare Flüssigkeit ohne unlösliche Rückstände als Konzentrat (Masterbatch).

Neben Toluol können übliche aprotische Lösemittel, wie Hexan eingesetzt werden. Weiterhin kann optional die Menge an Titanpropoxid variiert werden, um weitere Verhältnisse von POSS und Titan zu erhalten. Der Lösemittelaustausch kann auch unter vermindertem Druck erfolgen.

Sofern nicht anders beschrieben, handelt es sich bei den genannten Angaben in den Beispielen um Gewichtsprozente der einzelnen Komponenten

### Beispiel 1

α,ω-Dihydroxypolyorganosiloxan (30 - 70 Gew. %), wobei diese ausgewählt sind aus α,ω-dihydroxyl-terminierten Polydimethylsiloxane, α,ω-dihydroxyl-terminierten Polydiethylsiloxane oder α,ω-dihydroxyl-terminierten Polydivinylsiloxane, sowie α,ω-dihydroxyl-terminierte Polydiarylsiloxane, wie z.B. α,ω-dihydroxyl-terminierten Polydiphenylsiloxane. Dabei sind Polyorganosiloxane bevorzugt, die eine kinematische Viskosität von 5.000 bis 120.000 cSt (bei 25°C) haben, insbesondere solche mit einer Viskosität von 20.000 bis 100.000 cSt, und besonders bevorzugt solche mit einer Viskosität von 40.000 bis 90.000 cSt. Es können auch Mischungen aus Polydiorganosiloxanen mit unterschiedlichen Viskositäten verwendet werden, Polydialkylsiloxan 50 - 150 cSt (15 - 45 Gew.%), ein Vernetzer enthaltend mindestens ein Silan (0,5 - 4,5 Gew.%) und/oder ein Gemisch aus mindestens zwei Silanen (0,5 - 9 Gew.%), der allgemeinen Formel Si(R)ₘ(R^{a})₄₋ₘ wurden unter Vakuum gemischt. Danach wurde optional ein Füllstoff, bevorzugt Kieselsäure (5 - 15 Gew.%) eindispergiert und solange unter Vakuum gerührt, bis die Masse glatt ist. Anschließend wurden 0,001 - 0,5 Gew.% eines Metallsilsesquioxans gemäß Anspruch 10 und optional ein wie oben beschriebener Haftvermittler (0,5 - 2 Gew.%), unter Vakuum eingemischt.

| | **Komponente** | **Gew**.**-%** |
|---|---|---|
| 1 | α,ω-Dihydroxypolyorganosiloxan 20.000 - 80.000 cSt | 30 - 70 |
| 2 | Polyalkylsiloxane 50-150 cSt | 15 - 45 |
| 3 | Vernetzer 1 | 0,5 - 4,5 |
| 4 | Vernetzer 2 | 0,5 - 4,5 |
| 5 | Füllstoff | 5 - 15 |
| 6 | Haftvermittler | 0,5 - 2 |
| 7 | M3S-Katalysator | 0,001 - 0.5 |

### Beispiel 2

α,ω-Dihydroxy-dimethyl-polysiloxan 80.000 cSt (30 - 70 Gew. %), Polydimethylsiloxan 100 cSt (15 - 45 Gew.%), ein Vernetzer enthaltend mindestens ein Silan (0,5 - 4,5 Gew.%) und/oder ein Gemisch aus mindestens zwei Silanen (0,5 - 9 Gew.%), der allgemeinen Formel Si(R)ₘ(R^{a})₄₋ₘ, wobei jeder R^{a} unabhängig voneinander ausgewählt ist aus der Gruppe bestehend aus
- einem Hydroxycarbonsäureesterrest mit der allgemeinen Strukturformel (I): 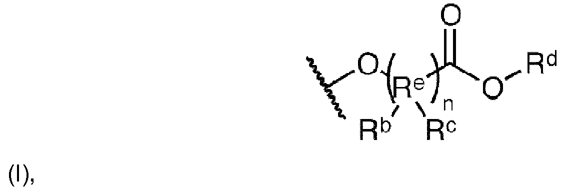 wobei
   jeder R^{b} unabhängig voneinander H oder einen optional substituierten Kohlenwasserstoffrest mit 1 bis 20 Kohlenstoffatomen, insbesondere eine optional substituierte, geradkettige oder verzweigte C1- bis C16-Alkylgruppe oder eine optional substituierte C4- bis C14-Arylgruppe, bedeutet,
   jeder R^{c} unabhängig voneinander H oder einen optional substituierten Kohlenwasserstoffrest mit 1 bis 20 Kohlenstoffatomen, insbesondere eine optional substituierte, geradkettige oder verzweigte C1- bis C16-Alkylgruppe oder eine optional substituierte C4- bis C14-Arylgruppe, bedeutet,
   R^{d} einen optional substituierten Kohlenwasserstoffrest mit 1 bis 20 Kohlenstoffatomen, insbesondere eine optional substituierte, geradkettige oder verzweigte C1- bis C16-Alkylgruppe, eine optional substituierte C4- bis C14-Cycloalkylgruppe, eine optional substituierte C5- bis C15-Aralkylgruppe oder eine optional substituierte C4- bis C14-Arylgruppe, bedeutet,
   R^{e} C oder einen optional substituierten Kohlenwasserstoffrest mit 1 bis 20 Kohlenstoffatomen, insbesondere ein optional substituiertes gesättigtes oder teilweise ungesättigtes cyclisches Ringsystem mit 4 bis 14 C-Atomen oder eine optional substituierte aromatische Gruppe mit 4 bis 14 C-Atomen, bedeutet, und
   n eine ganze Zahl von 1 bis 10 ist,
- einem Hydroxycarbonsäureamidrest mit der allgemeinen Strukturformel (II): 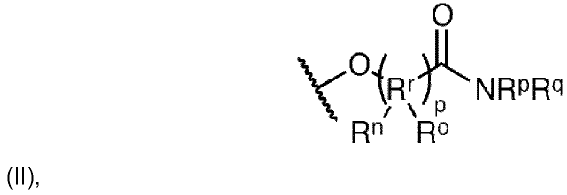 wobei
   jeder Rⁿ unabhängig voneinander H oder einen optional substituierten Kohlenwasserstoffrest mit 1 bis 20 Kohlenstoffatomen, insbesondere eine optional substituierte, geradkettige oder verzweigte C1- bis C16-Alkylgruppe oder eine optional substituierte C4- bis C14-Arylgruppe, bedeutet,
   jeder R^{o} unabhängig voneinander H oder einen optional substituierten Kohlenwasserstoffrest mit 1 bis 20 Kohlenstoffatomen, insbesondere eine optional substituierte, geradkettige oder verzweigte C1- bis C16-Alkylgruppe oder eine optional substituierte C4- bis C14-Arylgruppe, bedeutet,
   R^{p} und R^{q} unabhängig voneinander H oder einen optional substituierten Kohlenwasserstoffrest mit 1 bis 20 Kohlenstoffatomen, insbesondere eine optional substituierte, geradkettige oder verzweigte C1- bis C16-Alkylgruppe, eine optional substituierte C4- bis C14-Cycloalkylgruppe, eine optional substituierte C5- bis C15-Aralkylgruppe oder eine optional substituierte C4- bis C14-Arylgruppe, bedeutet,
   R^{r} C oder einen optional substituierten Kohlenwasserstoffrest mit 1 bis 20 Kohlenstoffatomen, insbesondere ein optional substituiertes gesättigtes oder teilweise ungesättigtes cyclisches Ringsystem mit 4 bis 14 C-Atomen oder eine optional substituierte aromatische Gruppe mit 4 bis 14 C-Atomen, bedeutet, und
   p eine ganze Zahl von 1 bis 10 ist,
- einem Carbonsäurerest -O-C(O)-R^{f}, wobei R^{f} H oder einen optional substituierten Kohlenwasserstoffrest mit 1 bis 20 Kohlenstoffatomen, insbesondere eine optional substituierte, geradkettige oder verzweigte C1- bis C16-Alkylgruppe, eine optional substituierte C4- bis C14-Cycloalkylgruppe oder eine optional substituierte C4- bis C14-Arylgruppe oder eine optional substituierte C5- bis C15-Aralkylgruppe, bedeutet,
- einem Oximrest -O-N=CR^{g}R^{h}, wobei R^{g} und R^{h} unabhängig voneinander H oder einen optional substituierten Kohlenwasserstoffrest mit 1 bis 20 Kohlenstoffatomen, insbesondere eine optional substituierte, geradkettige oder verzweigte C1- bis C16-Alkylgruppe, eine optional substituierte C4- bis C14-Cycloalkylgruppe oder eine optional substituierte C4- bis C14-Arylgruppe oder eine optional substituierte C5- bis C15-Aralkylgruppe, bedeuten,
- einem Carbonsäureamidrest -N(Rⁱ)-C(O)-R^{j}, wobei Rⁱ H oder einen optional substituierten Kohlenwasserstoffrest mit 1 bis 20 Kohlenstoffatomen, insbesondere eine optional substituierte, geradkettige oder verzweigte C1- bis C16-Alkylgruppe, eine optional substituierte C4- bis C14-Cycloalkylgruppe oder eine optional substituierte C4- bis C14-Arylgruppe oder eine optional substituierte C5- bis C15-Aralkylgruppe, bedeutet und R^{j} H oder einen optional substituierten Kohlenwasserstoffrest mit 1 bis 20 Kohlenstoffatomen, insbesondere eine optional substituierte, geradkettige oder verzweigte C1- bis C16-Alkylgruppe, eine optional substituierte C4- bis C14-Cycloalkylgruppe oder eine optional substituierte C4- bis C14-Arylgruppe oder eine optional substituierte C5- bis C15-Aralkylgruppe, bedeutet, und
- einem Alkoxyrest -OR^{k}, wobei R^{k} einen optional substituierten Kohlenwasserstoffrest mit 1 bis 20 Kohlenstoffatomen, insbesondere eine optional substituierte, geradkettige oder verzweigte C1- bis C16-Alkylgruppe, eine optional substituierte C4- bis C14-Cycloalkylgruppe oder eine optional substituierte C4- bis C14-Arylgruppe oder eine optional substituierte C5- bis C15-Arylgruppe, bedeutet, wurden unter Vakuum gemischt. Danach wurde optional ein Füllstoff, bevorzugt Kieselsäure (5 - 15 Gew.%) eindispergiert und solange unter Vakuum gerührt, bis die Masse glatt war. Anschließend wurden 0,006 - 0,17 Gew.% des Katalysators IBU-POSS-Ti-OEt und optional ein Haftvermittler (0,5 - 2 Gew.%), unter Vakuum eingemischt.

| | **Komponente** | **Gew**.**-%** |
|---|---|---|
| 1 | α,ω-Dihydroxy-dimethyl-polysiloxan 80.000 cSt | 30 - 70 |
| 2 | Polydimethylsiloxan 100 cSt | 15 - 45 |
| 3 | Vernetzer 1 | 0,5 - 4,5 |
| 4 | Vernetzer 2 | 0,5 - 4,5 |
| 5 | Kieselsäure | 5 - 15 |
| 6 | Haftvermittler | 0,5 - 2 |
| 7 | Metallsilsesquioxan | 0,001 - 0.5 |

Alle Bestandteile der oben beschriebenen Silikonkautschukmassen können in einem Schritt miteinander vermischt werden.
In einer bevorzugten Ausführungsform werden die erfindungsgemäßen Silikonkautschukmassen in einem Schritt über das intermediär gebildete Prepolymer in nur einem Schritt erhalten. Die Bildung des Prepolymers wie auch die sich anschließende Bildung der Silikonkautschukmassen können unter Anwesenheit des erfindungsgemäßen Katalysators ohne einen weiteren Aufreinigungs- oder Zwischenschritt gebildet werden.

Im Falle der nachfolgend beschriebenen Beispiele wurden sämtliche Parameter anhand der unten beschriebenen Prüfverfahren bestimmt. Alle nachfolgend beschriebenen Dichtstoffe waren transparent und farblos und wiesen eine ordnungsgemäße Stand- und Kerbfestigkeit nach 24h auf. Ferner haben die folgenden Dichtstoffe alle drei Prüfkörper gemäß der DIN EN ISO 8340 Klimatisierungsverfahren A auf Glas bei einer Dehnung um 100% der Anfangslänge, wobei die Dehnung 24h aufrechterhalten wurde, bestanden.

### Vergleich der Reißfestigkeit bei Einsatz von erfindungsgemäßen Katalysatoren (Beispiel 3 und 4) gegenüber herkömmlichen Katalysatoren (Vergleichsbeispiel):

### Beispiel 3

**Vernetzergemisch mit Oxim-Abgangsgruppe**

| | **Komponente** | **Gew.-%** |
|---|---|---|
| 1 | α,ω-Dihydroxy-dimethyl-polysiloxan 80.000 cSt | 53,5 |
| 2 | Polydimethylsiloxan 100 cSt | 30,4 |
| 3 | Vinyl-tris(2-pentanonoximo)silan | 2,2 |
| 4 | Methyl-tris(2-pentanonoximo)silan | 2,2 |
| 5 | Pyrogene Kieselsäure, unbehandelt BET-Oberfläche 130-150 m²/g | 10,6 |
| 6 | Haftvermittler auf Basis von N-(2-Aminoethyl)-3-aminopropyltrimethoxysilan (DAMO) | 1,0 |
| 7 | Katalysator IBU-POSS-Ti-OEt | 0,08 |

α,ω-Dihydroxy-dimethyl-polysiloxan 80.000 cSt, PDMS 100 cSt und Vinyl-tris(2-pentanonoximo)silan wurden unter Vakuum gemischt. Anschließend wurde Methyl-tris(2-pentanonoximo)silan unter Vakuum zugemischt. Danach wurde die Kieselsäure eindispergiert und solange unter Vakuum gerührt, bis die Masse glatt war. Der Katalysator IBU-POSS-Ti-OEt (VII) und der oligomere Haftvermittler auf Basis von N-(2-Aminoethyl)-3-aminopropyltrimethoxysilan (DAMO) wurden unter Vakuum eingemischt. Das Produkt zeichnete sich durch eine Hautbildungszeit von 8 Minuten und einer Klebfreizeit von 20 Minuten aus. Der Dichtstoff hatte auf allen getesteten Materialien eine gute Haftung, d.h. Glas, Aluminium, PVC, Blech, Stahl, Beton, Holz, Holz lackiert, Holz lasiert, Polyamid und Al/Mg-Legierung.

Die determinierte Shore A-Härte betrug 23. Auch nach 4 Wochen Lagerung bei 60°C war der Dichtstoff stabil (Shore A:21) und farblos. Die Extrusion bei Verwendung einer Düse mit 2 mm Durchmesser bei 5 bar und 30 Sekunden betrug 14,0 g. Weiterhin wies sich der Dichtstoff durch hervorragende Eigenschaften aus:

| **Eigenschaft** | **Dichtstoff** |
|---|---|
| Frühbelastbarkeit | 60 min |
| Durchhärtung auf Glas (9mm) | 3d |
| DIN EN ISO 8339 Dehnspannungswert bei 100% Dehnung (N/mm²) | 0,33 |
| DIN EN ISO 8339 Sekantenmodul bei Reißdehnung (N/mm²) | 0,63 |
| DIN EN ISO 8339 Reißdehnung | 385% |
| DIN EN ISO 7389 Mittleres Rückstellvermögen | 92% |
| DIN 53504 Reißfestigkeit (N/mm²) | 0,89 |
| DIN 53504 Reißdehnung | 790% |

### Beispiel 4

**Vernetzergemisch mit Oxim-Abgangsgruppe**

| | **Komponente** | **Gew.-%** |
|---|---|---|
| 1 | α,ω-Dihydroxy-dimethyl-polysiloxan 80.000 cSt | 53,5 |
| 2 | Polydimethylsiloxan 100 cSt | 30,4 |
| 3 | Vinyl-tris(2-pentanonoximo)silan | 2,2 |
| 4 | Methyl-tris(2-pentanonoximo)silan | 2,2 |
| 5 | Pyrogene Kieselsäure, unbehandelt BET-Oberfläche 130-150 m²/g | 10,6 |
| 6 | Haftvermittler auf Basis von N-(2-Aminoethyl)-3-aminopropyltrimethoxysilan (DAMO) | 1,0 |
| 7 | Katalysator Octyl-POSS-Ti-OEt | 0,08 |

α,ω-Dihydroxy-dimethyl-polysiloxan 80.000 cSt, PDMS 100 cSt und Vinyl-tris(2-pentanonoximo)silan wurden unter Vakuum gemischt. Anschließend wurde Methyl-tris(2-pentanonoximo)silan unter Vakuum zugemischt. Danach wurde die Kieselsäure eindispergiert und solange unter Vakuum gerührt, bis die Masse glatt war. Anschließend wurden der Katalysator Octyl-POSS-Ti-OEt und der oligomere Haftvermittler auf Basis von N-(2-Aminoethyl)-3-aminopropyltrimethoxysilan (DAMO) unter Vakuum eingemischt. Das Produkt zeichnete sich durch eine Hautbildungszeit von 8 Minuten und einer Klebfreizeit von 20 Minuten aus. Der Dichtstoff hatte auf allen getesteten Materialien eine gute Haftung, d.h. Glas, Aluminium, PVC, Blech, Stahl, Beton, Holz, Holz lackiert, Holz lasiert, Polyamid und Al/Mg-Legierung.

Die determinierte Shore A-Härte betrug 24. Auch nach 4 Wochen Lagerung bei 60°C war der Dichtstoff stabil (Shore A:21) und farblos. Die Extrusion bei Verwendung einer Düse mit 2 mm Durchmesser bei 5 bar und 30 Sekunden betrug 12,0 g. Weiterhin wies sich der Dichtstoff durch hervorragende Eigenschaften aus:

| **Eigenschaft** | **Dichtstoff** |
|---|---|
| Frühbelastbarkeit | 60 min |
| Durchhärtung auf Glas (9 mm) | 4d |
| DIN EN ISO 8339 Dehnspannungswert bei 100% Dehnung (N/mm²) | 0,38 |
| DIN EN ISO 8339 Sekantenmodul bei Reißdehnung (N/mm²) | 0,71 |
| DIN EN ISO 8339 Reißdehnung | 350% |
| DIN EN ISO 7389 Mittleres Rückstellvermögen | 94% |
| DIN 53504 Reißfestigkeit (N/mm²) | 0,97 |
| DIN 53504 Reißdehnung | 730% |

### Vergleichsbeispiel

**Vernetzergemisch mit Oxim-Abgangsgruppen**

| | **Komponente** | **Gew.-%** |
|---|---|---|
| 1 | α,ω-Dihydroxy-dimethyl-polysiloxan 80.000 cSt | 53,0 |
| 2 | Polydimethylsiloxan 100 cSt | 31,4 |
| 3 | Vinyl-tris(2-pentanonoximo)silan | 1,3 |
| 4 | Methyl-tris(2-pentanonoximo)silan | 3,0 |
| 5 | Pyrogene Kieselsäure, unbehandelt BET-Oberfläche 130-150 m²/g | 10,5 |
| 6 | Haftvermittler auf Basis von N-(2-Aminoethyl)-3-aminopropyltrimethoxysilan (DAMO) | 0,65 |
| 7 | Octyl-Zinnkatalysator | 0,12 |

α,ω-Dihydroxy-dimethyl-polysiloxan 80.000 cSt, PDMS 100 cSt und Vinyl-tris-(2-pentanonoximo)silan wurden unter Vakuum gemischt. Anschließend wurde Methyl-tris(acetonoximo)silan ebenfalls unter Vakuum zugemischt. Danach wurde die Kieselsäure eindispergiert und solange unter Vakuum gerührt, bis die Masse glatt war. Anschließendwurden der Octyl-Zinnkatalysator und der oligomere Haftvermittler auf Basis von N-(2-Aminoethyl)-3-aminopropyltrimethoxysilan (DAMO) unter Vakuum eingemischt. Das Produkt zeichnete sich durch eine Hautbildungszeit von 9 Minuten und einer Klebfreizeit von 23 Minuten aus. Der Dichtstoff hatte auf allen getesteten Materialien eine gute Haftung, d.h. Glas, Aluminium, PVC, Blech, Stahl, Beton, Holz, Holz lackiert, Holz lasiert, Polyamid und Al/Mg-Legierung.

Die determinierte Shore A-Härte betrug 26. Auch nach 4 Wochen Lagerung bei 60°C war der Dichtstoff stabil (Shore A:23) und farblos. Die Extrusion bei Verwendung einer Düse mit 2 mm Durchmesser bei 5 bar und 30 Sekunden betrug 18,0 g. Weiterhin wies sich der Dichtstoff durch folgende Eigenschaften aus:

| **Eigenschaft** | **Dichtstoff** |
|---|---|
| Frühbelastbarkeit | 170 min |
| Durchhärtung auf Glas (9 mm) | 5d |
| DIN EN ISO 8339 Dehnspannungswert bei 100% Dehnung (N/mm²) | 0,38 |
| DIN EN ISO 8339 | 0,57 |
| Sekantenmodul bei Reißdehnung (N/mm²) | |
| DIN EN ISO 8339 Reißdehnung | 280% |
| DIN EN ISO 7389 Mittleres Rückstellvermögen | 96% |
| DIN 53504 Reißfestigkeit (N/mm²) | 0,93 |
| DIN 53504 Reißdehnung | 660% |

### Herstellung einzelner Silikonkautschukmassen

### Beispiel 5

**Vernetzergemisch mit Oxim-Abgangsgruppe**

| | **Komponente** | **Gew**.**-%** |
|---|---|---|
| 1 | α,ω-Dihydroxy-dimethyl-polysiloxan 80.000 cSt | 53,5 |
| 2 | Polydimethylsiloxan 100 cSt | 30,4 |
| 3 | Vinyl-tris(2-pentanonoximo)silan | 0,85 |
| 4 | Ethyl-tris(acetonoximo)silan | 3,55 |
| 5 | Pyrogene Kieselsäure, unbehandelt BET-Oberfläche 130-150 m²/g | 10,6 |
| 6 | oligomerer Haftvermittler auf Basis von DAMO | 1,0 |
| 7 | Katalysator IBU-POSS-Ti-OEt | 0,08 |

α,ω-Dihydroxy-dimethyl-polysiloxan 80.000 cSt, PDMS 100 cSt, Ethyl-tris(acetonoximo)silan und Vinyl-tris(2-pentanonoximo)silan wurden unter Vakuum gemischt. Danach wurde die Kieselsäure eindispergiert und solange unter Vakuum gerührt, bis die Masse glatt war. Anschließendwurden der Katalysator IBU-POSS-Ti-OEt (VII) und der oligomere Haftvermittler auf Basis von N-(2-Aminoethyl)-3-aminopropyltrimethoxysilan (DAMO) unter Vakuum eingemischt. Das Produkt war transparent und farblos. Es zeichnete sich durch eine Hautbildungszeit von 10 Minuten und einer Klebfreizeit von 40 Minuten aus. Der Dichtstoff hatte auf allen getesteten Materialien eine gute Haftung, d.h. Glas, Aluminium, PVC, Blech, Stahl, Beton, Holz, Holz lackiert, Holz lasiert, Polyamid und Al/Mg-Legierung.

Die determinierte Shore A-Härte betrug 22. Auch nach 4 Wochen Lagerung bei 60°C war der Dichtstoff stabil (Shore A:21) und farblos. Die Extrusion bei Verwendung einer Düse mit 2 mm Durchmesser bei 5 bar und 30 Sekunden betrug 12,0 g. Weiterhin wies sich der Dichtstoff durch hervorragende Eigenschaften aus:

| **Eigenschaft** | **Dichtstoff** |
|---|---|
| Frühbelastbarkeit | 70 min |
| Durchhärtung auf Glas (9 mm) | 4d |
| DIN EN ISO 8339 Dehnspannungswert bei 100% Dehnung (N/mm²) | 0,35 |
| DIN EN ISO 8339 Sekantenmodul bei Reißdehnung (N/mm²) | 0,69 |
| DIN EN ISO 8339 Reißdehnung | 435% |
| DIN EN ISO 7389 Mittleres Rückstellvermögen | 93% |
| DIN 53504 Reißfestigkeit (N/mm²) | 0,83 |
| DIN 53504 Reißdehnung | 835% |

### Beispiel 6

**Vernetzergemisch mit Oxim-Abgangsgruppe**

| | **Komponente** | **Gew.-%** |
|---|---|---|
| 1 | α,ω-Dihydroxy-dimethyl-polysiloxan 80.000 cSt | 53,5 |
| 2 | Polydimethylsiloxan 100 cSt | 30,4 |
| 3 | Vinyl-tris(2-pentanonoximo)silan | 2,2 |
| 4 | Methyl-tris(2-pentanonoximo)silan | 2,2 |
| 5 | Pyrogene Kieselsäure, unbehandelt BET-Oberfläche 130-150 m²/g | 10,6 |
| 6 | oligomerer Haftvermittler auf Basis von DAMO | 1,0 |
| 7 | Katalysator IBU-POSS-Ti-OEt | 0,006 |

α,ω-Dihydroxy-dimethyl-polysiloxan 80.000 cSt, PDMS 100 cSt und Vinyl-tris(2-pentanonoximo)silan wurden unter Vakuum gemischt. Anschließend wurde Methyl-tris(2-pentanonoximo)silan unter Vakuum zugemischt. Danach wurde die Kieselsäure eindispergiert und solange unter Vakuum gerührt, bis die Masse glatt war. Anschließendwurden der Katalysator IBU-POSS-Ti-OEt (VII) und der oligomere Haftvermittler auf Basis von N-(2-Aminoethyl)-3-aminopropyltrimethoxysilan (DAMO) unter Vakuum eingemischt. Das Produkt war transparent und farblos. Es zeichnete sich durch eine Hautbildungszeit von 8 Minuten und einer Klebfreizeit von 30 Minuten aus. Der Dichtstoff hatte auf allen getesteten Materialien eine gute Haftung, d.h. Glas, Aluminium, PVC, Blech, Stahl, Beton, Holz, Holz lackiert, Holz lasiert, Polyamid und Al/Mg-Legierung.

Die determinierte Shore A-Härte betrug 26. Auch nach 4 Wochen Lagerung bei 60°C war der Dichtstoff stabil (Shore A:24) und farblos. Die Extrusion bei Verwendung einer Düse mit 2 mm Durchmesser bei 5 bar und 30 Sekunden betrug 12,0 g. Weiterhin wies sich der Dichtstoff durch hervorragende Eigenschaften aus:

| **Eigenschaft** | **Dichtstoff** |
|---|---|
| Frühbelastbarkeit | 60 min |
| Durchhärtung auf Glas (9 mm) | 3d |
| DIN EN ISO 8339 Dehnspannungswert bei 100% Dehnung (N/mm²) | 0,38 |
| DIN EN ISO 8339 | 0,68 |
| Sekantenmodul bei Reißdehnung (N/mm²) | |
| DIN EN ISO 8339 Reißdehnung | 340% |
| DIN EN ISO 7389 Mittleres Rückstellvermögen | 95% |
| DIN 53504 Reißfestigkeit (N/mm²) | 0,68 |
| DIN 53504 Reißdehnung | 555% |

### Beispiel 7

**Vernetzer mit Carbonsäure-Abgangsgruppe**

| | **Komponente** | **Gew.-%** |
|---|---|---|
| 1 | α,ω-Dihydroxy-dimethyl-polysiloxan 80.000 cst | 55,4 |
| 2 | Polydimethylsiloxan 100 cst | 31,1 |
| 3 | Propyltriacetoxysilan | 4,5 |
| 4 | Di-tertbutoxy-diacetoxysilane BDAC | 0,25 |
| 5 | Pyrogene Kieselsäure, unbehandelt BET-Oberfläche 130-150 m²/g | 8,5 |
| 6 | Katalysator IBU-POSS-Ti-OEt | 0,04 |

Polymer 80.000, PDMS 100 cst und Propyltriacetoxysilan wurden unter Vakuum gemischt. Anschließend wurde das Haftmittel BDACebenfalls unter Vakuum zugemischt. Danach wurde die Kieselsäure eindispergiert und solange unter Vakuum gerührt, bis die Masse glatt war. Anschließend wurde der Katalysator IBU-POSS-Ti-OEt (VII) unter Vakuum eingemischt. Das Produkt war transparent und farblos. Es zeichnete sich durch eine Hautbildungszeit von 8 Minuten und einer Klebfreizeit von 40 Minuten aus. Der Dichtstoff hatte auf allen getesteten Materialien eine gute Haftung, d.h. Glas, Aluminium, PVC, Blech, Stahl, , Holz, Holz lackiert, Holz lasiert, Polyamid und Al/Mg-Legierung.

Die determinierte Shore A-Härte betrug 23. Auch nach 4 Wochen Lagerung bei 60°C war der Dichtstoff stabil (Shore A:23) und farblos. Die Extrusion bei Verwendung einer Düse mit 2 mm Durchmesser bei 5 bar und 30 Sekunden betrug 25,0 g. Weiterhin wies sich der Dichtstoff durch hervorragende Eigenschaften aus:

| **Eigenschaft** | **Dichtstoff** |
|---|---|
| Frühbelastbarkeit | 40 min |
| Durchhärtung auf Glas (9 mm) | 3d |
| DIN EN ISO 8339 Dehnspannungswert bei 100% Dehnung (N/mm²) | 0,37 |
| DIN EN ISO 8339 Sekantenmodul bei Reißdehnung (N/mm²) | 0,49 |
| DIN EN ISO 8339 Reißdehnung | 210% |
| DIN EN ISO 8340 Klimatisierungsverfahren A auf Glas | 24h/100% Reißdehnung, alle 3 Prüfkörper bestanden |
| DIN EN ISO 7389 Mittleres Rückstellvermögen | 97% |
| DIN 53504 Reißfestigkeit (N/mm²) | 1,24 |
| DIN 53504 Reißdehnung | 1150% |

### Beispiel 8

**Vernetzer mit Carbonsäure-Abgangsgruppe**

| | **Komponente** | **Gew.-%** |
|---|---|---|
| 1 | α,ω-Dihydroxy-dimethyl-polysiloxan 80.000 cSt | 55,4 |
| 2 | Polydimethylsiloxan 100 cSt | 31,1 |
| 3 | Propyltriacetoxysilan | 4,5 |
| 4 | Di-tertbutoxy-diacetoxysilane BDAC | 0,25 |
| 5 | Pyrogene Kieselsäure, unbehandelt BET-Oberfläche 130-150 m²/g | 8,5 |
| 6 | Katalysator IBU-POSS-Ti-OEt | 0,0125 |

α,ω-Dihydroxy-dimethyl-polysiloxan 80.000 cSt, PDMS 100 cSt und Propyltriacetoxysilan wurden unter Vakuum gemischt. Anschließend wurde das Haftmittel BDAC ebenfalls unter Vakuum zugemischt. Danach wurde die Kieselsäure eindispergiert und solange unter Vakuum gerührt, bis die Masse glatt war. Anschließendwurde der Katalysator IBU-POSS-Ti-OEt (VII) unter Vakuum eingemischt. Das Produkt war transparent und farblos. Es zeichnete sich durch eine Hautbildungszeit von 8 Minuten und einer Klebfreizeit von 40 Minuten aus. Der Dichtstoff hatte auf allen getesteten Materialien eine gute Haftung, d.h. Glas, Aluminium, PVC, Blech, Stahl, Holz, Holz lackiert, Holz lasiert, Polyamid und Al/Mg-Legierung.

Die determinierte Shore A-Härte betrug 23. Auch nach 4 Wochen Lagerung bei 60°C war der Dichtstoff stabil (Shore A:23) und farblos. Die Extrusion bei Verwendung einer Düse mit 2 mm Durchmesser bei 5 bar und 30 Sekunden betrug 25,0 g. Weiterhin wies sich der Dichtstoff durch hervorragende Eigenschaften aus:

| **Eigenschaft** | **Dichtstoff** |
|---|---|
| Frühbelastbarkeit | 40 min |
| Durchhärtung auf Glas (9 mm) | 3d |
| DIN EN ISO 8339 Dehnspannungswert bei 100% Dehnung (N/mm²) | 0,37 |
| DIN EN ISO 8339 Sekantenmodul bei Reißdehnung (N/mm²) | 0,49 |
| DIN EN ISO 8339 Reißdehnung | 210% |
| DIN EN ISO 7389 Mittleres Rückstellvermögen | 97% |
| DIN 53504 Reißfestigkeit (N/mm²) | 1,24 |
| DIN 53504 Reißdehnung | 1150% |

### Beispiel 9

**Vernetzer mit Hydroxycarbonsäure-Abgangsgruppen**

| | **Komponente** | **Gew**.**-%** |
|---|---|---|
| 1 | α,ω-Dihydroxy-dimethyl-polysiloxan 80.000 cSt | 55,0 |
| 2 | Polydimethylsiloxan 100 cSt | 26,7 |
| 3 | Methyl-tris-salicylsäureethylhexylester-silan | 4,0 |
| 4 | Propyl-tris-salicylsäureethylhexylester-silan | 4,0 |
| 5 | 3-Aminopropyltriethoxysilan (AMEO) | 0,1 |
| 6 | Pyrogene Kieselsäure, unbehandelt BET-Oberfläche 130-150 m²/g | 8,5 |
| 7 | Katalysator IBU-POSS-Ti-OEt | 0,07 |
| 8 | Tris(3-trimethoxysilylpropyl)-isocyanurate | 1,2 |
| 9 | DMAPTMS | 0,4 |

α,ω-Dihydroxy-dimethyl-polysiloxan 80.000 cSt, PDMS 100 cSt, Methyl-trissalicylsäureethylhexylester-silan und Propyl-tris-salicylsäureethylhexylester-silan wurden unter Vakuum gemischt. Anschließend wurde AMEO ebenfalls unter Vakuum zugemischt. Danach wurde die Kieselsäure eindispergiert und solange unter Vakuum gerührt, bis die Masse glatt war. Anschließend wurden der Katalysator IBU-POSS-Ti-OEt (VII) und der Haftvermittler Tris(3-trimethoxysilylpropyl)-isocyanurate und der Haftvermittler Dimethylaminopropyltrimethoxysilan (DMAPTMS) unter Vakuum eingemischt.

Das Produkt zeichnete sich durch eine Hautbildungszeit von 7 Minuten und einer Klebfreizeit von 120 Minuten aus. Der Dichtstoff hatte auf allen getesteten Materialien eine gute Haftung, d.h. Glas, Aluminium, PVC, Blech, Stahl, Holz, Holz lackiert, Holz lasiert, Polyamid und Al/Mg-Legierung.

Die determinierte Shore A-Härte betrug 27. Auch nach 4 Wochen Lagerung bei 60°C war der Dichtstoff stabil (Shore A:24) und farblos. Die Extrusion bei Verwendung einer Düse mit 2 mm Durchmesser bei 5 bar und 30 Sekunden betrug 12,0 g. Weiterhin wies sich der Dichtstoff durch hervorragende Eigenschaften aus:

| **Eigenschaft** | **Dichtstoff** |
|---|---|
| Frühbelastbarkeit | 20 min |
| Durchhärtung auf Glas (9 mm) | 5d |
| DIN EN ISO 8339 Dehnspannungswert bei 100% Dehnung (N/mm²) | 0,33 |
| DIN EN ISO 8339 Sekantenmodul bei Reißdehnung (N/mm²) | 0,52 |
| DIN EN ISO 8339 Reißdehnung | 285% |
| DIN EN ISO 7389 Mittleres Rückstellvermögen | 96% |
| DIN 53504 Reißfestigkeit (N/mm²) | 0,57 |
| DIN 53504 Reißdehnung | 460% |

### Allgemeine Durchführung der Prüfverfahren:

### 1. Bestimmung der Klebfreizeit von Silikon-Dichtstoffen

Für die Bestimmung der Klebfreizeit ist die Temperatur sowie die Luftfeuchte beim Austragen des Dichtstoffes mittels eines geeigneten Gerätes zu ermitteln und im entsprechenden Protokoll zu notieren. Eine fertig abgefüllte und verschlossene Kartusche (Standzeit des Dichtstoffes nach Compoundierung mindestens 24 Stunden) wird in eine Pistole für Silikon-Kartuschen eingelegt. Anschließend wird auf einer sauberen Glasplatte eine entsprechende Silikonmenge aufgespritzt. Mit dem Spatel wird zügig über das Silikon gestrichen, so dass ein durchgehender Silikonstreifen entsteht. Die aktuelle Uhrzeit wird abgelesen. In entsprechenden Zeitabständen wird mit einem sauberen Finger durch leichtes Berühren auf der Silikonoberfläche die Klebfreizeit des zu bestimmenden Dichtstoffes ermittelt. Ist der Dichtstoff klebfrei so wird die aktuelle Uhrzeit erneut abgelesen.

### 2. Bestimmung der Extrusion von Silikon-Dichtstoffen

Eine fertig abgefüllte und verschlossene Kartusche (Standzeit des Dichtstoffes nach Compoundierung mindestens 24 Stunden) wird in eine Druckluftpistole für Silikon-Kartuschen eingelegt und eine geeignete Kartuschenspitze aufgeschraubt. Die Druckluftpistole wird an die Pressluftversorgung angeschlossen und an dem Druckmanometer wird ein Druck von 5 bar eingestellt. Aus der Silikon-Kartusche wirdzunächst eine kleine Menge an Silikon auf ein Wischpapier gespritzt, so dass die Kartuschenspitze komplett mit Silikon gefüllt ist. Anschließend wird ein Aluschälchen auf die Oberschalenwaage gelegt und tariert. Nun wird exakt 30 Sekunden lang Silikon auf das Schälchen gespritzt und das Gewicht abschließend auf der Oberschalenwaage abgelesen.

### 3. Bestimmung der Standfestigkeit von Silikon-Dichtstoffen

Für die Bestimmung der Standfestigkeit ist die Temperatur sowie die Luftfeuchte beim Austragen des Dichtstoffes mittels eines geeigneten Gerätes zu ermitteln und im entsprechenden Protokoll zu notieren. Eine fertig abgefüllte und verschlossene Kartusche (Standzeit des Dichtstoffes nach Compoundierung mindestens 24 Stunden) wird in eine Pistole für Silikon-Kartuschen eingelegt. Anschließend wird auf einem Karton kreisförmig eine Schneckenform aufgespritzt (Durchmesser ca. 3 cm). Der Karton mit der Silikonschnecke wird nun senkrecht hingestellt und die aktuelle Uhrzeit wird abgelesen.

Nach 30 Minuten wird beobachtet, ob die Silikonschnecke die ursprüngliche Form hat oder ob die Schnecke nach unten geflossen ist. Hat sich die Schneckenform nicht verändert, so ist der Silikon-Dichtstoff standfest.

### 4. Bestimmung der Durchhärtung von Silikon-Dichtstoffen

Für die Bestimmung der Durchhärtung ist die Temperatur sowie die Luftfeuchte beim Austragen des Dichtstoffes mittels eines geeigneten Gerätes zu ermitteln und im entsprechenden Protokoll zu notieren. Eine fertig abgefüllte und verschlossene Kartusche (Standzeit des Dichtstoffes nach Compoundierung mindestens 24 Stunden) wird in eine Pistole für Silikon-Kartuschen eingelegt. Anschließend wird auf einer sauberen Glasplatte eine entsprechende Silikonmenge aufgespritzt. Mit dem Spatel wird zügig über das Silikon gestrichen, so dass ein durchgehender Silikonstreifen entsteht. In entsprechenden Zeitabständen (Tagen) wird mit einem Messer vom Silikon vorsichtig ein kleines Querstück abgeschnitten und die Durchhärtung des Dichtstoffes beurteilt. Ist der innere Teil des Dichtstoffkörpers noch klebrig und gelartig, so ist der Dichtstoff noch nicht durchgehärtet und die Bestimmung wird wiederholt. Ist der Dichtstoff vollständig durchgehärtet, so wird die Durchhärtungsdauer in Tagen notiert. Ist der Dichtstoff nach 7 Tagen nach Ausbringung immer noch klebrig, so ist das Kriterium Durchhärtung als nicht in Ordnung zu beurteilen.

### 5. Bestimmung der Haftung von Silikon-Dichtstoffen

Für die Bestimmung der Haftung ist die Temperatur sowie die Luftfeuchte beim Austragen des Dichtstoffes mittels eines geeigneten Gerätes zu ermitteln und im entsprechenden Protokoll zu notieren. Eine fertig abgefüllte und verschlossene Kartusche (Standzeit des Dichtstoffes nach Compoundierung mindestens 24 Stunden) wird in eine Pistole für Silikon-Kartuschen eingelegt. Anschließend wird auf einem entsprechenden gesäuberten Trägermaterial (z.B. Glas, Aluminium, Holz, Kunststoff, Beton, Naturstein, etc.) ein Silikonknopf aufgespritzt. Nach der kompletten Durchhärtung des Dichtstoffes (ca. 48 h) wird an dem Silikonknopf mit den Fingern gezogen, ob sich das Silikon wieder von dem Trägermaterial löst bzw. ob das Silikon eine innige Verbindung mit dem Trägermaterial gebildet hat. Lässt sich der Silikonknopf leicht, schwer oder überhaupt nicht vom Trägermaterial abziehen, so wird die Hafteigenschaft als schlecht, mittel oder gut beurteilt.

### 6. Bestimmung des Geruchs von Silikon-Dichtstoffen

Eine fertig abgefüllte und verschlossene Kartusche (Standzeit des Dichtstoffes nach Compoundierung mindestens 24 Stunden) wird in eine Pistole für Silikon-Kartuschen eingelegt. Anschließend wird auf einer sauberen Glasplatte eine entsprechende Silikonmenge aufgespritzt. Mit dem Spatel wird zügig über das Silikon gestrichen, so dass ein durchgehender Silikonstreifen entsteht. Der Silikon-Dichtstoff wird anschließend hinsichtlich seines Geruches beurteilt.

### 7. Bestimmung des Aspekts von Silikon-Dichtstoffen

Eine fertig abgefüllte und verschlossene Kartusche (Standzeit des Dichtstoffes nach Compoundierung mindestens 24 Stunden) wird in eine Pistole für Silikon-Kartuschen eingelegt. Anschließend wird auf einer sauberen Glasplatte eine entsprechende Silikonmenge aufgespritzt. Mit dem Spatel wird zügig über das Silikon gestrichen, so dass ein durchgehender Silikonstreifen entsteht. Der Silikon-Dichtstoff wird anschließend hinsichtlich Erscheinung, Farbe und Glätte visuell beurteilt.

### 8. Bestimmung der Hautbildungszeit von Silikon-Dichtstoffen

Für die Bestimmung der Hautbildungszeit ist die Temperatur sowie die Luftfeuchte beim Austragen des Dichtstoffes mittels eines geeigneten Gerätes zu ermitteln und im entsprechenden Protokoll zu notieren. Eine fertig abgefüllte und verschlossene Kartusche (Standzeit des Dichtstoffes nach Compoundierung mindestens 24 Stunden) wird in eine Pistole für Silikon-Kartuschen eingelegt. Anschließend wird auf einer sauberen Glasplatte eine entsprechende Silikonmenge aufgespritzt. Mit dem Spatel wird zügig über das Silikon gestrichen, so dass ein durchgehender Silikonstreifen entsteht. In entsprechenden Zeitabständen wird mit einem sauberen Finger durch leichten Druck auf die Silikonoberfläche die Hautbildung des zu bestimmenden Dichtstoffes ermittelt. Bildet der Dichtstoff eine Haut an seiner Oberfläche so dass am Finger keine Silikonreste mehr zurück bleiben, wird die gemessene Zeit an der Stoppuhr abgelesen.

### 9. Zugversuch mit Schulterstab S1 nach DIN 53504

Für die Bestimmungen des zu prüfenden Silikons ist im Protokoll die zugehörige Versuchsnummer der Silikonkartusche und das Test-Datum zu notieren. Die Standzeit des Dichtstoffes nach Compoundierung muss in der Kartusche mindestens 24 Stunden betragen. Die Gussform wird mit Spülmittel benetzt, um Silikonanhaftungen am Metall zu verhindern. Eine fertig abgefüllte und verschlossene Kartusche wird in eine Pistole für Silikon-Kartuschen eingelegt. Die Spitze der Kartusche wird entfernt. Anschließend wird auf der Matrize für den Schulterstab S 1 das Silikon über die Länge und Höhe der ausgefrästen Gussform aufgespritzt und sofort mit einer Spachtel glatt gezogen. Nach mind. 24 Stdn. wird die Durchhärtung des Silikons durch Anheben des Prüfkörpers aus der Matrize geprüft. Es darf keine klebrige Oberfläche mehr vorhanden sein. Der Schulterstab muss optisch einwandfrei, ohne Luft- und Fremdeinschlüsse oder Risse sein. Der Prüfkörper wird nach dem Abziehen aus der Matrize mit der Versuchsnummer gekennzeichnet. Im Zugprüfgerät T 300 müssen die Zugklemmen für den Schulterstab S 1 ein-gesetzt sein. Der prüffähige Schulterstab wird zwischen der oberen und unteren Klemme so eingespannt, dass der Steg genau 26 mm Anfangsmesslänge anzeigt. Die Messdaten bzw. Messmarken werden im entspannten Zustand auf Null zurückgesetzt. Durch Drücken der Starttaste beginnt die Dehnung der Prüfkörper bzw. deren Messwertanzeige. Das Gerät schaltet sich nach dem Reißen des Prüfkörpers automatisch ab. Die Messwerte bleiben angezeigt und sind direkt ablesbar

### 10. Zugversuch mit H-Prüfkörper nach DIN 8339

Für die Bestimmungen des zu prüfenden Silikons ist im Protokoll die zugehörige Versuchsnummer der Silikonkartusche und das Test-Datum zu notieren. Die Standzeit des Dichtstoffes nach Compoundierung muss in der Kartusche mindestens 24 Stunden betragen.
Eine fertig abgefüllte und verschlossene Kartusche wird in eine Pistole für Silikon-Kartuschen eingelegt. Die Spitze der Kartusche wird entfernt. Anschließend wird auf der Matrize das Silikon über die Länge und Höhe der Gussform aufgespritzt und sofort mit einer Spachtel glatt gezogen. Danach wird der Prüfkörper 28 Tage bei Normbedingungen gelagert. Vor der Zugprüfung wird der Prüfkörper optisch überprüft. Der Prüfkörper darf keine Lufteinschlüsse oder Risse zeigen.
Im Zugprüfgerät MFC T 300 müssen die Zugklemmen für den H-Prüfkörper ein-gesetzt sein. Der Prüfkörper wird zwischen der oberen und unteren Klemme so eingespannt, dass der Abstand 12 mm beträgt. Die Messdaten bzw. Messmarken werden im entspannten Zustand auf Null zurückgesetzt. Durch Drücken der Starttaste beginnt die Dehnung der Prüfkörper bzw. deren Messwertanzeige. Das Gerät schaltet sich nach dem Reißen des Prüfkörpers automatisch ab. Die Messwerte bleiben angezeigt und sind direkt ablesbar.

### 11. Zugversuch mit H-Prüfkörper nach DIN 8340

Für die Bestimmungen des zu prüfenden Silikons ist im Protokoll die zugehörige Versuchsnummer der Silikonkartusche und das Test-Datum zu notieren. Die Standzeit des Dichtstoffes nach Compoundierung muss in der Kartusche mindestens 24 Stunden betragen. Eine fertig abgefüllte und verschlossene Kartusche wird in eine Pistole für Silikon-Kartuschen eingelegt. Die Spitze der Kartusche wird entfernt. Anschließend wird auf der Matrize das Silikon über die Länge und Höhe der Gussform aufgespritzt und sofort mit einer Spachtel glatt gezogen. Danach wird der Prüfkörper 28 Tage bei Normbedingungen gelagert. Vor der Zugprüfung wird der Prüfkörper optisch überprüft. Der Prüfkörper darf keine Lufteinschlüsse oder Risse zeigen.
Im Zugprüfgerät MFC T 300 müssen die Zugklemmen für den H-Prüfkörper ein-gesetzt sein. Der Prüfkörper wird zwischen der oberen und unteren Klemme so eingespannt, dass der Abstand 12 mm beträgt. Die Messdaten bzw. Messmarken werden im entspannten Zustand auf Null zurückgesetzt. Durch Drücken der Starttaste beginnt die Dehnung der Prüfkörper bzw. deren Messwertanzeige. Das Gerät schaltet sich nach dem Reißen des Prüfkörpers automatisch ab. Die Messwerte bleiben angezeigt und sind direkt ablesbar.

### 12. Bestimmung der Lagerstabilität von Silikon-Dichtstoffen

Eine fertig abgefüllte und verschlossene Kartusche wird in den beheizten Trockenschrank gegeben. Entsprechend dem Protokoll Prüfmethoden wird der Silikon-Dichtstoff bei einer entsprechenden Temperatur über einen gewissen Zeitraum von mehreren Wochen im beheizten Trockenschrank gelagert. Nach Ablauf der Lagerungszeit wird die Kartusche in eine Pistole für Silikon-Kartuschen eingelegt. Anschließend wird auf einem ausgelegten Fließtuch eine entsprechende Silikonmenge aufgespritzt. Mit dem Spatel wird zügig über das Silikon gestrichen, so dass ein durchgehender Silikonstreifen entsteht. Der Silikon-Dichtstoff wird anschließend hinsichtlich PA-E0002 sowie PA-E0010 beurteilt.

### 13. Bestimmung der Frühbelastbarkeit von Silikon-Dichtstoffen

Für die Bestimmung der Frühbelastbarkeit ist die Temperatur sowie die Luftfeuchte beim Austragen des Dichtstoffes mittels eines geeigneten Gerätes zu ermitteln und im entsprechenden Protokoll zu notieren. Eine fertig abgefüllte und verschlossene Kartusche (Standzeit des Dichtstoffes nach Compoundierung mindestens 24 Stunden) wird in eine Pistole für Silikon-Kartuschen eingelegt. Auf den Karton werden zunächst waagrechte Linien im Abstand von jeweils 3 cm aufgezeichnet und anschließend angeschnitten. Anschließend wird auf dem Karton eine entsprechende Silikonmenge aufgespritzt. Mit dem Spatel wird zügig über das Silikon gestrichen, so dass ein durchgehender Silikonstreifen entsteht. Die aktuelle Uhrzeit wird abgelesen. In gleichen Zeitabständen von 15 Minuten wird beginnend an der ersten Linie der Karton zu einem rechten Winkel geknickt und die Oberfläche des Silikons an der Knickstelle begutachtet. Ist an der Knickstelle das Silikon vollständig oder nur teilweise gerissen, so wird die Bestimmung an der nächsten 3 cm-Linie nach weiteren 15 Minuten wiederholt. Ist an der Knickstelle das Silikon elastisch und kein Riss feststellbar, so ist das Silikon frühbelastbar. Die aktuelle Uhrzeit wird erneut abgelesen.

### 14. Bestimmung der Shore-Härte von Silikon-Dichtstoffen

Eine fertig abgefüllte und verschlossene Kartusche (Standzeit des Dichtstoffes nach Compoundierung mindestens 24 Stunden) wird in eine Pistole für Silikon-Kartuschen eingelegt. Anschließend wird auf einer sauberen Glasplatte eine entsprechende Silikonmenge aufgespritzt. Mit dem Spatel wird zügig über das Silikon gestrichen, so dass ein durchgehender Silikonstreifen entsteht. Bei einem vollständig durchgehärtetem Dichtstoff (siehe PA-E0008) wird auf die Silikonoberfläche das Shore-Härte Bestimmungsgerät mit beiden Händen völlig plan aufgesetzt und der Maximalwert der Shore-Härte abgelesen. Die Messung wird mindestens 5-mal an verschiedenen Stellen auf der Silikon-Oberfläche wiederholt und ein Mittelwert aus den Einzelmessungen gebildet.

## Patentansprüche

1. Zusammensetzung, erhältlich durch Vermischen folgender Komponenten:
a. mindestens einer Silikonverbindung mit der allgemeinen Formel HO-(SiR^{l}R^{m}O)ₒ-H, wobei R^{l} und R^{m} unabhängig voneinander einen optional substituierten Kohlenwasserstoffrest mit 1 bis 20 Kohlenstoffatomen bedeuten und o eine ganze Zahl von 5 bis 4000 ist,
b. eines Katalysators, wobei der Katalysator mindestens eine Metall-Siloxan-Silanol(-at)-Verbindung enthält, die insbesondere ein Metall ausgewählt aus der Gruppe bestehend aus s und p Block Metallen, d und f Block Übergangsmetallen, Lanthanid- und Actinidmetallen und Halbmetallen aufweist, und
c. mindestens eines Vernetzers mit der allgemeinen Formel Si(R)ₘ(R^{a})₄₋ₘ, wobei jeder R unabhängig voneinander einen optional substituierten Kohlenwasserstoffrest mit 1 bis 20 Kohlenstoffatomen, insbesondere eine optional substituierte, geradkettige oder verzweigte C1- bis C16-Alkylgruppe, eine optional substituierte, geradkettige oder verzweigte C2- bis C16-Alkenylgruppe oder eine optional substituierte C4- bis C14-Arylgruppe, bedeutet, m eine ganze Zahl von 0 bis 2 ist, jeder R^{a} unabhängig voneinander ausgewählt ist aus der Gruppe bestehend aus
• einem Hydroxycarbonsäureesterrest mit der allgemeinen Strukturformel (I): 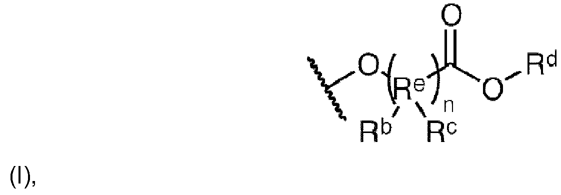 wobei
jeder R^{b} unabhängig voneinander H oder einen optional substituierten Kohlenwasserstoffrest mit 1 bis 20 Kohlenstoffatomen, insbesondere eine optional substituierte, geradkettige oder verzweigte C1- bis C16-Alkylgruppe oder eine optional substituierte C4- bis C14-Arylgruppe, bedeutet,
jeder R^{c} unabhängig voneinander H oder einen optional substituierten Kohlenwasserstoffrest mit 1 bis 20 Kohlenstoffatomen, insbesondere eine optional substituierte, geradkettige oder verzweigte C1- bis C16-Alkylgruppe oder eine optional substituierte C4- bis C14-Arylgruppe, bedeutet,
R^{d} einen optional substituierten Kohlenwasserstoffrest mit 1 bis 20 Kohlenstoffatomen, insbesondere eine optional substituierte, geradkettige oder verzweigte C1- bis C16-Alkylgruppe, eine optional substituierte C4- bis C14-Cycloalkylgruppe, eine optional substituierte C5- bis C15-Aralkylgruppe oder eine optional substituierte C4- bis C14-Arylgruppe, bedeutet,
R^{e} C oder einen optional substituierten Kohlenwasserstoffrest mit 1 bis 20 Kohlenstoffatomen, insbesondere ein optional substituiertes gesättigtes oder teilweise ungesättigtes cyclisches Ringsystem mit 4 bis 14 C-Atomen oder eine optional substituierte aromatische Gruppe mit 4 bis 14 C-Atomen, bedeutet, und
n eine ganze Zahl von 1 bis 10 ist,
• einem Hydroxycarbonsäureamidrest mit der allgemeinen Strukturformel (II): 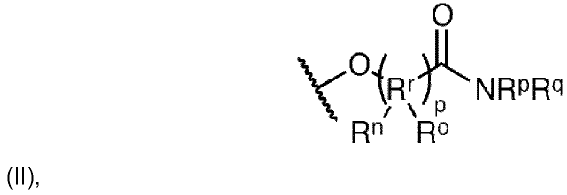 wobei
jeder Rⁿ unabhängig voneinander H oder einen optional substituierten Kohlenwasserstoffrest mit 1 bis 20 Kohlenstoffatomen, insbesondere eine optional substituierte, geradkettige oder verzweigte C1- bis C16-Alkylgruppe oder eine optional substituierte C4- bis C14-Arylgruppe, bedeutet,
jeder R^{o} unabhängig voneinander H oder einen optional substituierten Kohlenwasserstoffrest mit 1 bis 20 Kohlenstoffatomen, insbesondere eine optional substituierte, geradkettige oder verzweigte C1- bis C16-Alkylgruppe oder eine optional substituierte C4- bis C14-Arylgruppe, bedeutet,
R^{p} und R^{q} unabhängig voneinander H oder einen optional substituierten Kohlenwasserstoffrest mit 1 bis 20 Kohlenstoffatomen, insbesondere eine optional substituierte, geradkettige oder verzweigte C1- bis C16-Alkylgruppe, eine optional substituierte C4- bis C14-Cycloalkylgruppe, eine optional substituierte C5- bis C15-Aralkylgruppe oder eine optional substituierte C4- bis C14-Arylgruppe, bedeutet,
R^{r} C oder einen optional substituierten Kohlenwasserstoffrest mit 1 bis 20 Kohlenstoffatomen, insbesondere ein optional substituiertes gesättigtes oder teilweise ungesättigtes cyclisches Ringsystem mit 4 bis 14 C-Atomen oder eine optional substituierte aromatische Gruppe mit 4 bis 14 C-Atomen, bedeutet, und
p eine ganze Zahl von 1 bis 10 ist,
• einem Carbonsäurerest -O-C(O)-R^{f}, wobei R^{f} H oder einen optional substituierten Kohlenwasserstoffrest mit 1 bis 20 Kohlenstoffatomen, insbesondere eine optional substituierte, geradkettige oder verzweigte C1- bis C16-Alkylgruppe, eine optional substituierte C4- bis C14-Cycloalkylgruppe oder eine optional substituierte C4- bis C14-Arylgruppe oder eine optional substituierte C5- bis C15-Aralkylgruppe, bedeutet,
• einem Oximrest -O-N=CR^{g}R^{h}, wobei R^{g} und R^{h} unabhängig voneinander H oder einen optional substituierten Kohlenwasserstoffrest mit 1 bis 20 Kohlenstoffatomen, insbesondere eine optional substituierte, geradkettige oder verzweigte C1- bis C16-Alkylgruppe, eine optional substituierte C4- bis C14-Cycloalkylgruppe oder eine optional substituierte C4- bis C14-Arylgruppe oder eine optional substituierte C5- bis C15-Aralkylgruppe, bedeuten,
• einem Carbonsäureamidrest -N(Rⁱ)-C(O)-R^{j}, wobei Rⁱ H oder einen optional substituierten Kohlenwasserstoffrest mit 1 bis 20 Kohlenstoffatomen, insbesondere eine optional substituierte, geradkettige oder verzweigte C1- bis C16-Alkylgruppe, eine optional substituierte C4- bis C14-Cycloalkylgruppe oder eine optional substituierte C4- bis C14-Arylgruppe oder eine optional substituierte C5- bis C15-Aralkylgruppe, bedeutet und R^{j} H oder einen optional substituierten Kohlenwasserstoffrest mit 1 bis 20 Kohlenstoffatomen, insbesondere eine optional substituierte, geradkettige oder verzweigte C1- bis C16-Alkylgruppe, eine optional substituierte C4- bis C14-Cycloalkylgruppe oder eine optional substituierte C4- bis C14-Arylgruppe oder eine optional substituierte C5- bis C15-Aralkylgruppe, bedeutet, und
• einem Alkoxyrest -OR^{k}, wobei R^{k} einen optional substituierten Kohlenwasserstoffrest mit 1 bis 20 Kohlenstoffatomen, insbesondere eine optional substituierte, geradkettige oder verzweigte C1- bis C16-Alkylgruppe, eine optional substituierte C4- bis C14-Cycloalkylgruppe oder eine optional substituierte C4- bis C14-Arylgruppe oder eine optional substituierte C5- bis C15-Aralkylgruppe, bedeutet.

2. Zusammensetzung nach Anspruch 1, **dadurch gekennzeichnet, dass** die Metall-Siloxan-Silanol(-at)-Verbindung in einer molaren Konzentration im Bereich von 0,00001 bis 0,01 mol/kg, insbesondere von 0,00005 bis 0,005 mol/kg oder 0.00007 bis 0,0019 mol/kg, jeweils bezogen auf das Gesamtgewicht der Zusammensetzung, vorliegt.

3. Zusammensetzung nach Anspruch 1 oder 2, **dadurch gekennzeichnet, dass** die Metall-Siloxan-Silanol(-at)-Verbindung mit einem Gewichtsanteil von 0,001 bis 0,5%, vorzugsweise von 0,006 bis 0,17% vorliegt.

4. Zusammensetzung nach mindestens einem der vorstehenden Ansprüche, **dadurch gekennzeichnet, dass** das Molverhältnis von Vernetzer der allgemeinen Formel Si(R)ₘ(R^{a})₄₋ₘ, wobei der Vernetzer auch als Vernetzergemisch vorliegen kann, zu M3S- Katalysator 20 bis 2000, bevorzugt 100 bis 2000 und besonders bevorzugt 125 bis 2000 beträgt.

5. Zusammensetzung nach einem der vorstehenden Ansprüche, **dadurch gekennzeichnet, dass** die Metall-Siloxan-Silanol(-at)-Verbindung als Monomer, Oligomer und/oder als Polymer vorliegt, wobei das Metall oder die Metalle endständig und/oder innerhalb der Kette vorhanden sind.

6. Zusammensetzung nach einem der vorstehenden Ansprüche, **dadurch gekennzeichnet, dass** die Metall-Siloxan-Silanol(-at)-Verbindung ein oligomeres Metallsilsesquioxan enthält, insbesondere ein polyhedrales Metallsilsesquioxan.

7. Zusammensetzung nach Anspruch 6, **dadurch gekennzeichnet, dass** das Metallsilsesquioxan die allgemeine Formel R*_{q}SiᵣOₛMₜ aufweist, wobei jeder R* unabhängig voneinander ausgewählt ist aus der Gruppe bestehend aus optional substituiertem C1- bis C20-Alkyl, optional substituiertem C3- bis C6-Cycloalkyl, optional substituiertem C2- bis C20-Alkenyl, optional substituiertem C6- bis C10-Aryl, -OH und -O-(C1- bis C10-Alkyl), jedes M unabhängig voneinander ausgewählt sind aus der Gruppe bestehend aus s und p Block Metallen, d und f Block Übergangsmetallen, Lanthanid- und Actinidmetallen und Halbmetallen,
insbesondere aus der Gruppe bestehend aus Metallen der 1., 2., 3., 4., 5. 8., 10.und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi,
q eine ganze Zahl von 4 bis 19 ist,
r eine ganze Zahl von 4 bis 10 ist,
s eine ganze Zahl von 8 bis 30 ist, und
t eine ganze Zahl von 1 bis 8 ist.

8. Zusammensetzung nach Anspruch 6 oder 7, **dadurch gekennzeichnet, dass** das Metallsilsesquioxan die allgemeine Formel (III) 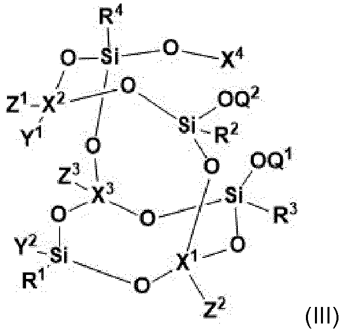 aufweist, wobei
X¹, X² und X³ unabhängig voneinander ausgewählt sind aus Si oder M¹, wobei M¹ ausgewählt ist aus der Gruppe bestehend aus s und p Block Metallen, d und f Block Übergangsmetallen, Lanthanid- und Actinidmetallen und Halbmetallen, insbesondere aus der Gruppe bestehend aus Metallen der 1., 2., 3., 4., 5. 8., 10.und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi,
Z¹, Z² und Z³ unabhängig voneinander ausgewählt sind aus der Gruppe bestehend aus L², R⁵, R⁶ und R⁷, wobei L² ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei L² ausgewählt ist aus der Gruppe bestehend aus -OH, -O-Methyl, -O-Ethyl, -O-Propyl, -O-Butyl, -O-Octyl, -O-Isopropyl, und -O-Isobutyl;
R¹, R², R³, R⁴, R⁵, R⁶ und R⁷unabhängig voneinander ausgewählt sind aus der Gruppe bestehend aus optional substituiertem C1- bis C20-Alkyl, optional substituiertem C3- bis C8-Cycloalkyl, optional substituiertem C2- bis C20-Alkenyl und optional substituiertem C5- bis C10-Aryl; Y¹ und Y² unabhängig voneinander -O-M²-L³_{Δ} bedeuten, oder Y¹ und Y² zusammengenommen sind und zusammen -O-M²(L³_{Δ})-O- oder -O- bedeuten, wobei L³ ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei L³ ausgewählt ist aus der Gruppe bestehend aus -OH, -O-Methyl, -O-Ethyl, -O-Propyl, -O-Butyl, -O-Octyl, -O-Isopropyl, und -O-Isobutyl, und wobei M² ausgewählt ist aus der Gruppe bestehend aus s und p Block Metallen, d und f Block Übergangsmetallen, Lanthanid- und Actinidmetallen und Halbmetallen, insbesondere aus der Gruppe bestehend aus Metallen der 1., 2., 3., 4., 5. 8., 10.und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi,
und
X⁴ -M³L¹_{Δ} oder M³ bedeutet und Q¹ und Q² H oder jeweils eine Einfachbindung verknüpft mit M³ bedeuten, wobei L¹ ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei L¹ ausgewählt ist aus der Gruppe bestehend aus - OH, -O-Methyl, -O-Ethyl, -O-Propyl, -O-Butyl, -O-Octyl, -O-Isopropyl, und -O-Isobutyl, und wobei M³ ausgewählt ist aus der Gruppe bestehend aus s und p Block Metallen, d und f Block Übergangsmetallen, Lanthanid- und Actinidmetallen und Halbmetallen,
insbesondere aus der Gruppe bestehend aus Metallen der 1., 2., 3., 4., 5. 8., 10.und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi,
oder
X⁴ -M³L¹_{Δ} bedeutet und Q² H oder eine Einfachbindung verknüpft mit M³ bedeutet und Q¹ H, M⁴L⁴_{Δ} oder -SiR⁸ bedeutet, wobei M⁴ ausgewählt ist aus der Gruppe bestehend aus s und p Block Metallen, d und f Block Übergangsmetallen, Lanthanid- und Actinidmetallen und Halbmetallen,
insbesondere aus der Gruppe bestehend aus Metallen der 1., 2., 3., 4., 5. 8., 10.und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi,
und wobei L⁴ ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei L⁴ ausgewählt ist aus der Gruppe bestehend aus -OH, -O-Methyl, -O-Ethyl, -O-Propyl, -O-Butyl, -O-Octyl, -O-Isopropyl, und -O-Isobutyl, und wobei R⁸ ausgewählt ist aus der Gruppe bestehend aus optional substituiertem C1- bis C20-Alkyl, optional substituiertem C3- bis C8-Cycloalkyl, optional substituiertem C2- bis C20-Alkenyl und optional substituiertem C5- bis C10-Aryl,
oder
X⁴, Q¹ und Q² unabhängig voneinander -M³L¹_{Δ} bedeuten, oder
X⁴ -Si(R⁸)-O-M³L¹_{Δ} bedeutet, Q² eine Einfachbindung verknüpft mit dem Si-Atom von X⁴ bedeutet und Q¹ -M⁴L⁴_{Δ} bedeutet, oder
X⁴ -Si(R⁸)-O-M³L¹_{Δ} bedeutet, Q² eine Einfachbindung verknüpft mit dem Si-Atom von X⁴ bedeutet und Q¹ eine Einfachbindung verknüpft mit dem M³-Atom von X⁴ bedeutet.

9. Zusammensetzung nach Anspruch 6, 7 oder 8, **dadurch gekennzeichnet, dass** das Metallsilsesquioxan die Strukturformel (V) 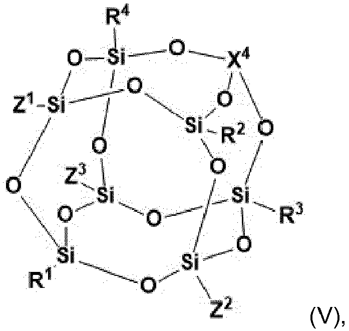 aufweist, wobei
X⁴, R¹, R², R³, R⁴, Z¹, Z² und Z³ gemäß Anspruch 8 definiert sind.

10. Zusammensetzung nach Anspruch 6, 7, 8 oder 9, **dadurch gekennzeichnet, dass** das Metallsilsesquioxan die Strukturformel (VI) 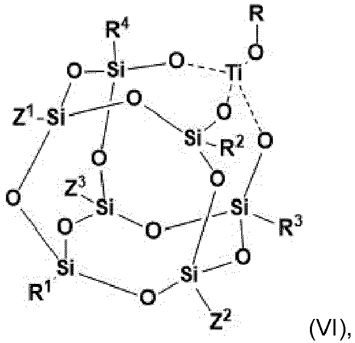 aufweist, wobei
Titan mit OR verknüpft ist, wobei R ausgewählt ist aus der Gruppe bestehend aus -H, -Methyl, -Ethyl, -Propyl, -Butyl, -Octyl, -Isopropyl, und -Isobutyl,
Z¹, Z² und Z³ jeweils unabhängig voneinander C1- bis C20-Alkyl, C3- bis C8-Cycloalkyl, C2- bis C20-Alkenyl und C5- bis C10-Aryl bedeuten, insbesondere ausgewählt sind aus der Gruppe bestehend aus Methyl-, Ethyl-, Propyl-, Isopropyl-, Butyl-, Isobutyl-, Hexyl-, Heptyl-, Octyl-, Vinyl-, Allyl-, Butenyl- und Phenyl-, und Benzyl-, und
R¹, R², R³ und R⁴ jeweils unabhängig voneinander C1- bis C20-Alkyl, C3- bis C8-Cycloalkyl, C2- bis C20-Alkenyl, und C5- bis C10-Aryl bedeuten, insbesondere ausgewählt sind aus der Gruppe bestehend aus Methyl-, Ethyl-, Propyl-, Isopropyl-, Butyl-, Isobutyl-, Hexyl-, Heptyl-, Octyl-, Vinyl-, Allyl-, Butenyl- und Phenyl-, und Benzyl-.

11. Zusammensetzung gemäß Anspruch 6, 7, 8, 9 oder 10, **dadurch gekennzeichnet, dass** das Metallsilsesquioxan die Struktur (VII) 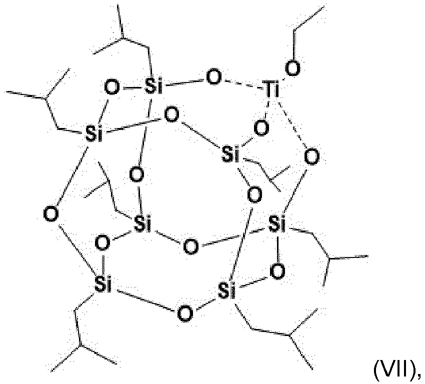 aufweist, wobei
jedes Si mit einem Isobutyl-Rest verknüpft ist und Titan einen Ethanolat-Liganden trägt.

12. Zusammensetzung nach einem der vorstehenden Ansprüche, **dadurch gekennzeichnet, dass** in der Silikonverbindung mit der allgemeinen Formel HO-(SiR^{l}R^{m}O)ₒ-H, R^{l} und R^{m} unabhängig voneinander eine optional substituierte, geradkettige oder verzweigte C1- bis C16-Alkylgruppe, insbesondere eine optional substituierte, geradkettige oder verzweigte C1- bis C12- oder C1- bis C8-Alkylgruppe, eine optional substituierte, geradkettige oder verzweigte C2- bis C16-Alkenylgruppe, insbesondere eine optional substituierte, geradkettige oder verzweigte C2- bis C12- oder C2- bis C8-Alkenylgruppe, oder eine optional substituierte C4- bis C14-Arylgruppe, insbesondere eine optional substituierte C4- bis C10-Arylgruppe, bedeuten.

13. Zusammensetzung nach einem der vorstehenden Ansprüche, **dadurch gekennzeichnet, dass** im Vernetzer mit der allgemeinen Formel Si(R)ₘ(R^{a})₄₋ₘ jeder R unabhängig voneinander eine optional substituierte, geradkettige oder verzweigte C1-bis C12-Alkylgruppe, insbesondere eine optional substituierte, geradkettige oder verzweigte C1- bis C8-Alkylgruppe, oder eine optional substituierte, geradkettige oder verzweigte C2- bis C12-Alkenylgruppe, insbesondere eine optional substituierte, geradkettige oder verzweigte C2- bis C8-Alkenylgruppe, oder eine optional substituierte C4- bis C10-Arylgruppe bedeutet,
jeder R^{a} unabhängig voneinander ausgewählt ist aus der Gruppe bestehend aus
• einem Hydroxycarbonsäureesterrest mit der allgemeinen Strukturformel (I): 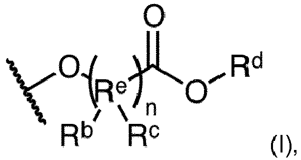
• einem Hydroxycarbonsäureamidrest mit der allgemeinen Strukturformel (II): 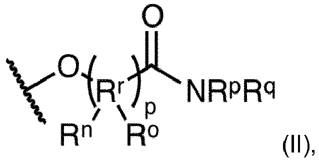
• einem Carbonsäurerest -O-C(O)-R^{f},
• einem Oximrest -O-N=CR^{g}R^{h},
• einem Carbonsäureamidrest -N(Rⁱ)-C(O)-R^{j},
wobei
jeder R^{b} und R^{c} unabhängig voneinander eine optional substituierte, geradkettige oder verzweigte C1- bis C12-Alkylgruppe, insbesondere eine optional substituierte, geradkettige oder verzweigte C1- bis C8-Alkylgruppe, bedeutet,
jeder R^{b} und R^{c} unabhängig voneinander eine optional substituierte, geradkettige oder verzweigte C1- bis C12-Alkylgruppe, insbesondere eine optional substituierte, geradkettige oder verzweigte C1- bis C8-Alkylgruppe, bedeutet,
R^{d} eine optional substituierte, geradkettige oder verzweigte C1- bis C12-Alkylgruppe, insbesondere eine optional substituierte, geradkettige oder verzweigte C1- bis C8-Alkylgruppe, eine C4- bis C10-Cycloalkylgruppe, eine C5- bis C11-Aralkylgruppe oder eine C4- bis C10-Arylgruppe, bedeutet,
R^{e} ein divalenter Benzolrest ist oder R^{e} C und R^{b} und R^{c} H oder R^{e} C und R^{b} H und R^{c} Methyl-, bedeuten,
n eine ganze Zahl von 1 bis 5, insbesondere von 1 bis 3, insbesondere 1, ist,
wobei
jeder Rⁿ und R^{o} unabhängig voneinander H oder eine optional substituierte, geradkettige oder verzweigte C1- bis C12-Alkylgruppe, insbesondere eine optional substituierte, geradkettige oder verzweigte C1- bis C8-Alkylgruppe, bedeutet,
R^{p} und R^{q} unabhängig voneinander H oder eine optional substituierte, geradkettige oder verzweigte C1- bis C12-Alkylgruppe, insbesondere eine optional substituierte, geradkettige oder verzweigte C1- bis C8-Alkylgruppe, oder eine optional substituierte C4- bis C14-Cycloalkylgruppe oder eine C5- bis C11-Aralkylgruppe oder eine C4- bis C10- Arylgruppe bedeuten,
R^{r} ein divalenter Benzolrest ist oder R^{r} C und Rⁿ und R^{o} H oder R^{r} C und Rⁿ H und R^{o} Methyl-, bedeuten,
p eine ganze Zahl von 1 bis 5, insbesondere von 1 bis 3, insbesondere 1, ist,
wobei
R^{f} H oder eine optional substituierte, geradkettige oder verzweigte C1- bis C12-Alkylgruppe, eine optional substituierte C4- bis C10-Cycloalkylgruppe oder eine optional substituierte C4- bis C10-Arylgruppe oder eine optional substituierte C5-bis C11-Aralkylgruppe, insbesondere H oder eine optional substituierte, geradkettige oder verzweigte C1- bis C8-Alkylgruppe, eine optional substituierte C4- bis C8-Cycloalkylgruppe oder eine optional substituierte C4- bis C10-Arylgruppe oder eine optional substituierte C5- bis C11-Aralkylgruppe, bedeutet, wobei
R^{g} und R^{h} unabhängig voneinander H oder eine optional substituierte, geradkettige oder verzweigte C1- bis C12-Alkylgruppe, eine optional substituierte C4- bis C10-Cycloalkylgruppe oder eine optional substituierte C4- bis C10-Arylgruppe oder eine optional substituierte C5- bis C11-Aralkylgruppe, insbesondere H oder eine optional substituierte, geradkettige oder verzweigte C1- bis C8-Alkylgruppe, eine optional substituierte C4- bis C8-Cycloalkylgruppe oder eine optional substituierte C4- bis C10-Arylgruppe oder eine optional substituierte C5- bis C11-Aralkylgruppe, bedeuten,
und wobei
Rⁱ und R^{j} unabhängig voneinander H oder eine optional substituierte, geradkettige oder verzweigte C1- bis C12-Alkylgruppe, eine optional substituierte C4- bis C10-Cycloalkylgruppe oder eine optional substituierte C4- bis C10-Arylgruppe oder eine optional substituierte C5- bis C11-Aralkylgruppe, insbesondere H oder eine optional substituierte, geradkettige oder verzweigte C1- bis C8-Alkylgruppe, eine optional substituierte C4- bis C8-Cycloalkylgruppe oder eine optional substituierte C4- bis C10-Arylgruppe oder eine optional substituierte C5- bis C11-Aralkylgruppe, bedeuten.

14. Verwendung eines Katalysators, enthaltend eine Metall-Siloxan-Silanol(-at)-Verbindung, wobei der Katalysator gemäß den Ansprüchen 1 bis 12 definiert ist, zur Vernetzung einer Zusammensetzung erhältlich durch Vermischen einer Silikonverbindung mit der allgemeinen Formel HO-(SiR^{l}R^{m}O)ₒ-H, wobei o und die Reste R^{l} und R^{m} gemäß Anspruch 1 definiert sind, mit einem Vernetzer mit der allgemeinen Formel Si(R)ₘ(R^{a})₄₋ₘ, wobei m und die Reste R und R^{a} gemäß Anspruch 1 definiert sind.

15. Zusammensetzung gemäß mindestens einem der Ansprüche 1 bis 13, **dadurch gekennzeichnet, dass** die Silikonverbindung mit der allgemeinen Formel HO-(SiR^{l}R^{m}O)ₒ-H, und der Vernetzer mit der allgemeinen Formel Si(R)ₘ(R^{a})₄₋ₘ in Form eines Prepolymers vorliegen, wobei das Prepolymer erhältlich ist durch Umsetzung der Silikonverbindung und des Vernetzers mit der allgemeinen Formel Si(R)ₘ(R^{a})₄₋ₘ.

16. Verfahren zur Herstellung einer Zusammensetzung, wobei dieses folgende Verfahrensschritte enthält
a. Bereitstellen einer Zusammensetzung enthaltend
i. mindestens eine Silikonverbindung mit der allgemeinen Formel HO-(SiR^{l}R^{m}O)ₒ-H, wobei o und die Reste R^{l} und R^{m} gemäß Anspruch 1 definiert sind,
ii. einen Katalysator, wobei der Katalysator mindestens eine Metall-Siloxan-Silanol(-at)-Verbindung enthält
iii. mindestens einen Vernetzer mit der allgemeinen Formel Si(R)ₘ(R^{a})₄₋ₘ, wobei m und die Reste R und R^{a} gemäß Anspruch 1 definiert sind,
b. Vermischen der in a. bereitgestellten Zusammensetzung unter Einsatz von mechanischer und/oder thermischer Energie.

17. Ferner betrifft die Erfindung Dichtstoffe erhältlich durch Aushärten einer Zusammensetzung enthaltend,
i. mindestens eine Silikonverbindung mit der allgemeinen Formel HO-(SiR^{l}R^{m}O)ₒ-H, wobei o und die Reste R^{l} und R^{m} gemäß Anspruch 1 definiert sind,
ii. einen Katalysator, wobei der Katalysator mindestens eine M3S-Verbindung enthält, und
iii. mindestens einen Vernetzer mit der allgemeinen Formel Si(R)ₘ(R^{a})₄₋ₘ, wobei m und die Reste R und R^{a} gemäß Anspruch 1 definiert sind.

18. Zusammensetzung erhältlich nach einem Verfahren gemäß Anspruch 16.

19. Verwendung einer Zusammensetzung nach einem der Ansprüche 1 bis 13, 15 und/oder 18 als Dichtungsmittel, Klebstoff, Vergussmasse oder Beschichtungsmittel.
